(19) **Europäisches Patentamt / European Patent Office / Office européen des brevets**

(11) **EP 4 625 249 A1**

(12) # EUROPEAN PATENT APPLICATION

(43) Date of publication:
01.10.2025 Bulletin 2025/40

(21) Application number: 24186894.2

(22) Date of filing: 05.07.2024

(51) International Patent Classification (IPC):
$G06N\ 3/0442^{(2023.01)}$    $G06N\ 3/0464^{(2023.01)}$
$G06N\ 3/047^{(2023.01)}$    $G06N\ 3/0475^{(2023.01)}$
$G06N\ 3/084^{(2023.01)}$    $G06N\ 5/01^{(2023.01)}$
$G06N\ 7/00^{(2023.01)}$    $G06N\ 10/60^{(2022.01)}$
$G06Q\ 40/06^{(2012.01)}$

(52) Cooperative Patent Classification (CPC):
G06N 5/01; G06N 3/0442; G06N 3/0464;
G06N 3/047; G06N 3/0475; G06N 3/084;
G06N 7/00; G06N 10/60; G06Q 40/04; G06Q 40/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 27.03.2024 US 202463570662 P

(71) Applicant: **Yiyaniq Inc.**
Toronto, ON M4V 2J5 (CA)

(72) Inventors:
- **Inack, Estelle M.**
Waterloo, Ontario, N2L 2Y6 (CA)
- **Javanparast, Behnam**
Toronto, Ontario, M4V 0A3 (CA)

(74) Representative: **Barker Brettell LLP**
**100 Hagley Road**
**Edgbaston**
**Birmingham B16 8QQ (GB)**

(54) **SYSTEM AND METHOD FOR VARIATIONAL ANNEALING TO SOLVE FINANCIAL OPTIMIZATION PROBLEMS**

(57) A system and method for variational annealing to solve financial optimization problems is provided. The financial optimization problem is encoded as objective function represented in terms of an energy function. An autoregressive neural network is trained to minimize the cost function via variational emulation of classical or quantum annealing. Optimal solutions to the financial optimization problem are obtained after a stopping criterion is set. An optimal solution may be selected according to user defined metrics, and optionally applied to a real-world system associated with the financial optimization problem.

**FIG. 1**

EP 4 625 249 A1

**Description**

<u>RELATED APPLICATION DATA</u>

The present application claims priority to, and the benefit of, provisional U.S. patent application no. 63/570,662, filed March 27, 2024, the content of which is incorporated herein by reference.

<u>TECHNICAL FIELD</u>

The present application relates generally to systems and methods for quantum intelligence, and in particular to a system and method for variational annealing to solve optimization problems such as financial portfolio optimization problems, and more particularly financial portfolio optimization problems.

<u>BACKGROUND</u>

Optimization problems in finance such as portfolio optimization are essential business activities for financial institutions. Subject to some constraints, the computational complexity of financial optimization problems, such as financial portfolio optimization problems, quickly grows and require the use of approximations and/or the imposition of otherwise undesired assumptions and/or limitations to solve such problems with classical computing solutions using classical operating devices. Heuristic methods leveraging classical and quantum phenomena have been used to explore the optimization problem landscape defined by their objective functions in the search for global or near-optimal solutions. However, existing heuristic methods are unable to solve some financial optimization problems or generate suboptimal results. Accordingly, there remains a need for improved computing solutions for solving financial optimization problems.

<u>SUMMARY</u>

The present application relates generally to system and method for quantum intelligence, and in particular to a system and method for variational annealing to solve optimization problems such as financial portfolio optimization problems. A system and method for variational annealing to solve financial and other optimization problems is provided. This may comprise modelling a portfolio optimization objective function with real-world financial data and user-defined constraints. The financial or other optimization problem is encoded as objective function represented in terms of an energy function. An autoregressive neural network is trained to minimize a cost function via variational emulation of classical or quantum annealing. Optimal solutions to the financial optimization problem are obtained after a stopping criterion is set. An optimal solution may be selected according to user defined metrics, and optionally applied to a real-world system associated with the financial optimization problem.

In accordance with one embodiment of a first aspect of the present application, there is provided a method of solving an optimization task, which may be a portfolio optimization task using variational annealing, the solution comprising a plurality of values for a respective plurality of parameters. The method comprises several steps. The objective function is constructed based on financial data, user defined metrics and constraints. A variational ansatz is set, comprising a plurality of initial values for the plurality of parameters. The following two steps are repeated one or more times: performing an annealing step while maintaining the values of the plurality of parameters and performing a training step to modulate the values of the plurality of parameters according to the asset allocation cost function, thereby generating a plurality of trained values of the respective plurality of parameters. The plurality of trained values has a lower cost, according to the cost function than the cost of the values of the plurality of parameters prior to the modulation. The combination of annealing and training steps is stopped according to user defined stopping criteria, and the optimal portfolio is obtained based on user defined criteria.

In at least some examples, the portfolio objective function maximizes excess return while minimizing the risk of the current selection of assets. The risk is measured based on the volatility of the current portfolios. In another embodiment, the risk is estimated using the kurtosis and/or skewness of the distribution of the current portfolios.

In at least some examples, calculating the objective function includes using the objective function and a transaction cost for the current selection of assets.

In at least some examples, the objective function includes tracking the error of the portfolio compared to a user defined benchmark, such as an asset, a bundle of assets or an index.

In at least some examples, the objective function includes nonlinear, nonconvex constraints such as a volatility target or a leverage constraint.

In at least some examples, the portfolio optimization task consists of finding a subset of financial assets in a large basket of financial assets. In another embodiment, the portfolio optimization task consists of finding the optimal allocation strategy for the current selection of assets. The financial assets can be made up of one or more of the following: stocks, bonds, commodities, currencies, etc., or they can be a constructed portfolio based on the asset's fundamentals.

In at least some examples, the annealing step comprises changing a temperature parameter of the cost function.

In at least some examples, the quantum intelligent algorithm used is variational annealing implemented with the variational emulation of classical annealing, and the cost function comprises a variational free energy function.

In at least some examples, the portfolio optimization objective function is represented as a classical $Z_N$ spin model where each spin orientation represents an allowed asset value having $N$ possible values.

In at least some examples, the annealing step comprises changing a driving field of the cost function.

In at least some examples, the quantum intelligent algorithm used is variational annealing implemented with the variational emulation of quantum annealing, and the cost function comprises a variational energy function.

In at least some examples, the portfolio optimization task is represented as a quantum $Z_N$ spin model or a qudit Hamiltonian, where each qudit state represents an allowed asset value having $N$ possible values.

In at least some examples, the variational ansatz comprises an autoregressive recurrent neural network. The autoregressive neural network is a simple recurrent neural network (RNN) or one of its variants (for example, gated recurrent unit or GRU, Long-short-term memory or LSTM).

In at least some examples, the autoregressive neural network is a deep RNN or In at least some examples, the autoregressive neural network is a Transformer or one of its variants (e.g. Linformer).

In at least some examples, the autoregressive neural network encodes cardinality constraints of the portfolio optimization task.

In at least some examples, the autoregressive neural network encodes the incremental number of basis points tailored for each individual asset.

In at least some examples, the autoregressive neural network includes inequality constraints on the budget allocated to each individual asset. In another embodiment, the autoregressive neural network comprises inequality constraints on the budget to assign to sectors representative of asset classes.

In at least some examples, the autoregressive neural network encodes the symmetry of the portfolio optimization problem.

In at least some examples, the training step comprises performing gradient descent on the plurality of parameters based on the cost function. Gradient descent can be conducted via batch-gradient descent, stochastic gradient descent or one of its variants, such as the Adam method.

In at least some examples, the method further comprises storing the variational ansatz for future sampling after repeating the annealing step and training step one or more times.

In at least some examples, the variational ansatz comprises an autoregressive recurrent neural network, and the future sampling comprises using the variational ansatz as an on-demand sampler for generating near-optimal portfolios of the portfolio optimization task.

In at least some examples, the method further comprises, after repeating the annealing step and training step one or more times, using the values of the plurality of parameters as an input to train a neural network to perform a portfolio optimization task that the neural network was not previously trained to perform.

In at least some examples, the annealing step comprises setting a temperature parameter of the cost function to zero and setting a transverse field parameter of the cost function to zero.

In at least some examples, variational annealing is terminated using the early stopping criteria or when a metric (such as cost function variance) reaches a certain tolerance level.

In accordance with another embodiment of the first aspect of the present application, there is provided a computer-implemented method for solving an optimization problem, which may be a financial optimization problem, using variational annealing, wherein the computer-implemented method is performed using a classical computing device, wherein the financial or other optimization problem is defined by an objective function, the objective function defined in terms of a Hamiltonian system that represents an energy function, the method comprising: (a) receiving the objective function representing the financial or other optimization problem, a plurality of application-specific parameters of the objective function with application-specific constraints, and a plurality of initial input states of the objective function within the application-specific constraints; (b) performing variational annealing by: (i) initializing a variational ansatz with a plurality of parameters defined with a plurality of initial input states; (ii) initializing simulations of the Hamiltonian system with the variational ansatz, wherein a cost function for the Hamiltonian system is defined as a variational free energy for variational classical annealing simulations or as a variational energy for variational quantum annealing simulations; (iii) equilibrating the Hamiltonian system at an initial value of the cost function by modulating the values of the plurality of parameters of the variational ansatz with new states generated by the variational ansatz; (iv) performing an annealing step on the cost function while maintaining the initial values of the plurality of parameters of the variational ansatz; (v) performing training to modulate the values of the plurality of parameters of the variational ansatz using the cost function to generate a plurality of trained states of the respective plurality of parameters, the plurality of trained states having a lower cost according to the cost function than a cost of the trained states prior to modulation of the values of the plurality of parameters; (vi) iteratively repeating steps (iv) and (v) until a predetermined stopping condition is met; and (vii) outputting a plurality of output states responsive to the predetermined condition being met, each output state representing a solution to the financial or other optimization problem.

In at least some examples, the method further comprises the step of: (c)selecting an output state from the plurality of output states according to one or more determining factors, wherein the one or more determining factors are based on the one or more application-specific constraints of one or more of the plurality of parameters of the objective function.

In at least some examples, the method further comprises the step of: (d) applying the selected output state to an external computing system associated with the financial or other optimization problem and in communication with the classical computing device.

In at least some examples, the cost function is a variational free energy comprising the Hamiltonian system representing the financial optimization problem, an entropy term defined in terms of the variational ansatz, and a temperature of the Hamiltonian system; wherein step (iii) comprises equilibrating the Hamiltonian system at the plurality of initial values of the temperature of the Hamiltonian system; and wherein step (iv) comprises performing the annealing step by updating the temperature of the Hamiltonian system.

In at least some examples, the cost function is a variational energy comprising the quantum optimization Hamiltonian defined in terms of a quantum driving field of the Hamiltonian system and the variational ansatz; wherein step (iii) comprises equilibrating the Hamiltonian system at the plurality of initial values of the quantum driving field of the Hamiltonian system; and wherein step (iv) comprises performing the annealing step by updating the quantum driving field of the Hamiltonian system.

In at least some examples, the financial optimization problem is a portfolio optimization problem, the plurality of states define a plurality of asset allocations of the financial portfolio, the application-specific parameters are financial data used to generate the objective function, and the application-specific constraints are one or more constraints defined on the objective function.

In at least some examples, the objective function defines a maximum of expected returns with a minimum amount of risk for a selection of assets; or the objective function defines a maximum of expected returns with a minimum amount of risk for a selection of assets according to a benchmark.

In at least some examples, the application-specific constraints comprise any one or more of the following: a volatility constraint for a selection of assets; a risk constraint for a selection of assets; a returns constraint for a selection of assets; a cardinality constraint on a number of allowable assets; a leverage constraint on a selection of assets; a transaction cost on a selection of assets; a turnover constraint on a selection of assets; a tax constraint on a selection of assets; or investment bands for a selection of assets.

In at least some examples, the objective function is based on any one or more of the following: a single factor model such as the Capital Asset Pricing Model; multiple factor models; a kurtosis of a distribution of assets; or a skewness of a distribution of assets.

In at least some examples, the benchmark is based on a single asset, a bundle of assets or an index.

In at least some examples, the financial optimization problem is based on one or more of fraud detection, risk and cashflow.

In at least some examples, the variational ansatz is an autoregressive neural network.

In at least some examples, the autoregressive neural network is one of the following: a single recurrent neural network architecture or a variant thereof; a deep recurrent neural network architecture or a variant thereof; or a Transformer neural network or a variants thereof.

In at least some examples, the variational ansatz defines any one or more of the following: an inequality constraint on the investment of the assets; a granularity of the investment of asset in the plurality of assets; a cardinality constraint on a number of allowable assets; or a symmetrization of the variational ansatz based on an underlying symmetry of the objective function.

In at least some examples, the annealing step is performed using any one or more of: a variational emulation of classical annealing; a variational ansatz model of a probability distribution of the Hamiltonian system; or a variational free energy function of the cost function.

In at least some examples, the annealing step is performed using any one or more of: a variational emulation of quantum annealing; a variational ansatz model of a wavefunction of the Hamiltonian system; or a variational energy function of the cost function.

In at least some examples, performing the training comprises: sampling the variational ansatz to obtain sampled states of an asset distribution; implementing a relevant symmetry of the objective function to the sampled states; computing a cost based on the cost function value using the sampled states; and minimizing the cost based on the plurality of parameters.

In at least some examples, the annealing step comprises a temperature parameter of the cost function or reducing a quantum driving field of the of the cost function; and increasing the objective function.

In at least some examples, the predetermined stopping condition is any one or more of the following: a temperature parameter of the cost function reaches zero or a threshold value; a driving parameter of the cost function reaches zero or a threshold value; or a variance of the cost function reaches a threshold value.

In at least some examples, step (c) comprises: generating a plurality of sample financial portfolios using autoregressive sampling; selecting a subset of the financial portfolios that obey all application-specific constraints; and selecting a financial portfolio from the subset of the financial portfolios based on one of the following a return, a volatility, a Sharpe ratio, and/or a tracking error.

In accordance with a further aspect of the present application, there is provided a computing device comprising one or more processors coupled to one or more memories. The one or more memories have tangibly stored thereon executable instructions for execution by the one or more processors. The executable instructions, in response to execution by the one or more processors, cause the computing device to perform the methods described above and herein.

In accordance with yet a further aspect of the present application, there is provided one or more non-transitory machine-readable media having tangibly stored thereon executable instructions for execution by one or more processors of a computing device. The executable instructions, in response to execution by the one or more processors, cause the computing device to perform the methods described above and herein.

Other aspects and features of the present application will become apparent to those of ordinary skill in the art upon review of the following description of specific implementations of the application in conjunction with the accompanying figures.

## BRIEF DESCRIPTION OF THE DRAWINGS

FIG. 1 shows a schematic illustration of the space of probability distributions visited during simulated annealing in accordance with embodiments of the present application.

FIG. 2A shows pictorial graphs of the variational free energy F across parameters M for four steps of an example variational classical annealing (VCA) algorithm in accordance with embodiments of the present application.

FIG. 2B shows pictorial graphs of the variational free energy F over time t for four steps of an example variational quantum annealing (VQA) algorithm in accordance with embodiments of the present application.

FIG. 3A shows a flowchart of the steps of the example variational annealing algorithm of FIGs. 2A and 2B.

FIG. 3B shows a block diagram of an example 1D recurrent neural network (RNN) ansatz used for both VCA and VQA in accordance with embodiments of the present application.

FIG. 3C shows a graph of the residual energy per site $\varepsilon_{res}/N$ vs. the number of annealing steps $N_{annealing}$ for both VQA and VCA implemented as variational neural annealing on random continuous coupling Ising chains in accordance with embodiments of the present application.

FIG. 4A shows a block diagram of an example RNN encoding the structure of the 2D geometry of the Edward-Anderson (EA) model in accordance with embodiments of the present application.

FIG. 4B shows a graph of the residual energy per site $\varepsilon_{res}/N$ vs. the number of annealing steps $N_{annealing}$ of the annealing results obtained for VCA and VQA using the RNN of FIG. 4A with $N = 10 \times 10$, and results of the residual energy per site vs. the number of gradient descent steps $N_{steps}$ of the classical-quantum optimization (CQO) using the RNN of FIG. 4A.

FIG. 4C shows a graph of the residual energy per site $\varepsilon_{res}/N$ vs. the number of annealing steps $N_{annealing}$ of the annealing results obtained for simulated annealing (SA), simulated quantum annealing (SQA), and VCA using the RNN of FIG. 4A.

FIG. 5 shows a block diagram of a dilated RNN ansatz structured so that spins are connected to each other in accordance with embodiments of the present application.

FIG. 6A shows a graph of the residual energy per site $\varepsilon_{res}/N$ vs. the number of annealing steps $N_{annealing}$ of the annealing results obtained for SA, SQA, and VCA using a Sherrington-Kirkpatrick (SK) model with $N = 100$ spins for fully-connected spin glasses in accordance with embodiments of the present application.

FIG. 6B shows a graph of the residual energy per site $\varepsilon_{res}/N$ vs. the number of annealing steps $N_{annealing}$ of the annealing results obtained for SA, SQA, and VCA using a Wishart planted ensemble (WPE) model with $N = 32$ spins and $\alpha = 0.5$ for fully-connected spin glasses in accordance with embodiments of the present application.

FIG. 6C shows a graph of the residual energy per site $\varepsilon_{res}/N$ vs. the number of annealing steps $N_{annealing}$ of the annealing results obtained for SA, SQA, and VCA using a WPE model with $N = 32$ spins and $\alpha = 0.25$ for fully-connected spin glasses in accordance with embodiments of the present application.

FIG. 6D shows a residual energy histogram for the model of FIG. 6A.

FIG. 6E shows a residual energy histogram for the model of FIG. 6B.

FIG. 6F shows a residual energy histogram for the model of FIG. 6C.

FIG. 7A shows a graph of the variational energy of RNN wave function against the transverse magnetic field $\Gamma$ with plurality of parameters $\lambda$ initialized using the parameters optimized in the previous annealing step, with random parameter reinitialization, and as the exact energy obtained from exact diagonalization in accordance with embodiments of the present application.

FIG. 7B shows a graph of the residual energy of the RNN wave function vs. the transverse field $\Gamma$, showing the residual energy and the gap within error bars in accordance with embodiments of the present application.

FIG. 7C shows the variational free energy vs. temperature $T$ for a VCA run, with $\lambda$ initialized using the parameters optimized in the previous annealing step, and with random reinitialization and the exact free energy in accordance with embodiments of the present application.

FIG. 8 shows a graph of residual energy per site $\varepsilon_{res}/N$ vs. $N_{annealing}$ for both VQA and VCA on random discrete coupling Ising chains in accordance with embodiments of the present application.

FIG. 9A shows a graph of residual energy $\varepsilon_{res}/N$ vs. $N_{annealing}$ for SA, SQA and VCA on a single instance of the EA model with system size ($60 \times 60$) in accordance with embodiments of the present application.

FIG. 9B shows a graph of residual energy $\varepsilon_{res}/N$ vs. $N_{annealing}$ for SA, SQA and VCA on a single instance of the EA model with system size ($60 \times 60$) in accordance with embodiments of the present application.

FIG. 9C shows a plot of the two principal components $X_1$ and $X_2$ after performing principal component analysis (PCA) on 50000 configurations obtained from a RNN, at the end of a VCA protocol when applied to the SK model with $N = 100$ spins as in FIG. 9B for $N_{annealing} = 10^5$ in accordance with embodiments of the present application.

FIG. 9D shows a histogram of the probability of success on the 25 instances of the SK model used in FIG. 6A.

FIG. 9E shows a histogram of the probability of success on the 25 instances of the WPE model used in FIG. 6B.

FIG. 9F shows a histogram of the probability of success on the 25 instances of the WPE model used in FIG. 6C.

FIG. 10A shows a graph of the energy variance per site $\sigma^2$ against the number of gradient descent steps for a vanilla RNN and a tensorized RNN in a task of finding the ground state of the uniform ferromagnetic Ising chain (i.e., $J_{i,i+1} = 1$) with $N = 100$ spins at the critical point in accordance with embodiments of the present application.

FIG. 10B shows a graph of the energy variance per site $\sigma^2$ against the number of gradient descent steps for models using site-dependent parameters vs. site-independent parameters in the task of FIG. 10A.

FIG. 10C shows a graph of the free energy variance per site $\sigma^2$ against the number of gradient descent steps for a dilated RNN vs. a tensorized RNN in the task of finding the minimum of the free energy of the Sherrington-Kirkpatrick model with N = 20 sites and at temperature T = 1 in accordance with embodiments of the present application.

FIG. 11 is a flowchart showing steps of an example method for performing variational annealing for optimization in accordance with embodiments of the present application.

FIG. 12 is a flowchart showing steps of an example method for performing in detail variational annealing in a classical or quantum fashion in accordance with embodiments of the present application.

FIG. 13 is a flowchart showing steps of an example method for performing a training/optimization step in a variational annealing process in accordance with embodiments of the present application.

FIG. 14 is a block diagram of an example of a simplified computing device suitable for use in accordance with example embodiments of the present application.

FIG. 15 is a schematic block diagram of a communication system suitable for use in accordance with example embodiments of the present application.

FIG. 16 is a schematic block of an example of a training system architecture suitable for use in accordance with embodiments of the present application.

FIG. 17 is a schematic block diagram of an example of a deep recurrent neural network suitable for use in accordance with example embodiments of the present application.

FIG. 18 is a flowchart of an example method for performing variational annealing to solve portfolio optimization problems in accordance with embodiments of the present application.

FIG. 19 shows a graph of the Sharpe ratio versus the volatility of a long-short portfolio of stocks subject to a leverage constraint at the end of annealing with respect to some open-source software and exact results from the literature in accordance with embodiments of the present application.

FIG. 20 shows a graph of the return distributions of solutions obtained in FIG. 19 with respect to financial metric constraints in accordance with embodiments of the present application.

## DETAILED DESCRIPTION OF EXAMPLE EMBODIMENTS

The present application is made with reference to the accompanying drawings, in which embodiments are shown. However, many different embodiments may be used, and thus the description should not be construed as limited to the embodiments set forth herein. Rather, these embodiments are provided so that this application will be thorough and complete. Wherever possible, the same reference numbers are used in the drawings and the following description to refer to the same elements, and prime notation is used to indicate similar elements, operations or steps in alternative embodiments. Separate boxes or illustrated separation of functional elements of illustrated systems and devices does not necessarily require physical separation of such functions, as communication between such elements may occur by way of messaging, function calls, shared memory space, and so on, without any such physical separation. As such, functions need not be implemented in physically or logically separated platforms, although they are illustrated separately for ease of explanation herein. Different devices may have different designs, such that although some devices implement some functions in fixed function hardware, other devices may implement such functions in a programmable processor with code obtained from a machine-readable medium. Individual functions described below may be split or subdivided into multiple functions, or multiple functions may be combined. Lastly, elements referred to in the singular may be plural and vice versa, except where indicated otherwise either explicitly or inherently by context.

For the purpose of the present application, the term "real-time" means that a computing operation or process is completed within a relatively short maximum duration, typically milliseconds or microseconds, fast enough to affect the environment in which the computing operation or process occurs, such as the inputs to a computing system. The term "dynamic" refers to a result dependent on the value of a set of one or more variables, wherein the result is or may be determined in real-time in response to detection of a trigger.

Within the present application, the terms "memory", "computer-readable medium" and "machine-readable medium" may be used interchangeably and have the same or similar meanings, depending on the context. In addition, the terms "value" and "state" may be used interchangeably and have the same or similar meanings, depending on the context.

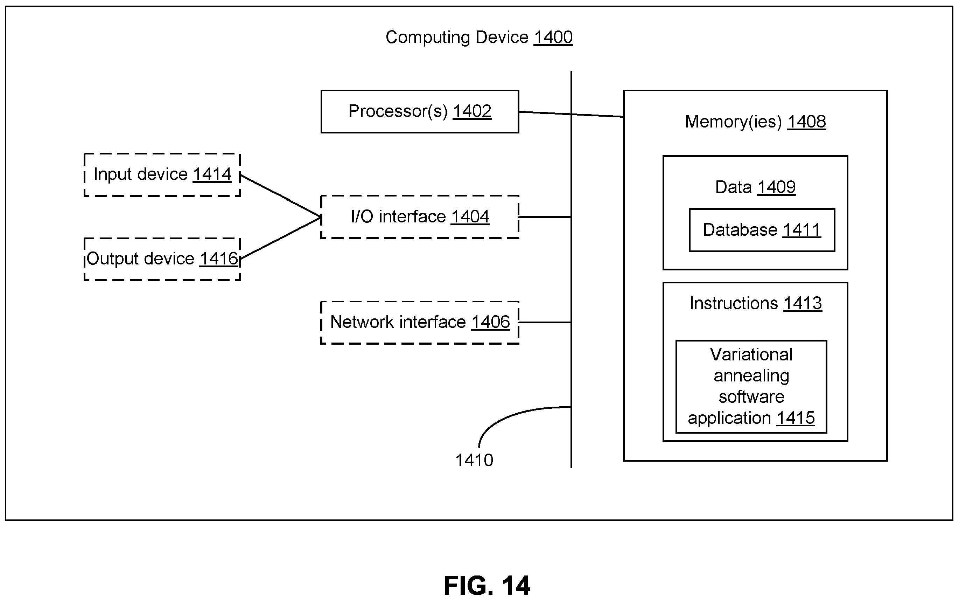

FIG. 14 illustrates a block diagram of an example simplified classical computing device 1400 suitable for use in accordance with example embodiments of the present application. Examples of the computing device 1400 include, but are not limited to, a personal computer such as a desktop or laptop computer, a smartphone, a tablet, a smart TV, head worn computer (such as a virtual or mixed-reality headset, smart glasses or other head device mounted smart display), a smart speaker, a smart appliance (such as a smart thermostat, a smart fridge, or a smart oven), smart car, or other smart or IoT (Internet of Things) device, among other possibilities. Other computing systems suitable for implementing embodiments described in the present application may be used, which may include components different from those discussed below. In some examples, the computing device 1400 may be implemented across more than one physical hardware unit, such as in a parallel computing, distributed computing, virtual server, or cloud computing configuration. Although FIG. 14 shows a single instance of each component, there may be multiple instances of each component in the computing device 1400.

The computing device 1400 may include one or more processor(s) 1402, such as a central processing unit (CPU) with a hardware accelerator, a graphics processing unit (GPU), a tensor processing unit (TPU), a neural processing unit (NPU), a microprocessor, an application-specific integrated circuit (ASIC), a field-programmable gate array (FPGA), a dedicated logic circuitry, a dedicated artificial intelligence processor unit, or combinations thereof.

The computing device 1400 may also include one or more optional input/output (I/O) interfaces 1404, which may enable interfacing with one or more optional input devices 1414 and/or optional output devices 1416. In the example shown, the input device(s) 1414 (e.g., a keyboard, a mouse, a microphone, a touchscreen, and/or a keypad) and output device(s) 1416 (e.g., a display, a speaker and/or a printer) are shown as optional and external to the computing device 1400. In other examples, one or more of the input device(s) 1414 and/or the output device(s) 1416 may be included as a component of the computing device 1400. In other examples, there may not be any input device(s) 1414 and output device(s) 1416, in which case the I/O interface(s) 1404 may not be needed.

The computing device 1400 may include one or more optional network interfaces 1406 for wired or wireless communication with a communication network (e.g., an intranet, the Internet, a P2P network, a WAN and/or a LAN) or other node. The network interfaces 1406 may include wired links (e.g., Ethernet cable) and/or wireless links (e.g., one or more antennas) for intra-network and/or inter-network communications.

The computing device 1400 includes one or more memory(ies) 1408 which may comprise volatile (transitory) and/or non-volatile (non-transitory) memory. The memory(ies) 1408 may include a mass storage unit such as a solid-state drive, a hard disk drive, a magnetic disk drive and/or an optical disk drive, flash memory, random access memory (RAM), and/or a read-only memory (ROM). The memory(ies) 1408 store data 1409 and software instructions 1413 for execution by the processor(s) 1402, such as to carry out examples described in the present application. to train a neural network and/or to implement a trained neural network, as disclosed herein.

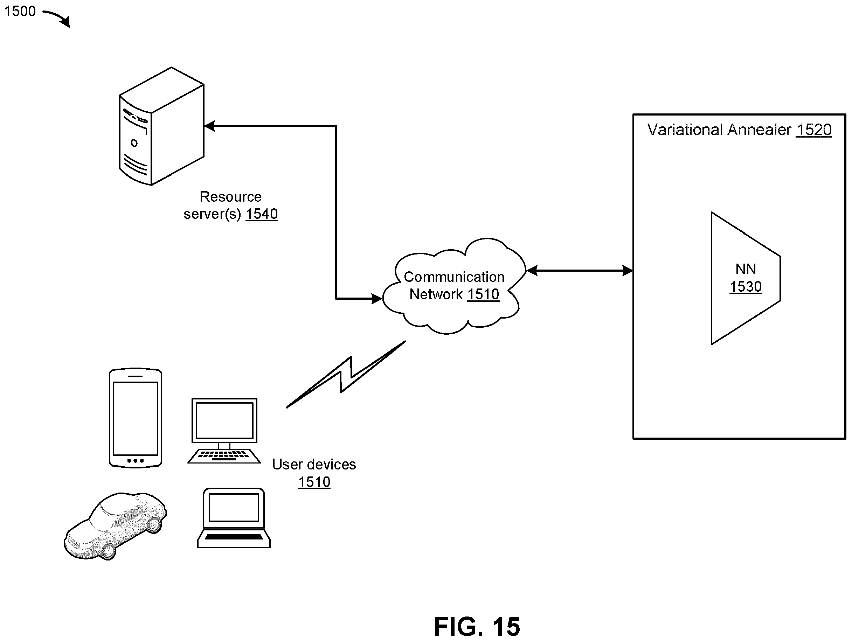

The computing device 1400 may be used to implement methods for variational classical or quantum annealing software to solve optimization problems in accordance with the present application. For example, the computing device 1400 may be used to provide a variational annealer 1520 (FIG. 15). The memory(ies) 1408 store a variational annealing software application 1415 for performing one of the quantum intelligent methods described herein, such as variational classical or quantum annealing, to solve an optimization problem. As noted elsewhere herein, the computing device 1400 can be implemented as a distributed system on one or more classical computing devices in one or more locations, in which the methods described herein can be implemented.

The memory(ies) 1408 also store a database 1411 which may include different instances of the specific optimization problems to be solved. The memory(ies) 1408 in turn interact with the I/O interface 1404, which is connected to input device(s) 1414 and output device(s) 1416. The computing device 1400 mediates classical information processing amongst the processor(s) 1402, the memory(ies) 1408, the I/O interface 1404, and a network interface 1406, with communication therebetween enabled by the data bus 1410.

In various example embodiments, the variational annealing software application 1415 (for variational classical or quantum annealing) may include various functional software modules, such as a training module for performing the training steps, an annealing module for performing the annealing steps, and a machine learning (ML) model used as the variational ansatz. In some embodiments, the ML model may be a recurrent neural network cell such as a gated recurrent unit (GRU) cell, a long short-term memory (LSTM) cell, or a vanilla (i.e., conventional) RNN cell, a Transformer neural network that is unrolled on the computational basis of the portfolio optimization problem. Several RNN cells can be stacked at for the same site (or financial asset) to increase the representational capacity of the neural network. The autoregressive step can include nearest neighbouring sites or sites far away using, for example, skipped connection. This can help to increase the representational capacity of the network if, for example, the optimization problem includes long-range connections. Weight sharing or non-weight sharing across the cells at different sites can be also implemented depending on the structure of the optimization. The variational annealing software application 1418 may also define the cost function as described herein.

The database 1411 can include additional data, such as a training dataset. In some embodiments, the training dataset includes strings of real numbers represents the coordinate system of a continuous real-world optimization problem, for example, the fraction of investments of assets belonging to a basket of a portfolio in the context of a portfolio optimization problem. In some embodiments, the training dataset consists of a string of bits that encodes the coordinate system of the optimization problem, for example, a set of asset allocations for the portfolio optimization problem. In some embodiments, the training dataset includes a string of bits that encodes the coordinate system of the optimization problem, for example, a lattice site for a spin glass, a conformation coordinates for a protein, or a historical path for a portfolio optimization problem.

In some other example embodiments, data and/or instructions may be provided by an external memory (also known as an external data storage system). The external memory may be an external drive in wired or wireless communication with the computing device 1400 or may be provided by a transitory or non-transitory computer-readable medium. Examples of non-transitory computer readable media include RAM, ROM, an erasable programmable ROM (EPROM), an electrically erasable programmable ROM (EEPROM), an optical disc drive, a flash memory or other portable memory storage. The computing device 1400 may invoke data and/or instructions from the external memory to perform processing and may store data and/or instructions obtained through corresponding processing in the memory 1408 or the external memory.

The computing device 1400 comprises a data bus 1410 providing communication among components of the computing device 1400, including the processor(s) 1402, I/O interface(s) 1404, network interface(s) 1406, and/or memory(ies) 1408. The communication bus 1410 may be any suitable bus architecture including, for example, a memory bus, a peripheral bus or a video bus.

Reference is next made to FIG. 15 which shows in schematic block diagram form a communication system 1500 suitable for practicing example embodiments of the present application. The system 1500 includes a plurality of computing devices 1400, a variational annealer 1520 for solving optimization problems, which may comprise a deep neural network 1530, and optionally a resource server 1540.

The computing devices 1400 communicate with the variational annealer 1520, its optional deep neural network 1530 and optionally the resource server 1540 via a communication network 1510 which comprises, or is connected to, the Internet. The variational annealer 1520 provides a cloud-based back-end analytical services for users in which some or all of the computational functions of solving optimization problems using simulated quantum annealing are performed by the variational annealer 1520 with the computing devices 1400 acting as a thin client that performs primarily data input and output functions. The computing devices 1400 run a user front end application for which communicates and interacts with the variational annealer 1520.

The communication network 1510 enables exchange of data between the computing devices 1400, the variational annealer 1520 and the resource server 1540. The communication network 1510 may comprise one or a plurality of networks of one or more network types coupled via appropriate methods known in the art such as a local area network (LAN), a wireless local area network (WLAN) such as Wi-Fi™, a wireless personal area network (WPAN) such as Bluetooth™ based WPAN, a wide area network (WAN), a public-switched telephone network (PSTN), or a public-land mobile network (PLMN), also referred to as a wireless wide area network (WWAN) or a cellular network. The WLAN may include a wireless network which conforms to IEEE 802.11x standards or other communication protocol.

The computing devices 1400 and variational annealer 1520 may each comprise multiple functional components distributed among a plurality of computing devices (or systems), which may be collocated or geographical distributed/remote from each other. The functional components may be in the form of machine executable instructions embodied in a machine-readable medium. The teachings of the present application are flexible and capable of being operated in various different environments without compromising any major functionality.

It should be noted the computing device 1400 may be a user device or the variational annealer 1520 for performing simulated quantum annealing to solve optimization problems in accordance with examples disclosed herein. Moreover, FIG. 14 is merely a schematic diagram of an example computing device 1400 according to an example embodiment of the present application. Relationships and interactions between the computing device 1400 and other network components shown or described herein are not intended to be limiting to the present application.

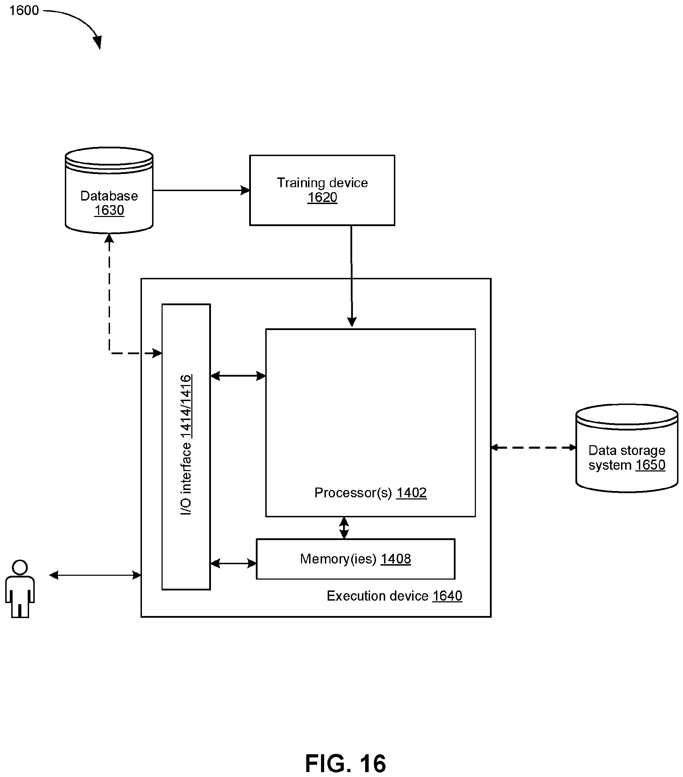

Reference is now made to FIG. 16, which shows an example of a training system architecture 1600 in accordance with embodiments of the present application. The following description shall not be construed as a limitation to any examples of the present application. As shown in training the system architecture 1600, training data may be stored in a database 1630. The database 1630 may contain, for example, training datasets that have been previously collected and commonly used for training models related to the application task. The database 1630 may alternatively or additionally contain data and/or datasets collected (e.g., with user consent) from an execution device 1640, such as the computing device 1400.

As will be discussed further below, training of a computing device 1400 may be performed using a training device 1620, using the training data maintained in the database 1630. The training device 1620 may use samples of the training data stored in the database 1630 to train the computing device 1400. Additionally or alternatively, the training device 1620 perform the training using training data obtained from other sources, such as a distributed storage (or cloud storage platform).

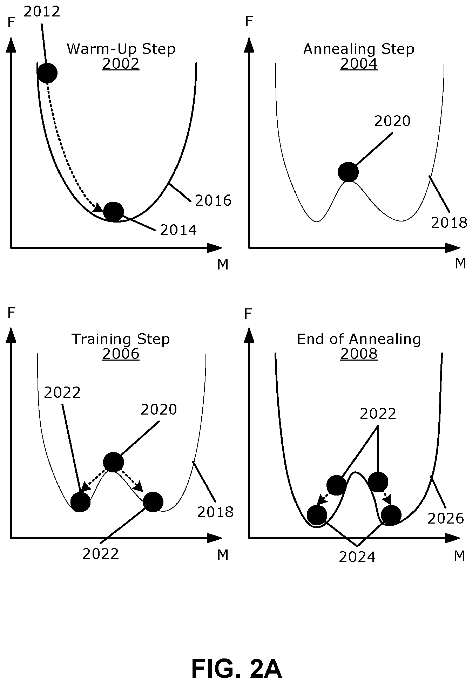

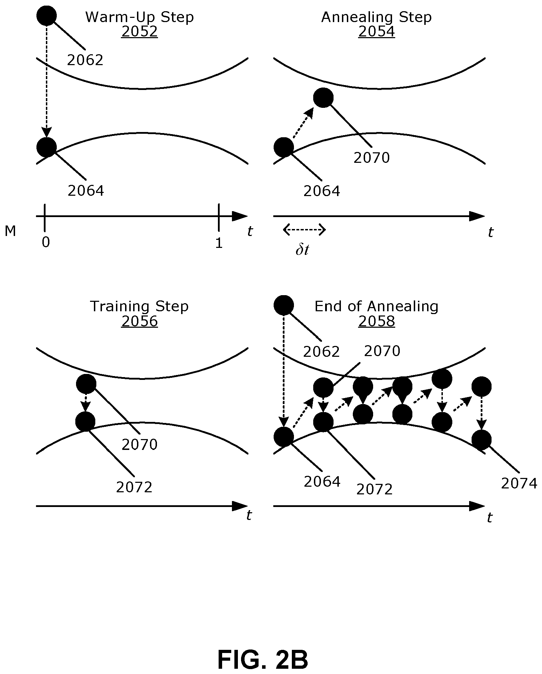

The trained computing device 1400 obtained through training by the training device 1620 may be applied to different systems or devices. For example, the trained computing device 1400 may be applied to the memory(ies) 1408 and/or processor(s) 1402 of an execution device 1640. Although FIG. 2 illustrates an example in which the training device 1620 is separate from the execution device 1640, it should be understood that the present application is not limited to this. In some examples, there may not be separate training device 1620 and execution device 1640. That is, training of the computing device 1400 and application of the trained computing device 1400 may be at the same device.

Generally, examples disclosed herein may relate to a variety of neural network applications. For ease of understanding, the following describes some concepts relevant to neural networks and some relevant terms that may be related to examples disclosed herein. A neural network consists of neurons. A neuron is a computational unit that uses $x_s$ as inputs. An output from the computational unit may be:

$$h_{W,b}(x) = f(W^T x + b) = f(\sum_{s=1}^{n} W_s x_s + b)$$

where $s$=1, 2, ... n, n is a natural number greater than 1, $W_s$ is a weight of $x_s$, b is an offset (i.e. bias) of the neuron and f is an activation function of the neuron and used to introduce a nonlinear feature to the neural network, to convert an input of the neuron to an output. The output of the activation function may be used as an input to a neuron of a following convolutional layer in the neural network. The activation function may be a sigmoid function, for example. The neural network is formed by joining a plurality of the foregoing single neurons. In other words, an output from one neuron may be an input to another neuron. An input of each neuron may be associated with a local receiving area of a previous layer, to extract a feature of the local receiving area. The local receiving area may be an area consisting of several neurons.

A deep neural network (DNN) is also referred to as a multi-layer neural network and may be understood as a neural network that includes a first layer (generally referred to as an input layer), a plurality of hidden layers, and a final layer (generally referred to as an output layer). The "plurality" herein does not have a special metric. A layer is considered to be a fully connected layer when there is a full connection between two adjacent layers of the neural network. To be specific, for two adjacent layers (e.g., the i-th layer and the (i+1)-th layer) to be fully connected, each and every neuron in the i-th layer must be connected to each and every neuron in the (i+1)-th layer.

Processing at each layer of the DNN may be relatively straightforward. Briefly, the operation at each layer is indicated by the following linear relational expression: $\vec{y} = \alpha(W\vec{x} + \vec{b})$, where $\vec{x}$ is an input vector, $\vec{y}$ is an output vector, $\vec{b}$ is an offset vector, W is a weight (also referred to as a coefficient), and $\alpha(.)$ is an activation function. At each layer, the operation is performed on an input vector $\vec{x}$, to obtain an output vector $\vec{y}$.

Because there is a large quantity of layers in the DNN, there is also a large quantity of weights W and offset vectors $\vec{b}$. Definitions of these parameters in the DNN are as follows: The weight W is used as an example. In this example, in a three-layer DNN (i.e. a DNN with three hidden layers), a linear weight from a fourth neuron at a second layer to a second neuron at a third layer is denoted as $W_{24}^3$. The superscript 3 indicates a layer (i.e., the third layer (or layer-3) in this example) of the weight W, and the subscript indicates the output is at layer-3 index 2 (i.e., the second neuron of the third layer) and the input is at layer-2 index 4 (i.e., the fourth neuron of the second layer). Generally, a weight from a k-th neuron at an (L-1)-th layer to a j-th neuron at an L-th layer may be denoted as $W_{jk}^L$. It should be noted that there is no W parameter at the input layer.

In a DNN, a greater number of hidden layers may enable the DNN to better model a complex situation (e.g., a real-world situation). In theory, a DNN with more parameters is more complex, has a larger capacity (which may refer to the ability of a learned model to fit a variety of possible scenarios), and indicates that the DNN can complete a more complex learning task. Training of the DNN is a process of learning the weight matrix and the biases which corresponds to the offset vectors. A purpose of the training is to obtain a trained weight matrix and biases vectors, which consists of the learned weights W and biases $\vec{b}$ of all layers of the DNN.

In the process of training a DNN, a predicted value outputted by the DNN may be compared to a desired target value (e.g., a ground truth value). A weight vector (which is a vector containing the weights W for a given layer) of each layer of the DNN is updated based on a difference between the predicted value and the desired target value. For example, if the predicted value outputted by the DNN is excessively high, the weight vector for each layer may be adjusted to lower the predicted value. This comparison and adjustment may be carried out iteratively until a convergence condition is met (e.g., a predefined maximum number of iterations has been performed, or the predicted value outputted by the DNN is sufficiently converged with the desired target value). A loss function or a cost function can be defined, to quantitatively represent how close the predicted value is to the target value. An objective function represents a quantity to be optimized (e.g., minimized or maximized) to bring the predicted value as close to the target value as possible. A loss function more specifically represents the difference between the predicted value and the target value, and the goal of training the DNN is to minimize the loss function. A loss function or a cost function can also be defined by a variational lower bound which is always greater or equal to a value that is desired. An example of which is the Evidence Lower Bound used in variational Bayesian methods. The goal of training the DNN is then equivalent to minimizing the variational lower bound.

Backpropagation is an algorithm for training a DNN. Backpropagation is used to adjust (also referred to as update) a value of a parameter (e.g., a weight) in the DNN, so that the error (or loss) in the output becomes smaller. For example, a defined loss function is calculated, from forward propagation of an input to an output of the DNN. Backpropagation calculates a gradient of the loss function with respect to the parameters of the DNN, and a gradient algorithm (e.g., gradient descent) is used to update the parameters to reduce the loss function. Backpropagation is performed iteratively, so that the loss function is converged or minimized.

A convolutional neural network (CNN) is a DNN with a convolutional structure. The CNN includes a feature extractor consisting of a convolutional layer and a sub-sampling layer. The feature extractor may be considered as a filter. A convolution process may be considered as performing convolution on a two-dimensional (2D) input image or a convolutional feature map using a trainable filter.

The convolutional layer is a layer of neurons at which convolution processing is performed on an input in the CNN. In a convolutional layer, one neuron may be connected only to a subset of neurons (i.e., not all neurons) in neighboring layers. That is, a convolutional layer generally is not a fully connected layer. One convolutional layer usually includes several feature maps, and each feature map may be formed by some neurons arranged in a rectangle. Neurons at a same feature map share weights. The shared weights may be collectively referred to as a convolutional kernel. Typically, a convolutional kernel is a 2D matrix of weights. It should be understood that the convolutional kernel may be unrelated to a manner and position of image information extraction. A hidden principle behind convolutional layers is that statistical information of a part of an image is the same as that of another part of the image. This means that image information learned from one part of the image may also be applicable for another part of the image. A plurality of convolutional kernels may be used at the same convolutional layer to extract different image information. Generally, a larger quantity of convolutional kernels indicates that richer image information is reflected by a convolution operation.

A convolutional kernel may be initialized as a 2D matrix of random values. In a training process of the CNN, the weights of the convolutional kernel are learned. An advantage of using the convolutional kernel to share weights among neurons in the same feature map is that the connections between convolutional layers of the CNN is reduced (compared to the fully connected layer) and the risk of overfitting is lowered.

A recurrent neural network (RNN) is a type of neural network (usually a DNN) that is often used to process sequence data, where there is expected to be some relationship in the sequential order of the data (e.g., in a set of temporal data containing data over a sequence of time steps, or in set of text data where information is encoded in the order of the words in the text). For example, to predict a word in a sentence, a previous word is usually needed, because the likelihood of a predicted word is dependent on the previous word(s) in a sentence. In RNNs, computation of a current predicted output of a sequence is also related to a previous output. Conceptually, a RNN may be understood as "memorizing" previous information and applying the previous information to computation of the current predicted output. In terms of the neural network layers, the nodes between the hidden layers are connected such that an input to a given hidden layer includes an output from a preceding layer, and additionally includes an output generated by the hidden layer from a previous input. This may be referred to as parameter sharing, because parameters (e.g., layer weights) are shared across multiple inputs to the layer. Thus, the same input to the hidden layer, provided at different sequential position in the sequence data, can result in different output being generated by the hidden layer depending on previous inputs in the sequence. A RNN may be designed to process sequence data of any desired length. A RNN can be used also without parameter sharing.

Training of the RNN may be similar to the training of a conventional CNN or DNN. The backpropagation algorithm may also be used in the RNN, in a gradient descent algorithm. The output of each gradient step is calculated from the weights of a current step, and additionally from the weights of several previous steps. The learning algorithm for training the RNN may be referred to as back propagation through time (BPTT).

Gated convolution is a technique in which two different sets of convolution weights are applied to a single gated convolutional layer to generate two separate convolutional outputs. A set of gate weights, denoted as $W_g$, is used to compute a set of gate values; and a set of feature weights, denoted as $W_f$, is used to compute a set of features for the layer. The gate values are used as input to a gating function, to enable dynamic control of what information from the computed set of features is passed to the next layer.

A gated convolutional layer may be described using the following:

$$G = \mathrm{conv}(W_g, I)$$

$$F = \mathrm{conv}(W_f, I)$$

$$O = \sigma(G) \odot \psi(F)$$

where I is the set of inputs to the gated convolutional layer, G is the set of gate values, F is the set of feature values, O is the gated output of the gated convolutional layer, $\sigma$ is the Sigmoid function (used as the gating function), and $\psi$ is the activation function. It may be noted that the output values of the Sigmoid function are within [0, 1]. Thus, gated convolution enables the neural network to learn a dynamic feature selection mechanism.

A gated recurrent unit (GRU) is a mechanism used for gating in RNNs. As previously discussed, an RNN involves connections between hidden layers of the neural network. The GRU introduces mechanisms to control updating of a hidden state should be updated and to control resetting of a hidden state. These mechanisms are referred to as the update gate and the reset gate, each of which are learned weight vectors. Generally speaking, the reset gate controls how much of a previous state contributes to a current state of a hidden layer, and the update gate controls how much of the current state is copied from the previous state. GRU is a technique that may be used to enable a RNN to continue to learn from older hidden states.

A generative adversarial network (GAN) is a deep learning model, and provides another technique for training a DNN. A GAN includes at least two modules: one module is a generative model (also referred to as a generator), and the other module is a discriminative model (also referred to as a discriminator). These two models compete with each other and learn from each other, so that a better output is generated. The generator and the discriminator may both be neural networks, and may be specifically DNNs, or CNNs.

A basic principle of the GAN is now described, using the example of photo generation. The generator is a network that is learning to perform the task of producing a synthetic photo. The generator receives a random noise z as input, and generates an output, denoted by G(z). The discriminator is a network that is learning to discriminate whether a photo is a real-world photo. The discriminator receives the input x, where x represents a possible photo. An output D(x) generated by the discriminator represents the probability that x is a real-world photo. If D(x) is 1, it indicates that x is absolutely a real-world photo. If D(x) is 0, it indicates that x absolutely is not a real-world photo. In training the GAN, an objective of the generator is to generate a photo as real as possible (to avoid detection by discriminator), and an objective of the discriminator is to try to discriminate between a real-world photo and the photo generated by the generator. Thus, training constitutes a dynamic adversarial process between the generator and the discriminator. The aim of the training is for the generator to learn to generate a photo that the discriminator cannot discriminate from a real-world photo (ideally, D(G(z)) = 0.5). The trained generator is then used for model application, which is generation of a synthetic photo in this example.

## Variational Classical Annealing

The present application is directed to methods, devices, or computer-readable media implementing quantum intelligent algorithms for optimization problems such as financial optimization problems. The quantum intelligent algorithms used in the present application are based on U.S. patent application no. 17/547,690, filed December 10, 2021, entitled "Variational Annealing", which claims priority to, and the benefit of, provisional U.S. patent application no. 63/123,917, filed December 10, 2020, the content of both of these documents being incorporated herein by reference. In one or more aspects, the present application seeks to improve upon and customize the teachings of the aforementioned documents to solve complex real-world financial portfolio optimization problems.

Many optimization problems, including combinatorial optimization problems, that are relevant to diverse fields such as computer science, computational biology and physics can be encoded into an energy functional whose lowest state encodes the solution of the problem. Heuristic methods have been used to approximate solutions to those problems. One such heuristic method is simulated annealing, a method that uses thermal fluctuations to explore the landscape describing the optimization problem in the search for solutions. Its quantum counterpart, quantum annealing, instead uses quantum tunneling through energy barriers to find the solution of the optimization problem.

This section of the present application relates generally to methods, devices, and computer-readable media for finding solutions to optimization tasks via in-silico numerical simulations. In particular, this section of the present application describes methods, devices, and computer-readable media for solving optimization problems using classical computing hardware, as opposed to quantum computing hardware (i.e., quantum computers). Examples described herein may provide more efficient and/or more accurate solutions to optimization problems relative to existing approaches implemented using classical computing hardware. Furthermore, examples described herein may provide benchmarks for solving such problems, which can be used to measure the efficiency and/or accuracy of quantum tunneling-based approaches implemented using quantum computing hardware.

In a first aspect, this section of the present application provides a method for providing a solution to an optimization task using a variational emulation of annealing, the solution comprising a plurality of values for a respective plurality of parameters. The method comprises a number of steps. A plurality of initial input values is obtained. A variational ansatz is obtained, comprising a plurality of initial values for the plurality of parameters. The following two steps are repeated one or more times: performing an annealing step while maintaining the values of the plurality of parameters, and performing a training step to modulate the values of the plurality of parameters according to a cost function, thereby generating a plurality of trained values of the respective plurality of parameters. The plurality of trained values have a lower cost, according to the cost function, than a cost of the values of the plurality of parameters prior to the modulation.

In a further aspect, this section of the present application provides a device comprising a processor and a memory. The memory stores instructions that, when executed by the processor, cause the device to provide a solution to an optimization task using a variational emulation of annealing, the solution comprising a plurality of values for a respective plurality of parameters. A plurality of initial input values is obtained. A variational ansatz is obtained, comprising a plurality of initial values for the plurality of parameters. The following two steps are repeated one or more times: performing an annealing step while maintaining the values of the plurality of parameters, and performing a training step to modulate the values of the plurality of parameters according to a cost function, thereby generating a plurality of trained values of the respective plurality of parameters. The plurality of trained values have a lower cost, according to the cost function, than a cost of the values of the plurality of parameters prior to the modulation.

In a further aspect, this section of the present application provides a non-transitory computer readable medium storing instructions that, when executed by a processor of a device, cause the device to provide a solution to an optimization task using a variational emulation of annealing, the solution comprising a plurality of values for a respective plurality of parameters. A plurality of initial input values is obtained. A variational ansatz is obtained, comprising a plurality of initial values for the plurality of parameters. The following two steps are repeated one or more times: performing an annealing step while maintaining the values of the plurality of parameters, and performing a training step to modulate the values of the plurality of parameters according to a cost function, thereby generating a plurality of trained values of the respective plurality of parameters. The plurality of trained values have a lower cost, according to the cost function, than a cost of the values of the plurality of parameters prior to the modulation.

In some examples, the annealing step comprises changing a temperature parameter of the cost function.

In some examples, the variational emulation of annealing is variational emulation of classical annealing, and the cost function comprises a variational free energy function.

In some examples, the annealing step comprises changing a driving field of the cost function.

In some examples, the variational emulation of annealing is variational emulation of quantum annealing, and the cost function comprises a variational energy function.

In some examples, positive wavefunctions ansatzes are used to implement stoquastic drivers.

In some examples, complex wavefunctions ansatzes are used to implement non-stoquastic drivers.

In some examples, the annealing step comprises: changing a driving field of the ansatz, and changing a fictitious temperature parameter of the cost function.

In some examples, the variational ansatz comprises an autoregressive neural network.

In some examples, the autoregressive neural network encodes one or more of the following: the locality of the optimization task, the connectivity of the optimization task, and the uniformity or nonuniformity of the optimization task.

In some examples, the method further comprises estimating a number of solutions of the optimization problem by calculating a residual entropy.

In some examples, the training step comprises performing gradient descent on the plurality of parameters based on the cost function.

In some examples, the method further comprises, after repeating the annealing step and training step one or more times, storing the variational ansatz for future sampling.

In some examples, the variational ansatz comprises an autoregressive neural network, and the future sampling comprises using the variational ansatz as an on-demand sampler for generating solutions of the optimization task.

In some examples, the variational ansatz comprises an autoregressive neural network, and the future sampling comprises using the variational ansatz as an on-demand sampler for generating solutions of a different optimization task.

In some examples, the method further comprises, after repeating the annealing step and training step one or more times, using the values of the plurality of parameters as an input to train a neural network to perform an optimization task that the neural network was not previously trained to perform.

In some examples, the training step comprises: setting a temperature parameter of the cost function to zero, and setting a transverse field parameter of the cost function to zero.

In some examples, the variational ansatz comprises one of the following: a mean field model, a tensor network, or a non-autoregressive artificial neural network.

In some examples, the variational ansatz encodes one or more of the following: the locality of the optimization task, the connectivity of the optimization task, and the uniformity or nonuniformity of the optimization task.

Some examples described herein may exhibit one or more advantages over existing approaches to simulated or quantum annealing.

Existing approaches, such as simulated annealing and its quantum counterpart, simulated quantum annealing, are traditionally implemented via Markov chain Monte Carlo. When deployed to solve challenging optimization problems, they often display slow convergence to optimal solutions. In contrast, some example embodiments described herein make use of autoregressive models as variational ansatzes. Thus, examples described herein may allow the use of so-called autoregressive sampling. This sampling technique allows the drawing of independent samples, and hence helps to avoid critical slowing down, which is a limiting factor in the Markov-chain sampling used by existing approaches. Autoregressive sampling may be particularly useful when dealing with disordered systems, such as spin glasses and protein systems, that require very long Markov chains to sample the multi-modal probability distribution that describes their equilibrium state.

For example, when deployed to solve certain classes of hard optimization problems, some examples described herein may obtain solutions that are orders of magnitudes more accurate than existing approaches such as simulated annealing and simulated quantum annealing.

In addition, compared to existing heuristic approaches, some embodiments described herein can give an estimate of how many solutions an optimization problem has. This is done by estimating the value of the entropy at zero temperature.

Furthermore, through the use of the sign-problem-free variational Monte Carlo method, some implementations of the methods in this embodiment can emulate quantum annealing with non-stoquastic drivers at moderately large system sizes, thus providing a useful tool to benchmark the next generation of quantum annealing devices which implement non-stoquastic drivers.

It will be appreciated that some of the examples described herein may be implemented using quantum computing hardware instead of classical computing hardware.

This section of the present application describes examples of methods, devices, and computer-readable media for solving optimization tasks by using a variational emulation of the annealing paradigm either in its classical or its quantum formulation. In some embodiments, an appropriate cost function is used that encodes the optimization problem, and whose adequate minimization throughout the annealing process may increase the efficiency of the described methods, provided a favourable annealing schedule is utilized.

**Tested Embodiments, Methods, and Results**

The following section of the specification provides details of experiments and research underlying example embodiments described herein and in "Variational Neural Annealing", by Hibat-Allah, M., Inack, E., Wiersema, R., Melko, R., and Carrasquilla, J., arXiv:2101.10154 (2021), available at https://arxiv.org/abs/2101.10154, which is hereby incorporated by reference in its entirety.

**Introduction**

Many important challenges in science and technology can be cast as optimization problems. When viewed in a statistical physics framework, these can be tackled by simulated annealing, where a gradual cooling procedure helps search for ground state solutions of a target Hamiltonian. While potentially powerful, simulated annealing is known to have prohibitively slow sampling dynamics when the optimization landscape is rough or glassy. However, as described herein, by generalizing the target distribution with a parameterized model, an analogous annealing framework based on the variational principle can be used to search for ground state solutions. Modern autoregressive models such as recurrent neural networks (RNNs) provide ideal parameterizations since they can be exactly sampled without slow dynamics even when the model encodes a rough landscape. This method is implemented in the classical and quantum settings on several prototypical spin glass Hamiltonians, with findings that on average, example methods described herein significantly outperform traditional simulated annealing in the asymptotic limit, illustrating the potential power of this yet unexplored route to optimization.

A wide array of complex combinatorial optimization problems can be reformulated as finding the lowest energy configuration of an Ising Hamiltonian of the form:

$$H_{\text{target}} = -\sum_{i<j} J_{ij}\, \sigma_i \sigma_j - \sum_{i=1}^{N} h_i\, \sigma_i, \qquad (\text{A.1})$$

where $\sigma_i = \pm 1$ are spin variables defined on the $N$ nodes of a graph. The topology of the graph together with the couplings $J_{ij}$ and fields $h_i$ uniquely encode the optimization problem, and its solutions correspond to configurations $\{\sigma_i\}$ that minimize $H_{\text{target}}$. While the lowest energy states of certain families of Ising Hamiltonians can be found with modest computational resources, most of these problems are hard to solve and belong to the non-deterministic polynomial time (NP)-hard complexity class.

Various heuristics have been used over the years to find approximate solutions to these NP-hard problems. A notable example is simulated annealing (SA), which mirrors the analogous annealing process in materials science and metallurgy where a solid is heated and then slowly cooled down to its lowest energy and most structurally stable crystal arrangement. In addition to providing a fundamental connection between the thermodynamic behavior of real physical systems and complex optimization problems, simulated annealing has enabled scientific and technological advances with far-reaching implications in areas as diverse as operations research, artificial intelligence, biology, graph theory, power systems, quantum control, circuit design among many others.

The paradigm of annealing has been so successful that it has inspired intense research into its quantum extension, which requires quantum hardware to anneal the tunneling amplitude, and can be simulated in an analogous way to SA.

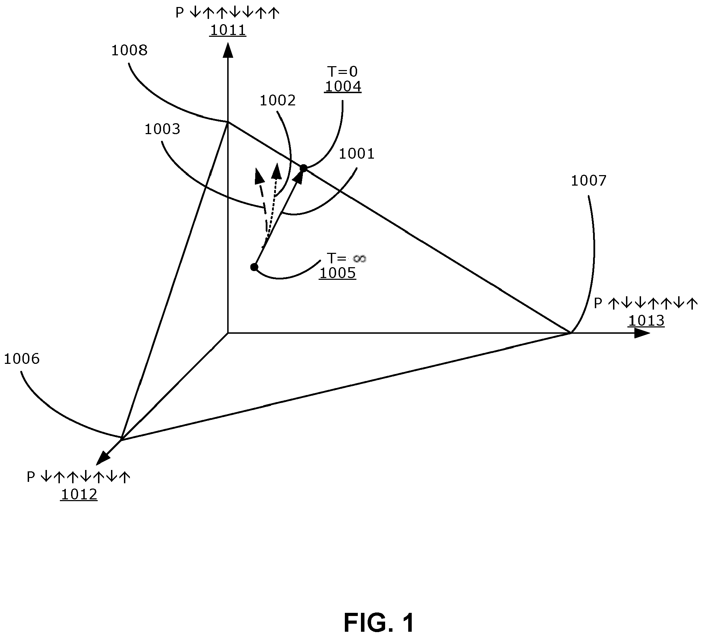

The SA algorithm explores an optimization problem's energy landscape via a gradual decrease in thermal fluctuations generated by the Metropolis-Hastings algorithm. The procedure stops when all thermal kinetics are removed from the system, at which point the solution to the optimization problem is expected to be found. While an exact solution to the optimization problem is always attained if the decrease in temperature is arbitrarily slow, a practical implementation of the algorithm must necessarily run on a finite time scale. As a consequence, the annealing algorithm samples a series of effective, quasi-equilibrium distributions close but not exactly equal to the stationary Boltzmann distributions targeted during the annealing (as shown in FIG. 1, described below). This naturally leads to approximate solutions to the optimization problem, whose quality depends on the interplay between the problem complexity and the rate at which the temperature is decreased.

In this section of the present application, an alternative route is offered to solving optimization problems of the form of Equation (A. 1), called *Variational Neural Annealing.* Here, the conventional simulated annealing formulation is substituted with the annealing of a parameterized model. Namely, instead of annealing and approximately sampling the exact Boltzmann distribution, this approach anneals a quasi-equilibrium model, which must be sufficiently expressive and capable of tractable sampling. Fortunately, suitable models have recently been developed. In particular, autoregressive models combined with variational principles have been shown to accurately describe the equilibrium properties of classical and quantum systems. Here, variational neural annealing is implemented using recurrent neural networks (RNN), and show that they offer a powerful alternative to conventional SA and its analogous quantum extension, i.e., simulated quantum annealing (SQA). This powerful and unexplored route to optimization is illustrated in FIG. 1, where a variational neural annealing trajectory 1002 provides a more accurate approximation to the ideal trajectory 1001 than a conventional SA run 1003.

FIG. 1 shows a schematic illustration of the space of probability distributions visited during simulated annealing defined by axes P $\downarrow\uparrow\uparrow\downarrow\downarrow\uparrow\uparrow$ 1011, P $\downarrow\uparrow\uparrow\downarrow\uparrow\downarrow\uparrow$ 1012, and P $\uparrow\downarrow\downarrow\uparrow\uparrow\downarrow\uparrow$ 1013. An arbitrarily slow SA visits a series of Boltzmann distributions starting at the high temperature 1005 (e.g. $T = \infty$) and ending in the $T = 0$ Boltzmann distribution 1004, where a perfect solution to an optimization problem is reached. These solutions are found either at the edge or a corner (for non-degenerate problems) of the standard probabilistic simplex (triangular plane defined by points 1006, 1007, 1008). A practical, finite-time SA trajectory 1003, as well as a variational classical annealing trajectory 1002, deviate from the trajectory of exact Boltzmann distributions. The temperature is high at the high temperature 1005 and colder the farther one moves away from the high temperature 1005 within the triangular plane.

**Variational Classical and Quantum Annealing**

The variational approach to statistical mechanics is considered, where a distribution $p_\lambda(\sigma)$ defined by a set of variational parameters $\lambda$ is optimized to reproduce the equilibrium properties of a system at temperature $T$. The first variational neural annealing algorithm is referred to herein as "*variational classical annealing*" (VCA).

The VCA algorithm searches for the ground state of an optimization problem by slowly annealing the model's variational free energy as follows:

$$F_\lambda(t) = \langle H_{target} \rangle_\lambda - T(t) S_{classical}(p_\lambda), \quad (A.2)$$

from a high temperature to a low temperature. The quantity $F_\lambda(t)$ provides an upper bound to the true instantaneous free energy and can be used at each annealing stage to update $\lambda$ through gradient-descent techniques. The brackets $\langle ... \rangle_\lambda$ denote ensemble averages over $p_\lambda(\sigma)$. The von Neumann entropy is given by

$$S_{classical}(p_\lambda) = -\sum_\sigma p_\lambda(\sigma) \log(p_\lambda(\sigma)), \quad (A.3)$$

where the sum runs over all possible configurations $\{\sigma\}$. In this setting, the temperature is decreased linearly from $T_0$ to 0, i.e., $T(t) = T_0(1 - t)$, where $t \in [0,1]$, which follows the traditional implementation of SA.

In order for VCA to succeed, it requires parameterized models that enable the estimation of entropy, Equation (A.3), without incurring expensive calculations of the partition function. In addition, it is anticipated that hard optimization problems will induce a complex energy landscape into the parameterized models and an ensuing slowdown of their sampling via Markov chain Monte Carlo. These issues preclude un-normalized models such as restricted Boltzmann machines, where sampling relies on Markov chains and whose partition function is intractable to evaluate. Instead, VCA is implemented using recurrent neural networks (RNNs) as a model for $p_\lambda(\sigma)$, whose autoregressive nature enables statistical averages over exact samples σ drawn from the RNN. Since RNNs are normalized by construction, these samples allow the estimation of the entropy in Equation (A.3). A detailed description of the RNN is provided in the Methods section below and the advantage of autoregressive sampling is described below.

FIGs. 2A and 2B show variational neural annealing protocols. FIG. 2A shows the variational classical annealing (VCA) algorithm steps. A warm-up step 2002 brings the initialized variational state 2012 close to the minimum 2014 of the curve 2016 of free energy F at a given value of the order parameter $M$. This step 2002 is followed by an annealing step 2004 and a training step 2006 that bring the variational state 2020 back to the new free energy minimum 2022 of the new free energy curve 2018. Repeating the last two steps 2004, 2006 until, after the end 2008 of the annealing process, $T(t=1)=0$ at minimum state 2024 of the final free energy curve 2026, producing approximate solutions to $H_{target}$ if the protocol is conducted slowly enough. This schematic illustration corresponds to annealing through a continuous phase transition with an order parameter $M$.

The VCA algorithm, summarized in FIG. 2A, performs a warm-up step 2002 which brings a randomly initialized distribution $p_\lambda(\sigma)$ (i.e. free energy curve 2016) to an approximate equilibrium state with free energy $F_\lambda(t=0)$ via $N_{warmup}$ gradient descent steps (i.e. training steps 2006). At each time step t, the temperature of the system is reduced from T(t) to $T(t+\delta t)$ and apply $N_{train}$ gradient descent steps 2006 to re-equilibrate the model. A critical ingredient to the success of VCA is that the variational parameters optimized at temperature T(t) are reused at temperature $T(t+\delta t)$ to ensure that the model's distribution is near its instantaneous equilibrium state. Repeating the last two steps (2004, 2006) $N_{annealing}$ times, temperature $T(1)=0$ is reached, which is the end of the protocol. Here the distribution $p_\lambda(\sigma)$ 2026 is expected to assign high probability to configurations σ that solve the optimization problem. Likewise, the residual entropy Equation (A.3) at $T(1)=0$ provides an approach to count the number of solutions to the problem Hamiltonian. Further details are provided in the Methods section below.

Simulated annealing provides a powerful heuristic for the solution of hard optimization problems by harnessing thermal fluctuations. Inspired by the latter, the advent of commercially available quantum devices has enabled the analogous concept of quantum annealing, where the solution to an optimization problem is performed by harnessing quantum fluctuations. In quantum annealing, the search for the ground state of Equation (A. 1) is performed by supplementing the target Hamiltonian with a quantum mechanical (or "driving") term,

$$\widehat{H}(t) = \widehat{H}_{\mathrm{target}} + f(t)\widehat{H}_D, \qquad (A.4)$$

where $H_{target}$ in Equation (A. 1) is promoted to a quantum Hamiltonian $\hat{H}_{\mathrm{target}}$.

Quantum annealing algorithms typically start with a dominant driving term $\hat{H}_D \gg \hat{H}_{\mathrm{target}}$ chosen so that the ground state of $\hat{H}(0)$ is easy to prepare. When the strength of the driving term is subsequently reduced (typically adiabatically) using a schedule function $f(t)$, the system is annealed to the ground state of $\hat{H}_{\mathrm{target}}$. In analogy to its thermal counterpart, SQA emulates this process on classical computers using quantum Monte Carlo methods.

Here, the variational principle of quantum mechanics is leveraged, and a strategy is devised that emulates quantum annealing variationally. The second algorithm is referred to herein as "*variational quantum annealing*" (VQA). The latter is based on the variational Monte Carlo (VMC) algorithm, whose goal is to simulate the equilibrium properties of quantum systems at zero temperature (see the Methods section below). In VMC, the ground state of a Hamiltonian $\hat{H}$ is modeled through an ansatz $|\Psi_\lambda\rangle$ endowed with parameters λ. The variational principle guarantees that the energy $\langle \Psi_\lambda|\hat{H}|\Psi_\lambda\rangle$ is an upper bound to the ground state energy of $\hat{H}$, which is used to define a time-dependent objective function $E(\lambda, t) = \langle\hat{H}(t)\rangle_\lambda = \langle\Psi_\lambda|\hat{H}(t)|\Psi_\lambda\rangle$ to optimize the parameters λ.

FIG. 2B shows variational quantum annealing (VQA). VQA includes a warm-up step 2052 wherein the initial variational energy 2062 falls to an initial minimum 2064 at a first time step. This is followed by an annealing step 2054 and a training step 2056, which bring the variational energy from the initial minimum 2064 up to a higher level 2070 before dropping again to new minimum 2072 closer to the new ground state energy at a second time step. The previous two steps 2054, 2056 are repeated until reaching the target ground state of $\hat{H}_{\mathrm{target}}$ 2074 at the end 2058 of the annealing process if annealing is performed slowly enough.

The VQA setup, summarized in FIG. 2B, applies $N_{warmup}$ gradient descent steps (i.e. training steps 2056) to minimize $E(\lambda, t=0)$, which brings $|\Psi_\lambda\rangle$ close to the ground state of $\hat{H}(0)$. Setting $t=\delta t$ while keeping the parameters $\lambda_0$ fixed results in a variational energy $E(\lambda_0, t=\delta t)$. A set of $N_{train}$ gradient descent steps 2056 bring the ansatz closer to the new instantaneous ground state, which results in a variational energy $E(\lambda_1, t=\delta t)$. The variational parameters optimized at time step t are reused at time $t+\delta t$, which promotes the adiabaticity of the protocol, as described below.

The annealing step 2054 and training step 2056 are repeated $N_{annealing}$ times on a linear schedule ($f(t) = 1 - t$ with $t$ E [0,1]) until $t=1$, at which point the system is expected to solve the optimization problem (i.e., arrive at final state 2074 in FIG. 2B). Note that in the simulations conducted, no training steps are taken at $t=1$. Finally, normalized RNN wave functions are chosen to model $|\Psi_\lambda\rangle$.

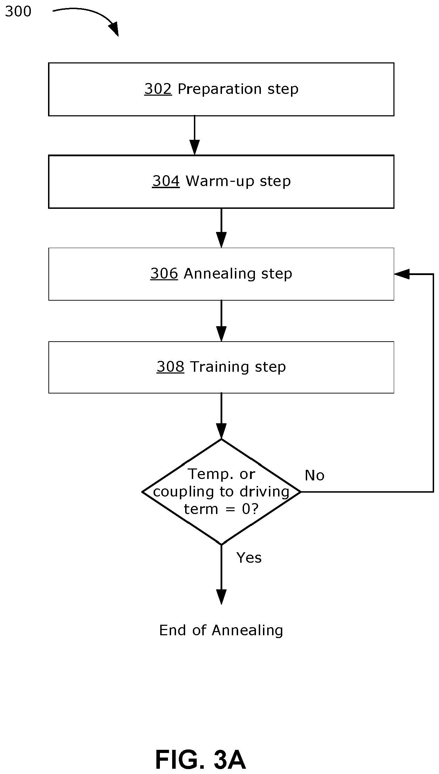

FIG. 3A shows a flowchart describing the example VCA and VQA implementations described herein, showing the steps of an example method 300 implementing the VCA and VQA protocols. At 302, a preparation step is performed. An instance of the problem Hamiltonian is prepared, the model parameters are initialized, and the temperature (for VCA) or coupling to the driving Hamiltonian (for VQA) are initialized. At 304, the warm-up step 2002 or 2052 is performed, including a user defined number of gradient descent steps. At 306, the annealing step 2004 or 2054 is performed. Temperature (VCA), or the driving field (VQA), is decreased, while keeping the parameters of the model fixed. At 308, the training step 2006 or 2056 is performed, including a user defined number of gradient descent steps while keeping temperature (VCA) or driving field (VQA) fixed. If temperature (VCA) or coupling to driving term (VQA) is non-zero, then the method 300 returns to repeat step 306. Otherwise, the annealing process reaches its end 2008 or 2058.

To gain theoretical insight on the principles behind VQA, a variational version of the adiabatic theorem is derived. Starting from assumptions such as the convexity of the model's optimization landscape in the warm-up phase and close to convergence during annealing, as well as noiseless energy gradients, a bound is provided on the total number of gradient descent steps $N_{\text{steps}}$ that guarantees adiabaticity and a success probability of solving the optimization problem $P_{success} > 1 - \varepsilon$. Here, $\varepsilon$ is an upper bound on the overlap between the variational wave function and the excited states of $\hat{H}(t)$, i.e., $|\langle \Psi_\perp(t)|\Psi_\lambda\rangle|^2 < \varepsilon$. The symbol $\perp$ indicates the orthogonality of excited states with respect to the ground state of $\hat{H}(t)$. It is shown show that $N_{\text{steps}}$ can be bounded as (See section entitled Variational Adiabatic Theorem, below):

$$\mathcal{O}\left(\frac{\text{poly}(N)}{\varepsilon \min_{\{t_n\}}(g(t_n))}\right) \leq N_{\text{steps}} \leq \mathcal{O}\left(\frac{\text{poly}(N)}{\varepsilon^2 \min_{\{t_n\}}(g(t_n))^2}\right). \qquad (A.5)$$

The function $g(t)$ is the energy gap between the first excited state and the ground state of $\hat{H}(t)$, $N$ is the system size, and the set of times $\{t_n\}$ is defined in the section entitled Variational Adiabatic Theorem, below. For hard optimization problems, the minimum gap typically decreases exponentially with $N$, which dominates the computational complexity of a VQA simulation, but in cases where the minimum gap scales as the inverse of a polynomial in $N$, then $N_{steps}$ is bounded by a polynomial in $N$.

**Results**

**Annealing on Random Ising Chains**

The power of VCA and VQA is now evaluated. First, one considers the task of solving for the ground state of the one-dimensional (1D) Ising Hamiltonian with random couplings $J_{i,i+1}$,

$$H_{\text{target}} = -\sum_{i=1}^{N-1} J_{i,i+1}\, \sigma_i \sigma_{i+1}. \qquad (A.6)$$

One examines $J_{i,i+1}$ sampled from a uniform distribution in the interval [0,1). Here, the ground state configuration is given either by all spins up or down, and the ground state energy is $E_G = -\sum_{i=1}^{N-1} J_{i,i+1}$.

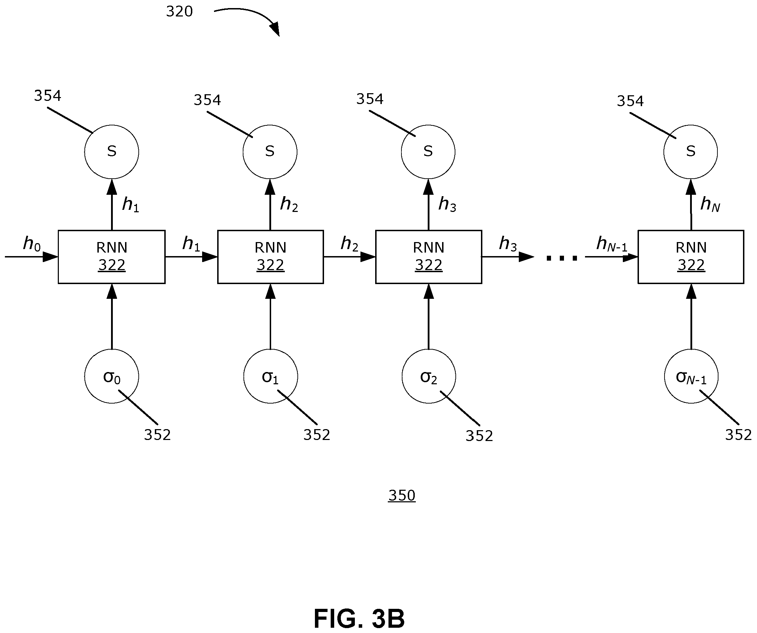

FIG. 3B shows an illustration of a 1D RNN 320: at each site n, the RNN cell 322 receives a hidden state $\mathbf{h}_{n-1}$ and the one-hot spin vector $\sigma_{n-1}$ 352, to generate a new hidden state $\mathbf{h}_n$ that is fed into a Softmax layer 354.

The 1D RNN ansatz 320 is used for both VCA and VQA on the random Ising chains. Specifically, a tensorized RNN cell 322 without weight sharing (see the Methods section) is used. System sizes $N = 32, 64, 128$ and $N_{train} = 5$ are considered, which suffices to achieve accurate solutions. For VQA, a driving Hamiltonian $\hat{H}_D = -\Gamma_0 \sum_{i=1}^{N} \hat{\sigma}_i^x$ is used, where $\hat{\sigma}_i^{x,y,z}$ are Pauli matrices acting on site $i$. To quantify the performance of the algorithms, the residual energy is used:

$$\epsilon_{\text{res}} = [\langle H_{target}\rangle_{\text{av}} - E_{\text{G}}]_{\text{dis}}, \quad (A.7)$$

where $E_G$ is the exact ground state energy of $H_{\text{target}}$. The arithmetic mean for statistical averages $\langle...\rangle_{\text{av}}$ over samples from the models is used. For VCA it means that $\langle H_{target}\rangle_{\text{av}} \approx \langle H_{target}\rangle_\lambda$, while for VQA the target Hamiltonian is promoted to

$$\hat{H}_{\text{target}} = -\sum_{i=1}^{N-1} J_{i,i+1}\, \hat{\sigma}_i^z \hat{\sigma}_{i+1}^z$$ and $\langle H_{target}\rangle_{\text{av}} \approx \langle \hat{H}_{target}\rangle_\lambda$.

The typical mean for averaging over instances of $H_{target}$, i.e., $[...]_{dis} = \exp((\ln(...))_{av})$ is considered. The average in the argument of the exponential stands for arithmetic mean over realizations of the couplings. Taking advantage of the autoregressive nature of the RNN, $10^6$ configurations at the end of the annealing are sampled, which allows the model's arithmetic mean to be accurately estimated. The typical mean is taken over 25 instances of $H_{target}$. The protocol is executed from scratch for each realization of $H_{target}$.

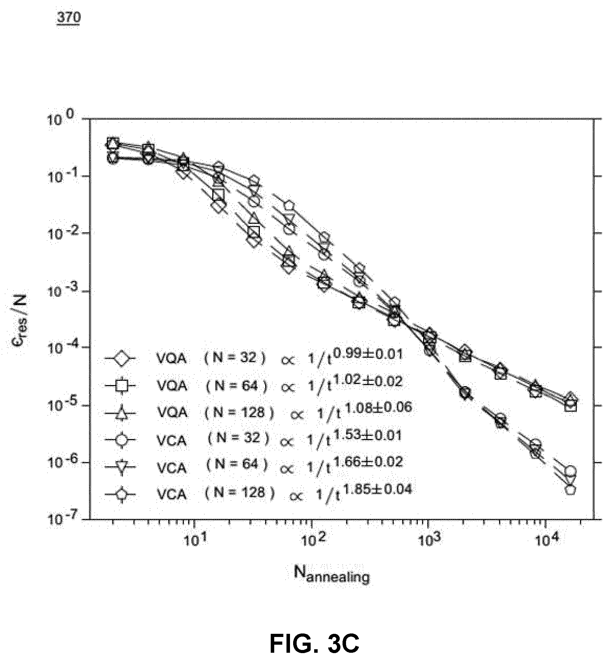

FIG. 3C shows variational neural annealing on random Ising chains. Here the graph 370 shows the residual energy per site $\varepsilon_{res}/N$ graphed vs. the number of annealing steps $N_{annealing}$ for both VQA and VCA. The system sizes are $N = 32, 64, 128$. Random positive couplings $J_{i,i+1} \in [0,1)$ are used (as described above). The error bars represent the one s.d. (standard deviation) statistical uncertainty calculated over different disorder realizations. Here and in the other plots in this section of the present application, the error bars are smaller than the symbol size if not visible.

FIG. 3C reports the residual energies per site against $N_{annealing}$. As expected, $\varepsilon_{res}$ is a decreasing function of $N_{annealing}$, which underlines the importance of adiabaticity and annealing. In these examples, it is observed that the decrease of the residual energy of VCA and VQA is consistent with a power-law decay for a large number of annealing steps. Whereas VCA's decay exponent is in the interval 1.5-1.9, the VQA exponent is about 0.9-1.1. These exponents suggest an asymptotic speed-up compared to SA and coherent quantum annealing, where the residual energies follow a logarithmic law. Contrary to the observations in Tommaso Zanca and Giuseppe E. Santoro, "Quantum annealing speedup over simulated annealing on random Ising chains," Phys. Rev. B 93, 224431 (2016), where quantum annealing was found superior to SA, VCA finds an average residual energy an order of magnitude more accurate than VQA for a large number of annealing steps.

Finally, it is noted that the exponents provided above are not expected to be universal and are a priori sensitive to the hyperparameters of the algorithms. The hyperparameters used are summarized below. Additional illustrations of the adiabaticity of VCA and VQA, as well as results for a chain with $J_{i,i+1}$ uniformly sampled from the discrete set {-1, +1}, are provided in the section entitled Numerical Proof of Principle of Adiabaticity, below.

**Edwards-Anderson model**

The two-dimensional (2D) Edwards-Anderson (EA) model is now considered. The EA model is a prototypical spin glass arranged on a square lattice with nearest neighbor random interactions. The problem of finding ground states of the model has been studied experimentally and numerically from the annealing perspective, as well as theoretically from the computational complexity perspective. The EA model is given by

$$H_{target} = -\sum_{\langle i,j \rangle} J_{ij}\, \sigma_i \sigma_j, \quad (A.8)$$

where $\langle i, j \rangle$ denote nearest neighbors. The couplings $J_{ij}$ are drawn from a uniform distribution in the interval $[-1,1)$. In the absence of a longitudinal field, for which solving the EA model is NP-hard, the ground state can be found in polynomial time. To find the exact ground state of each random realization, the spin-glass server was used.

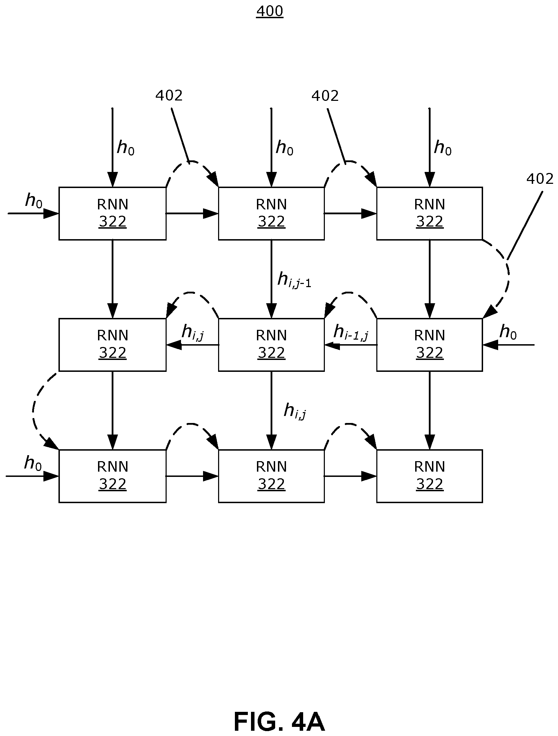

FIG.s 4A-C shows benchmarking of the two-dimensional Edwards-Anderson spin glass. FIG. 4A shows a graphical illustration of a 2D RNN 400. Each RNN cell 322 receives two hidden states $\mathbf{h}_{i,j-1}$ and $\mathbf{h}_{i-1,j}$, as well as two input vectors $\sigma_{i,j-1}$ and $\sigma_{i-1,j}$ (not shown) as illustrated by the straight solid arrows. The dashed curved arrows 402 correspond to the zigzag path used for 2D autoregressive sampling. The initial memory state $\mathbf{h}_0$ of the RNN and the initial inputs $\sigma_0$ (not shown) are null vectors (described in the Methods section below). An RNN that encodes the structure of the 2D geometry of the EA model is described with reference to FIG. 4A, and Tensorized RNN cells without weight sharing are used to capture the disordered nature of the system (see the Methods section). For VQA, $\widehat{H}_D = -\Gamma_0 \sum_{i=1}^{N} \hat{\sigma}_i^x$ is used.

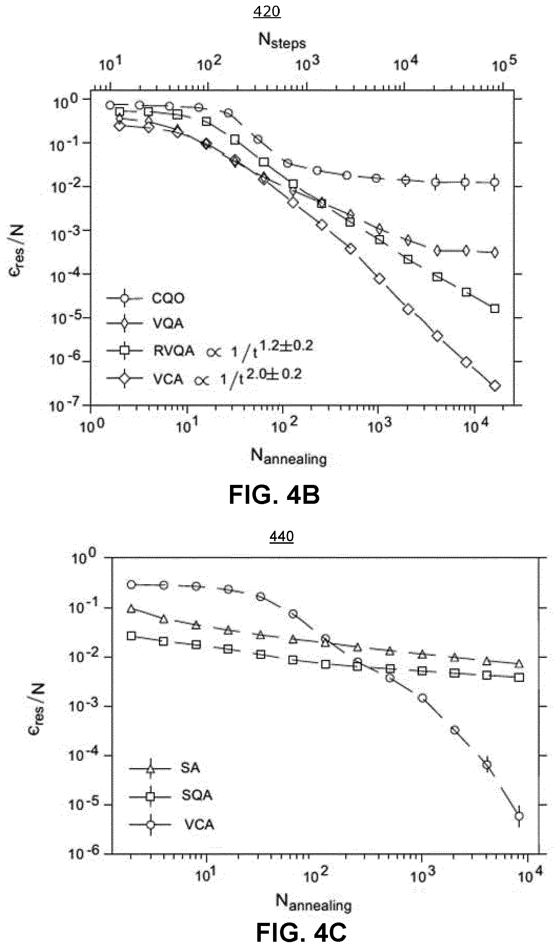

FIG. 4B is a graph 420 showing the annealing results obtained on a system with $N = 10 \times 10$. VCA outperforms VQA and in the adiabatic, long-time annealing regime, it produces solutions three orders of magnitude more accurate on average than VQA. In addition, the performance of VQA supplemented with a fictitious Shannon information entropy term that mimics thermal relaxation effects observed in quantum annealing hardware is investigated.

This form of regularized VQA, here labelled (RVQA), is described by a pseudo free energy cost function $\tilde{F}_\lambda(t) = \langle \hat{H}(t) \rangle_\lambda - T(t) S_{classical}(|\Psi_\lambda|^2)$. The results in FIG. 4B do show an amelioration of the VQA performance, including changing a saturating dynamic at large $N_{annealing}$ to a power-law like behavior. However, it appears to be insufficient to compete with the VCA scaling (see exponents in FIG. 4B). This observation suggests the superiority of a thermally driven variational emulation of annealing over a purely quantum one for this example.

To further scrutinize the relevance of the annealing effects in VCA, VCA without thermal fluctuations is considered, i.e., setting $T_0 = 0$. Because of its intimate relation to the classical-quantum optimization (CQO) methods in the existing literature, this setting is referred to herein as CQO.

FIG. 4B shows a graph 420 comparing VCA, VQA, RVQA, and CQO on a $10 \times 10$ lattice by plotting the residual energy per site vs $N_{annealing}$. For CQO, the residual energy per site vs the number of optimization steps $N_{steps}$ is reported.

FIG. 4B shows that CQO takes about $10^3$ training steps to reach accuracies nearing 1%. Further training (up to $10^5$ gradient descent steps) does not improve the accuracy, which indicates that CQO is prone to getting stuck in local minima. In comparison, VCA and VQA offer solutions orders of magnitude more accurate for large $N_{annealing}$, highlighting the importance of annealing in tackling optimization problems.

Since VCA displays the best performance, it is used to demonstrate its capabilities on a $40 \times 40$ spin system and compare against SA as well as SQA. The SQA simulation uses the path-integral Monte Carlo method with $P = 20$ trotter slices, and the experiments and research reports averages over energies across all trotter slices, for each realization of randomness. In addition, the research averages over the energies from 25 annealing runs on every instance of randomness for SA and SQA. To average over Hamiltonian instances, the typical mean over 25 different realizations for the three annealing methods is used. The results are shown in FIG. 4C, where the residual energies per site against $N_{annealing}$ are presented, set so that the speed of annealing is the same for SA, SQA and VCA.

FIG. 4C shows a graph 440 comparing SA, SQA with $P = 20$ trotter slices, and VCA using a 2D tensorized RNN ansatz on a $40 \times 40$ lattice. The annealing speed is the same for SA, SQA and VCA.

It is noted that the results confirm the qualitative behavior of SA and SQA in the existing literature. While SA and SQA produce lower residual energy solutions than VCA for small $N_{annealing}$, the research indicates that VCA achieves residual energies about three orders of magnitude smaller than SQA and SA for a large $N_{annealing}$. Notably, the rate at which the residual energy improves with increasing $N_{annealing}$ is significantly higher for VCA compared to SQA and SA even at relatively small number of annealing steps. Additional simulations on a system size of $60 \times 60$ spins (see section entitled Additional Results below) corroborate this result.

**Fully-Connected Spin Glasses**

This section of the present application focuses on fully-connected spin glasses. The Sherrington-Kirkpatrick (SK) model is first considered. The SK model provides a conceptual framework for the understanding of the role of disorder and frustration in systems ranging from materials to combinatorial optimization and machine learning. The SK Hamiltonian is given by

$$H_{\text{target}} = -\frac{1}{2} \sum_{i \neq j} \frac{J_{ij}}{\sqrt{N}} \sigma_i \sigma_j, \quad (A.9)$$

where $\{J_{ij}\}$ is a symmetric matrix whose elements $J_{ij}$ are sampled from the standard normal distribution.

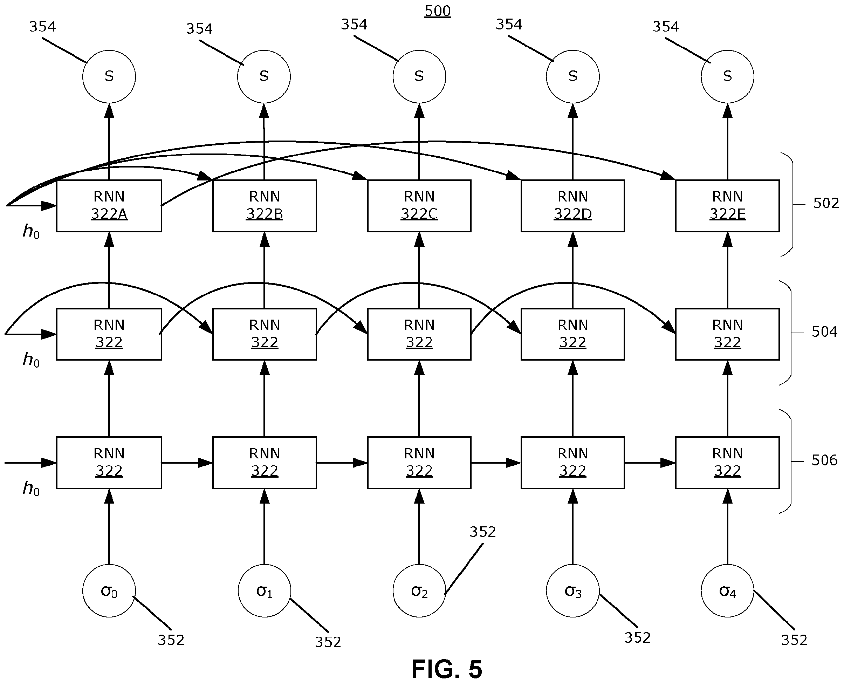

Since VCA performed best in the previous examples, it is used to find ground states of the SK model for $N = 100$ spins. Here, exact ground states energies of the SK model are calculated using the spin-glass server on a total of 25 instances of disorder. To account for long-distance dependencies between spins in the SK model, a dilated RNN ansatz 500 of depth $L = \lceil \log_2(N) \rceil$ (see FIG. 5) structured so that spins are connected to each other with a distance of at most $\mathcal{O}(\log_2(N))$ is used. More details are provided in the Methods section below. The initial temperature is set to $T_0 = 2$. The results are compared with SQA and SA initialized with $\Gamma_0 = 2$ and $T_0 = 2$, respectively.

FIG. 5 shows an illustration of a dilated RNN 500 used for fully-connected spin glasses. The distance between each two RNN cells 322A-322(e) grows exponentially with depth to account for long-term dependencies. A depth $L = \lceil \log_2(N) \rceil$ where $N$ is the number of spins was chosen.

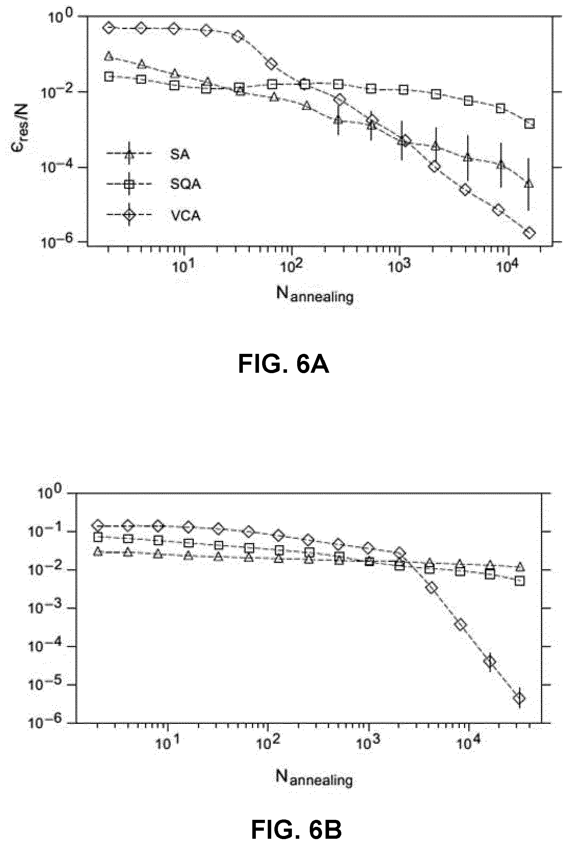

For an effective comparison, the residual energy per site is first plotted as a function of $N_{annealing}$ for VCA, SA and SQA ($P = 100$). Here, the SA and SQA residual energies are obtained by averaging the outcome of 50 independent annealing runs, while for VCA the research averages the outcome of $10^6$ samples from the annealed RNN. For all methods, typical averages over 25 disorder instances are considered. The results are shown in FIG. 6A. As observed in the EA model, SA and SQA produce lower residual energy solutions than VCA for small $N_{annealing}$, but VCA delivers a lower $\varepsilon_{\text{res}}$ when $N_{annealing} \gtrsim 10^3$. Likewise, it can be observed that the rate at which the residual energy improves with increasing $N_{annealing}$ is significantly higher for VCA than SQA and SA.

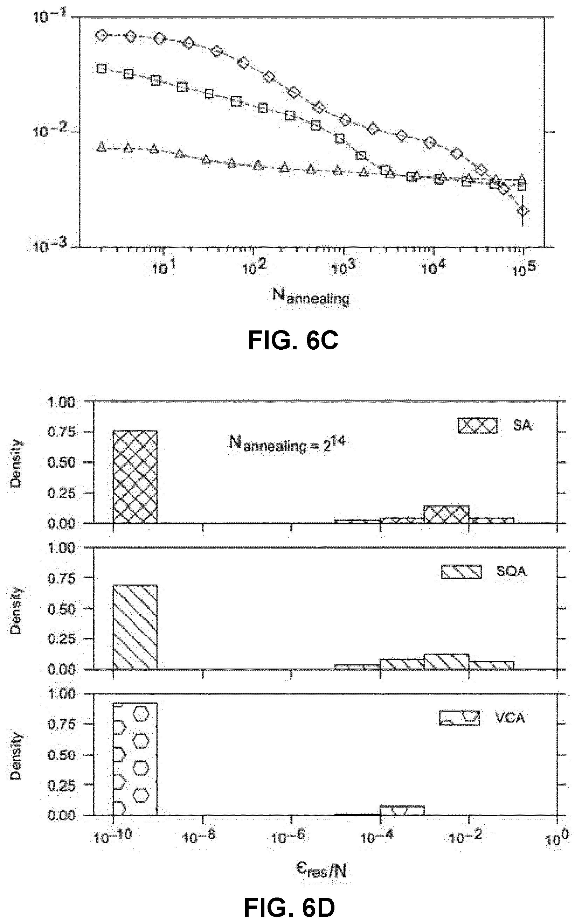

A closer look at the statistical behaviour of the methods at large $N_{annealing}$ can be obtained from the residual energy histograms produced by each method, as shown in FIG. 6D. The histograms contain 1000 residual energies for each of the same 25 disorder realizations. For each instance, the results for 1000 SA runs, 1000 samples obtained from the RNN at the end of annealing for VCA, and 10 SQA runs including contribution from each of the $P = 100$ Trotter slices are plotted. The research indicates that VCA is superior to SA and SQA, as it produces a higher density of low energy configurations. This indicates that, even though VCA typically takes more annealing steps, it results in a higher chance of getting accurate solutions to optimization problems than SA and SQA.

This section of the present application focuses on the Wishart planted ensemble (WPE), which is a class of zero-field Ising models with a first-order phase transition and tunable algorithmic hardness. These problems belong to a special class of hard problem ensembles whose solutions are known a priori, which, together with the tunability of the hardness, makes the WPE model an ideal tool to benchmark heuristic algorithms for optimization problems. The Hamiltonian of the WPE model is given by

$$H_{\text{target}} = -\frac{1}{2}\sum_{i \neq j} J_{ij}^{\alpha}\, \sigma_i \sigma_j. \qquad (A.10)$$

Here $J_{ij}^{\alpha}$ is a symmetric matrix satisfying

$$J^{\alpha} = \tilde{J}^{\alpha} - \text{diag}(\tilde{J})$$

and

$$\tilde{J}^{\alpha} = -\frac{1}{N} W_{\alpha} W_{\alpha}^{\mathrm{T}}.$$

The term $W_{\alpha}$ is an $N \times \lfloor \alpha N \rfloor$ random matrix satisfying $W_{\alpha} t_{\text{ferro}} = 0$ where $t_{\text{ferro}} = (+1, +1,..., +1)$ (for details about the generation of $W_{\alpha}$, see Firas Hamze, Jack Raymond, Christopher A. Pattison, Katja Biswas, and Helmut G. Katzgraber, "Wishart planted ensemble: A tunably rugged pairwise Ising model with a first-order phase transition," Physical Review E 101 (2020), 10.1103/physreve.101.052102). The ground state of the WPE model is known (i.e., it is planted) and corresponds to the states $\pm t_{\text{ferro}}$. Interestingly, $\alpha$ is a tunable parameter of hardness, where for $\alpha < 1$ this model displays a first-order transition, such that near zero temperature the paramagnetic states are meta-stable solutions. This feature makes this model hard to solve with any annealing method, as the paramagnetic states are numerous compared to the two ferromagnetic states and hence act as a trap for a typical annealing method. The research benchmarks the three methods (SA, SQA and VCA) for $N = 32$ and $\alpha \in \{0.25, 0.5\}$.

FIG.s 6A-F show benchmarking of SA, SQA ($P = 100$ trotter slices) and VCA on the Sherrington-Kirkpatrick (SK) model and the Wishart planted ensemble (WPE). Figs. 6A, 6B, and 6C display the residual energy per site as a function of $N_{annealing}$. FIG. 6A shows results for the SK model with $N = 100$ spins. FIG. 6B shows results for the WPE with $N = 32$ spins and $\alpha = 0.5$. FIG. 6C shows results for the WPE with $N = 32$ spins and $\alpha = 0.25$. FIG.s 6D, 6E and 6F display the residual energy histogram for each of the different techniques and models in FIG.s 6A, 6B, and 6C, respectively. The histograms use 25000 data points for each method. A minimum threshold of $10^{-10}$ for $\varepsilon_{res}/N$, which is within the numerical accuracy, was chosen.

The research considers 25 instances of the couplings { $J_{ij}^{\alpha}$ } and attempt to solve the model with VCA implemented using a dilated RNN ansatz with $\lceil \log_2(N) \rceil = 5$ layers and $T_0 = 1$. For SQA, the research uses an initial magnetic field $\Gamma_0 = 1$ and $P = 100$, while for SA the research starts with $T_0 = 1$.

The residual energies per site (FIG.s 6B-6C) are first plotted. Here, it is observed noted that VCA is superior to SA and SQA for $\alpha = 0.5$ as demonstrated in FIG. 6B.

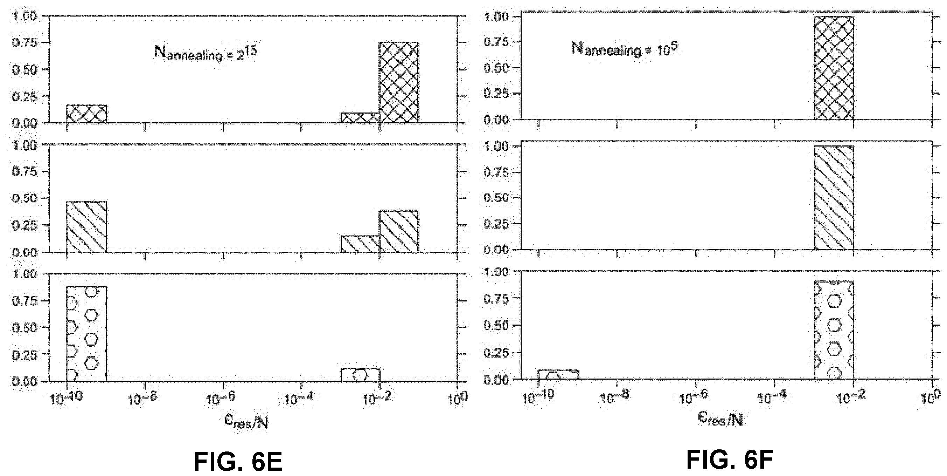

More specifically, VCA is about three orders of magnitude more accurate than SQA and SA for a large $N_{annealing}$. For $\alpha = 0.25$ (FIG. 6C), VCA is competitive and performs comparably with SA and SQA on average for a large $N_{annealing}$. The research also represents the residual energies in a histogram form. The research observes that for $\alpha = 0.5$ in FIG. 6E, VCA achieves a higher density of configurations with $\varepsilon_{res}/N \sim 10^{-9}$-$10^{-10}$ compared to SA and SQA. For $\alpha = 0.25$ in FIG. 6F, VCA leads to a non-negligible density at very low residual energies as opposed to SA and SQA, whose solutions display orders of magnitude higher residual energies. Finally, the WPE simulations support the observation that VCA tends to improve the quality of solutions faster than SQA and SA for a large $N_{annealing}$. For additional discussion about the WPE and SK results, see section entitled Additional Results below. The running time estimations for SA, SQA and VCA are provided in the section entitle Running Time below.

**Conclusions**

In conclusion, the research has introduced a strategy to combat the slow sampling dynamics encountered by simulated annealing when an optimization landscape is rough or glassy. Based on annealing the variational parameters of a generalized target distribution, the scheme called *variational neural annealing,* takes advantage of the power of modern autoregressive models, which can be exactly sampled without slow dynamics even when a rough landscape is encountered. The research implements variational neural annealing parameterized by a recurrent neural network, and compare its performance to conventional simulated annealing on prototypical spin glass Hamiltonians known to have landscapes of varying roughness. The research finds that variational neural annealing produces accurate solutions to all of the optimization problems considered, including spin glass Hamiltonians where these techniques typically reach solutions orders of magnitude more accurate on average than conventional simulated annealing in the limit of a large number of annealing steps.

Several hyperparameters, model, hardware, and objective function choices can be used in different embodiments and may improve the methodologies described herein. Example embodiments described herein utilize a simple annealing schedule and demonstrate that reinforcement learning can be used to improve it. A critical insight gleaned from these experiments is that certain neural network architectures are more efficient on specific Hamiltonians. Thus, further improvements may be realized by exploring the intimate relation between the model architecture and the problem Hamiltonian, where it may be envisioned that symmetries and domain knowledge would guide the design of models and algorithms.

As optimization powered by deep learning becomes increasingly common, a rapid adoption of machine learning techniques may be expected in the space of combinatorial optimization, and domain-specific applications of the ideas and examples described herein may be deployed in technological and scientific areas related to physics, biology, health care, economy, transportation, manufacturing, supply chain, hardware design, computing and information technology, among others.

**Methods**

**Recurrent Neural Network Ansatz**

Recurrent neural networks model complex probability distributions $p$ by taking advantage of the chain rule

$$p(\boldsymbol{\sigma}) = p(\sigma_1)p(\sigma_2|\sigma_1)\cdots p(\sigma_N|\sigma_{N-1},\dots,\sigma_2,\sigma_1), \quad (A.11)$$

where specifying every conditional probability $p(\sigma_i|\sigma_{<i})$ provides a full characterization of the joint distribution $p(\boldsymbol{\sigma})$. Here, $\{\sigma_n\}$ are $N$ binary variables such that $\sigma_n = 0$ corresponds to a spin down while $\sigma_n = 1$ corresponds to a spin up. RNNs consist of elementary cells that parameterize the conditional probabilities. In their original form, "vanilla" RNN cells compute a new "hidden state" $\mathbf{h}_n$ with dimension $d_h$, for each site $n$, following the relation

$$\mathbf{h}_n = F(W[\mathbf{h}_{n-1};\boldsymbol{\sigma}_{n-1}] + \mathbf{b}), \quad (A.12)$$

where $[\mathbf{h}_{n-1};\sigma_{n-1}]$ is vector concatenation of $\mathbf{h}_{n-1}$ and a one-hot encoding $\sigma_{n-1}$ of the binary variable $\sigma_{n-1}$. The function $F$ is a non-linear activation function. From this recursion relation, it is clear that the hidden state $\mathbf{h}_n$ encodes information about the previous spins $\sigma_{n'<n}$. Hence, the hidden state $\mathbf{h}_n$ provides a simple strategy to model the conditional probability $p_\lambda(\sigma_n|\sigma_{<n})$ as

$$p_\lambda(\sigma_n|\sigma_{<n}) = \mathrm{Softmax}(U\mathbf{h}_n + \mathbf{c})\cdot\boldsymbol{\sigma}_n, \quad (A.13)$$

where $\cdot$ denotes the dot product operation (see FIG. 3B). The set of all variational parameters of the model $\lambda$ corresponds to $U, W, \mathbf{b}, \mathbf{c}$, and

$$\mathrm{Softmax}(\mathbf{v})_n = \frac{\exp(v_n)}{\sum_i \exp(v_i)}.$$

The joint probability distribution $p_\lambda(\sigma)$ is given by

$$p_\lambda(\boldsymbol{\sigma}) = p_\lambda(\sigma_1)p_\lambda(\sigma_2|\sigma_1)\cdots p_\lambda(\sigma_N|\sigma_{<N}). \quad (A.14)$$

Since the outputs of the Softmax activation function sum to one, each conditional probability $p_\lambda(\sigma_i|\sigma_{<i})$ is normalized, and hence $p_\lambda(\boldsymbol{\sigma})$ is also normalized.

For disordered systems, it is natural to forgo the common practice of weight sharing of $W$, $U$, $\mathbf{b}$ and $\mathbf{c}$ in Eqs. (12), (13) and use an extended set of site-dependent variational parameters $\lambda$ comprised of $\{W_n\}_{n=1}^N$ and $\{U_n\}_{n=1}^N$ and biases $\{\mathbf{b}_n\}_{n=1}^N$, $\{\mathbf{c}_n\}_{n=1}^N$. The recursion relation and the Softmax layer are modified to

$$\mathbf{h}_n = F(W_n[\mathbf{h}_{n-1}; \boldsymbol{\sigma}_{n-1}] + \mathbf{b}_n), \quad (A.15)$$

and

$$p_\lambda(\sigma_n|\sigma_{<n}) = \mathrm{Softmax}(U_n\mathbf{h}_n + \mathbf{c}_n) \cdot \boldsymbol{\sigma}_n, \quad (A.16)$$

respectively. Note that the advantage of not using weight sharing for disordered systems is further demonstrated in the second entitled Benchmarking Recurrent Neural Network Cells below.

The research also considers a tensorized version of vanilla RNNs which replaces the concatenation operation in Equation (A.15) with the operation

$$\mathbf{h}_n = F(\boldsymbol{\sigma}_{n-1}^{\mathsf{T}} T_n \mathbf{h}_{n-1} + \mathbf{b}_n), \quad (A.17)$$

where $\sigma^{\mathsf{T}}$ is the transpose of $\sigma$, and the variational parameters $\lambda$ are $\{T_n\}_{n=1}^N$, $\{U_n\}_{n=1}^N$, $\{\mathbf{b}_n\}_{n=1}^N$, and $\{\mathbf{c}_n\}_{n=1}^N$. This form of tensorized RNN increases the expressiveness of the ansatz as illustrated in the section entitled Benchmarking Recurrent Neural Network Cells below.

For two-dimensional systems, the research makes use of a 2-dimensional extension of the recursion relation in vanilla RNNs

$$\mathbf{h}_{i,j} = F\Big(W_{i,j}^{(h)}[\mathbf{h}_{i-1,j}; \boldsymbol{\sigma}_{i-1,j}] + W_{i,j}^{(v)}[\mathbf{h}_{i,j-1}; \boldsymbol{\sigma}_{i,j-1}] + \mathbf{b}_{i,j}\Big). \quad (A.18)$$

To enhance the expressive power of the model, the research promotes the recursion relation to a tensorized form

$$\mathbf{h}_{i,j} = F\big([\boldsymbol{\sigma}_{i-1,j}; \boldsymbol{\sigma}_{i,j-1}]T_{i,j}[\mathbf{h}_{i-1,j}; \mathbf{h}_{i,j-1}] + \mathbf{b}_{i,j}\big). \quad (A.19)$$

Here, $T_{i,j}$ are site-dependent weight tensors that have dimension $4 \times 2d_h \times d_h$. It is noted that the coordinates ($i-1,j$) and ($i,j-1$) are path-dependent, and are given by the zigzag path, illustrated by the black arrows in FIG. 4A. Moreover, to sample configurations from the 2D tensorized RNNs, the same zigzag path as illustrated by the dashed arrows in FIG. 4A is used.

For models such as the Sherrington-Kirkpatrick model and the Wishart planted ensemble, every spin interacts with each other. To account for the long-distance nature of the correlations induced by these interactions, the research uses dilated RNNs, which are known to alleviate the vanishing gradient problem. Dilated RNNs are multi-layered RNNs that use dilated connections between spins to model long-term dependencies, as illustrated in FIG. 5. At each layer $1 \leq l \leq L$, e.g. layers 502, 504, 506, the hidden state is computed as

$$\mathbf{h}_n^{(l)} = F\left(W_n^{(l)}\left[\mathbf{h}_{\max(0,n-2^{l-1})}^{(l)}; \mathbf{h}_n^{(l-1)}\right] + \mathbf{b}_n^{(l)}\right).$$

Here $\mathbf{h}_n^{(0)} = \boldsymbol{\sigma}_{n-1}$ and the conditional probability is given by

$$p_\lambda(\sigma_n|\sigma_{<n}) = \text{Softmax}\left(U_n\mathbf{h}_n^{(L)} + \mathbf{c}_n\right) \cdot \boldsymbol{\sigma}_n.$$

In the research, the size of the hidden states $\mathbf{h}_n^{(l)}$, where $l > 0$, was chosen as constant and equal to $d_h$. The research also uses a number of layers $L = \lceil\log_2(N)\rceil$, where $N$ is the number of spins and $\lceil...\rceil$ is the ceiling function. This means that two spins are connected with a path whose length is bounded by $\mathcal{O}$ ($\log_2(N)$), which follows the spirit of the multi-scale renormalization ansatz. For more details on the advantage of dilated RNNs over tensorized RNNs (see section entitled Benchmarking Recurrent Neural Network Cells below).

It is finally noted that for all the RNN architectures in this research, accurate results were found using the exponential linear unit (ELU) activation function, defined as:

$$\text{ELU}(x) = \begin{cases} x, & \text{if } x \geq 0, \\ \exp(x) - 1, & \text{if } x < 0. \end{cases}$$

**Minimizing Variational Free Energy**

To implement the variational classical annealing algorithm, the research uses the variational free energy

$$F_\lambda(T) = \langle H_{target}\rangle_\lambda - TS_{classical}(p_\lambda), \qquad (A.20)$$

where the target Hamiltonian $H_{target}$ encodes the optimization problem and $T$ is the temperature. Moreover, $S_{classical}$ is the entropy of the distribution $p_\lambda$. To estimate $F_\lambda(T)$, the research takes $N_s$ exact samples $\sigma^{(i)} \sim p_\lambda$ ($i = 1, ..., N_s$) drawn from the RNN and evaluate

$$F_\lambda(T) \approx \frac{1}{N_s}\sum_{i=1}^{N_s} F_{loc}\left(\boldsymbol{\sigma}^{(i)}\right),$$

where the local free energy is $F_{loc}(\sigma) = H_{target}(\sigma) + T\log(p_\lambda(\sigma))$. Similarly, the gradients are given by

$$\partial_\lambda F_\lambda(T) \approx \frac{1}{N_s}\sum_{i=1}^{N_s} \partial_\lambda\log\left(p_\lambda\left(\boldsymbol{\sigma}^{(i)}\right)\right)$$
$$\times \left(F_{loc}\left(\boldsymbol{\sigma}^{(i)}\right) - F_\lambda(T)\right),$$

where the research subtracts $F_\lambda(T)$ to reduce noise in the gradients. It is noted that this variational scheme exhibits a zero-variance principle, namely that the local free energy variance per spin

$$\sigma_F^2 \equiv \frac{\text{var}(\{F_{loc}(\boldsymbol{\sigma})\})}{N}, \qquad (A.21)$$

becomes zero when $p_\lambda$ matches the Boltzmann distribution, provided that mode collapse is avoided.

The gradient updates are implemented using the Adam optimizer. Furthermore, the computational complexity of VCA for one gradient descent step is $\mathcal{O}(N_s \times N \times d_h^2)$ for 1D RNNs and 2D RNNs (both vanilla and tensorized versions) and $\mathcal{O}(N_s \times N\log(N) \times d_h^2)$ for dilated RNNs. Consequently, VCA has lower computational cost than VQA, which is implemented using VMC (see the Methods section).

Finally, it is noted that in these implementations no training steps are performed at the end of annealing for both VCA and VQA.

**Variational Monte Carlo**

The main goal of Variational Monte Carlo (VMC) is to approximate the ground state of a Hamiltonian $\hat{H}$ through the iterative optimization of an ansatz wave function $|\Psi_\lambda\rangle$. The VMC objective function is given by

$$E \equiv \frac{\langle \Psi_\lambda | \hat{H} | \Psi_\lambda \rangle}{\langle \Psi_\lambda | \Psi_\lambda \rangle}. \quad (A.22)$$

It is noted that an important class of stoquastic many-body Hamiltonians has ground states $|\Psi\rangle$ with strictly real and positive amplitudes in the standard product spin basis. These ground states can be written down in terms of probability distributions,

$$|\Psi\rangle = \sum_\sigma \Psi(\sigma)|\sigma\rangle = \sum_\sigma \sqrt{P(\sigma)}\,|\sigma\rangle.$$

To approximate this family of states, the research uses an RNN wave function, namely $\Psi_\lambda(\sigma) = \sqrt{p_\lambda(\sigma)}$. Extensions to complex-valued RNN wave functions are defined in the existing literature, and results on their ability to simulate variational quantum annealing of non-stoquastic Hamiltonians have been reported elsewhere. These families of RNN states are normalized by construction (i.e., $\langle \Psi_\lambda | \Psi_\lambda \rangle = 1$) and allow for accurate estimates of the energy expectation value. By taking $N_s$ exact samples $\sigma^{(i)} \sim p_\lambda$ $(i = 1, ..., N_s)$, it follows that

$$E \approx \frac{1}{N_s} \sum_{i=1}^{N_s} E_{loc}\left(\sigma^{(i)}\right).$$

The local energy is given by

$$E_{loc}(\sigma) = \sum_{\sigma'} H_{\sigma\sigma'} \frac{\Psi_\lambda(\sigma')}{\Psi_\lambda(\sigma)}, \quad (A.23)$$

where the sum over $\sigma'$ is tractable when the Hamiltonian $\hat{H}$ is local. Similarly, the energy gradients can be estimated as

$$\partial_\lambda E = \frac{2}{N_s} \sum_{i=1}^{N_s} \partial_\lambda \log\left(\Psi_\lambda\left(\sigma^{(i)}\right)\right)\left(E_{loc}\left(\sigma^{(i)}\right) - E\right).$$

Here, the term $E$ is subtracted to reduce noise in the stochastic estimation of the gradients without introducing a bias. In fact, when the ansatz is close to an eigenstate of $\hat{H}$, then $E_{loc}(\sigma) \approx E$, which means that the variance of gradients Var $(\partial_{\lambda_j} E) \approx 0$ for each variational parameter $\lambda_j$. It is noted that this is similar in spirit to the control variate methods in Monte Carlo and to the baseline methods in reinforcement learning.

Similarly to the minimization scheme of the variational free energy in the Methods section, VMC also exhibits a zero-variance principle, where the energy variance per spin

$$\sigma^2 \equiv \frac{\text{var}(\{E_{loc}(\sigma)\})}{N}, \quad (A.24)$$

becomes zero when $|\Psi_\lambda\rangle$ matches an excited state of $\hat{H}$, which thanks to the minimization of the variational energy $E$ is likely to be the ground state $|\Psi_G\rangle$.

The gradients $\partial_\lambda \log(\Psi_\lambda(\sigma))$ are numerically computed using automatic differentiation. An Adam optimizer is used to perform gradient descent updates, with a learning rate $\eta$, to optimize the variational parameters $\lambda$ of the RNN wave function. It is noted that in the presence of $\mathcal{O}$ ($N$) non-diagonal elements in a Hamiltonian $\hat{H}$, the local energies $E_{loc}(\sigma)$ have $\mathcal{O}$ ($N$) terms (see Equation (A.23)). Thus, the computational complexity of one gradient descent step is $\mathcal{O}(N_s \times N^2 \times d_h^2)$ for 1D RNNs and 2D RNNs (both vanilla and tensorized versions).

**Simulated Quantum Annealing and Simulated Annealing**

Simulated Quantum Annealing is a standard quantum-inspired classical technique that has traditionally been used to benchmark the behavior of quantum annealers. It is usually implemented via the path-integral Monte Carlo method, a Quantum Monte Calo (QMC) method that simulates equilibrium properties of quantum systems at finite temperature. To illustrate this method, consider a $D$-dimensional time-dependent quantum Hamiltonian

$$\widehat{H}(t) = -\sum_{i,j} J_{ij}\, \hat{\sigma}_i^z \hat{\sigma}_j^z - \Gamma(t) \sum_{i=1}^{N} \hat{\sigma}_i^x,$$

where $\Gamma(t) = \Gamma_0(1 - t)$ controls the strength of the quantum annealing dynamics at a time $t \in [0,1]$. By applying the Suzuki-Trotter formula to the partition function of the quantum system,

$$Z = \mathrm{Trexp}\{-\beta \widehat{H}(t)\}, \qquad (A.25)$$

with the inverse temperature $\beta = \dfrac{1}{T}$, the $D$-dimensional quantum Hamiltonian can be mapped onto a $(D + 1)$ classical system consisting of $P$ coupled replicas (Trotter slices) of the original system:

$$H_{D+1}(t) = -\sum_{k=1}^{P} \left( \sum_{i,j} J_{ij}\, \sigma_i^k \sigma_j^k + J_\perp(t) \sum_{i=1}^{N} \sigma_i^k\, \sigma_i^{k+1} \right),$$

where $\sigma_i^k$ is the classical spin at site $i$ and replica $k$. The term $J_\perp(t)$ corresponds to uniform coupling between $\sigma_i^k$ and $\sigma_i^{k+1}$ for each site $i$, such that

$$J_\perp(t) = -\frac{PT}{2} \ln\left( \tanh\left( \frac{\Gamma(t)}{PT} \right) \right).$$

It is noted that periodic boundary conditions $\sigma^{P+1} \equiv \sigma^1$ arise because of the trace in Equation (A.25).
Interestingly, $Z$ can be approximated with an effective partition function $Z_p$ at temperature $PT$ given by :

$$Z_p \propto \mathrm{Trexp}\left\{ -\frac{H_{D+1}(t)}{PT} \right\},$$

which can now be simulated with a standard Metropolis-Hastings Monte Carlo algorithm. A key element to this algorithm is the energy difference induced by a single spin flip at site $\sigma_i^k$, which is equal to

$$\Delta_i E_{local} = 2 \sum_j J_{ij}\, \sigma_i^k \sigma_j^k + 2J_\perp(t)\big(\sigma_i^{k-1}\sigma_i^k + \sigma_i^k \sigma_i^{k+1}\big).$$

Here, the second term encodes the quantum dynamics. In these simulations, single spin flip (local) moves applied to all sites in all slices are considered. A global move, which means flipping a spin at location $i$ in every slice $k$ can also be performed. Clearly this has no impact on the term dependent on $J_\perp$, because it contains only terms quadratic in the flipped spin, so that

$$\Delta_i E_{global} = 2 \sum_{k=1}^{P} \sum_j J_{ij}\, \sigma_i^k \sigma_j^k.$$

In summary, a single Monte Carlo step (MCS) consists of first performing a single local move on all sites in each $k$-th slice and on all slices, followed by a global move for all sites. For the SK model and the WPE model studied in the research, the research uses $P = 100$, whereas for the EA model the research uses $P = 20$ similarly to existing approaches in the literature. Before starting the quantum annealing schedule, the research first thermalizes the system by performing SA from a temperature $T_0 = 3$ to a final temperature $1/P$ (so that $PT = 1$). This is done in 60 steps, where at each temperature 100 Metropolis moves on each site are performed.

A SQA is then performed using a linear schedule that decreases the field from $\Gamma_0$ to a final value close to zero $\Gamma(t = 1) = 10^{-8}$, where five local and global moves are performed for each value of the magnetic field $\Gamma(t)$, so that it is consistent with the choice of $N_{train} = 5$ for VCA (see above). Thus, the number of MCS is equal to five times the number of annealing steps.

For the standalone SA, the temperature is decreased from $T_0$ to $T(t = 1) = 10^{-8}$. Here, a single MCS consists of a Monte Carlo sweep, i.e., attempting a spin-flip for all sites. For each thermal annealing step, five MCS are performed, and hence similar to SQA, the number of MCS is equal to five times the number of annealing steps. Furthermore, a warm-up step for SA is performed, by performing $N_{warmup}$ MCS to equilibrate the Markov Chain at the initial temperature $T_0$ and to provide a consistent choice with VCA (see above).

**Numerical Proof of Principle of Adiabaticity**

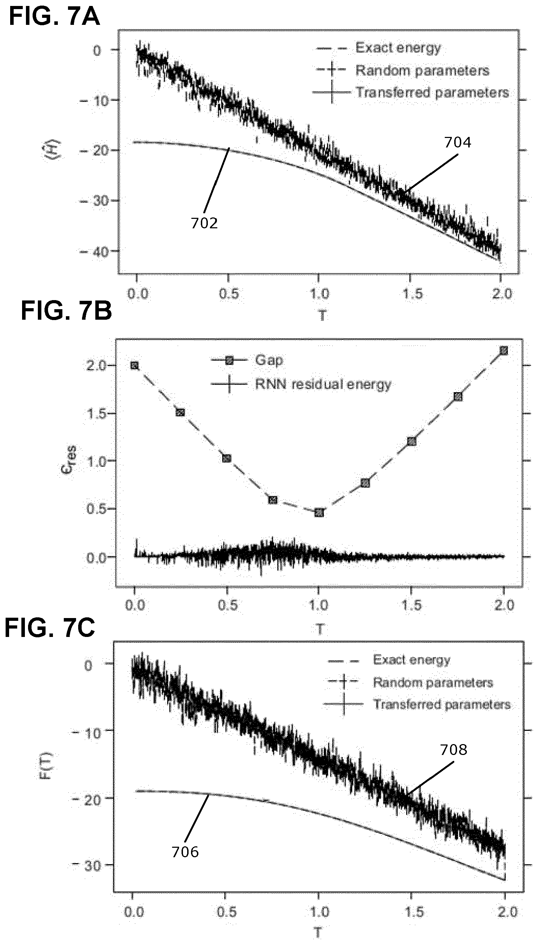

As demonstrated in the results section, both VQA and VCA are effective at finding the classical ground state of disordered spin chains. This section pf the present application further describes the adiabaticity of both VQA and VCA. First, VQA is performed on the uniform ferromagnetic Ising chain (i.e., $J_{i,i+1} = 1$) with $N = 20$ spins and open boundary conditions with an initial transverse field $\Gamma_0 = 2$. Here, a tensorized RNN wave function is used with weight sharing across sites of the chain. The value chosen for $N_{annealing} = 1024$. FIG. 7A shows that the variational energy tracks the exact ground energy throughout the annealing process with high accuracy. It is also observed that optimizing an RNN wave function from scratch, i.e., randomly reinitializing the parameters of the model at each new value of the transverse magnetic field is not optimal. This observation underlines the importance of transferring the parameters of the wave function ansatz after each annealing step. Furthermore, FIG. 7B illustrates that the RNN wave function's residual energy is much lower compared to the gap throughout the annealing process, which shows that VQA remains adiabatic for a large number of annealing steps.

FIG.s 7A-C show numerical evidence of adiabaticity on the uniform Ising chain with N = 20 spins for VQA in FIG.s 7A and 7B and VCA in FIG. 7C. FIG. 7A graphs variational energy of RNN wave function against the transverse magnetic field $\Gamma$, with $\lambda$ initialized using the parameters optimized in the previous annealing step (transferred parameters, shown by curve 702) and with random parameter reinitialization (random parameters, shown by curve 704). These strategies are compared with the exact energy obtained from exact diagonalization (dashed black line). FIG. 7B graphs residual energy of the RNN wave function against the transverse field $\Gamma$. Throughout annealing with VQA, the residual energy is always much smaller than the gap within error bars. FIG. 7C graphs variational free energy against temperature $T$ for a VCA run with $\lambda$ initialized using the parameters optimized in the previous annealing step (transferred parameters, shown by curve 706) and with random reinitialization (random parameters, shown by curve 708).

Similarly, in FIG. 7C VCA is performed with an initial temperature $T_0 = 2$ on the same model, the same system size, the same ansatz, and the same number of annealing steps. An excellent agreement between the RNN wave function free energy and the exact free energy is observed, highlighting once again the adiabaticity of the emulation of classical annealing, as well as the importance of transferring the parameters of the ansatz after each annealing step. Taken all together, the results in FIG. 7 support the notion that VQA and VCA evolutions can be adiabatic.

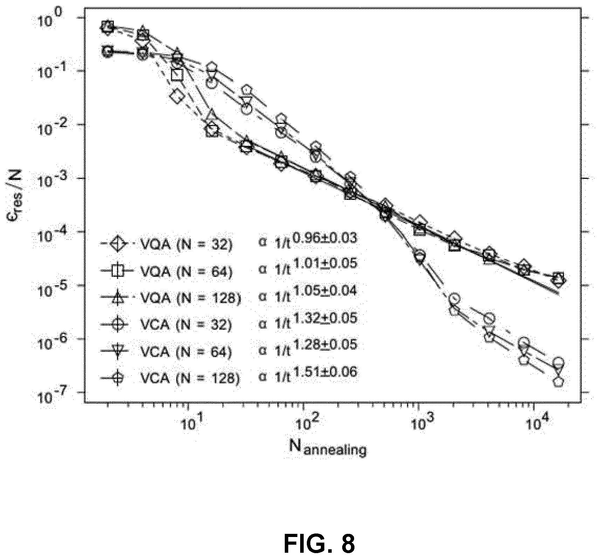

FIG. 8 illustrates the residual energies per site against the number of annealing steps $N_{annealing}$. Here, the research considers $J_{i,i+1}$ uniformly sampled from the discrete set {-1, +1}, where the ground state configuration is disordered and the ground state energy is given by $E_G = -\sum_{i=1}^{N-1} |J_{i,i+1}| = -(N-1)$. The decay exponents for VCA are in the interval 1.3 - 1.6 and the VQA exponent are approximately 1. These exponents also suggest an asymptotic speed-up compared to SA and coherent quantum annealing, where the residual energies follow a logarithmic law. The latter confirms the robustness of the observations in FIG. 3.

FIG. 8 shows variational annealing on random Ising chains, where the research represents the residual energy per site $\varepsilon_{res}/N$ vs $N_{annealing}$ for both VQA and VCA. The system sizes are $N = 32,64,128$ and the research uses random discrete couplings $J_{i,i+1} \in$ {-1,1}.

**Variational Adiabatic Theorem**

In this section, a sufficient condition for the number of gradient descent steps needed to maintain the variational ansatz close to the instantaneous ground state throughout the VQA simulation is derived. First, consider a variational wave function $|\Psi_\lambda\rangle$ and the following time-dependent Hamiltonian:

$$\widehat{H}(t) = \widehat{H}_{\text{target}} + f(t)\widehat{H}_D,$$

The goal is to find the ground state of the target Hamiltonian $\hat{H}_{\text{target}}$ by introducing quantum fluctuations through a driving Hamiltonian $\hat{H}_D$, where $\hat{H}_D \gg \hat{H}_{\text{target}}$. Here $f(t)$ is a decreasing schedule function such that $f(0) = 1$, $f(1) = 0$ and $t \in$ [0,1].

Let $F(\lambda, t) = \langle\Psi_\lambda|\hat{H}(t)|\Psi_\lambda\rangle$, and $E_G(t)$, $E_E(t)$ the instantaneous ground/excited state energy of the Hamiltonian $\hat{H}(t)$, respectively. The instantaneous energy gap is defined as $g(t) \equiv E_E(t) - E_G(t)$.

To simplify discussion, the case of a target Hamiltonian that has a non-degenerate ground state is considered. Here, the variational wave function is decomposed as:

$$|\Psi_\lambda\rangle = \left(1 - a(t)\right)^{\frac{1}{2}}|\Psi_G(t)\rangle + a(t)^{\frac{1}{2}}|\Psi_\perp(t)\rangle,$$

where $|\Psi_G(t)\rangle$ is the instantaneous ground state and $|\Psi_\perp(t)\rangle$ is a superposition of all the instantaneous excited states. From this decomposition, one can show that:

$$a(t) \leq \frac{E(\lambda,t) - E_G(t)}{g(t)}. \text{ (A.26)}$$

As a consequence, in order to satisfy adiabaticity, i.e., $|\langle\Psi_\perp(t)|\Psi_\lambda\rangle|^2 \ll 1$ for all times $t$, then one should have $a(t) < \varepsilon \ll 1$ where $\varepsilon$ is a small upper bound on the overlap between the variational wave function and the excited states. This means that the success probability $P_{success}$ of obtaining the ground state at $t = 1$ is bounded from below by $1 - \varepsilon$. From Equation (A.26), to satisfy $a(t) < \varepsilon$, it is sufficient to have:

$$\epsilon_{res}(\lambda, t) \equiv E(\lambda, t) - E_G(t) < \epsilon g(t). \text{ (A.27)}$$

To satisfy the latter condition, a slightly stronger condition is provided as follows: $\epsilon_{res}(\lambda, t) < \frac{\epsilon g(t)}{2}$ .(A.28)

In the derivation of a sufficient condition on the number of gradient descent steps to satisfy the previous requirement, the following set of assumptions are used:

- (A1) $\left|\partial_t^k E_G(t)\right|, \left|\partial_t^k g(t)\right|, \left|\partial_t^k f(t)\right| \leq \mathcal{O}\left(\text{poly}(N)\right)$ , for all $0 \leq t \leq 1$ and for $k \in$ {1,2}.

- (A2) $|\langle\Psi_\lambda|\hat{H}_D|\Psi_\lambda\rangle| \leq \mathcal{O}$ (poly($N$)) for all possible parameters $\lambda$ of the variational wave function.

- (A3) No anti-crossing during annealing, i.e., $g(t) \neq 0$, for all $0 \leq t \leq 1$.

- **(A4)** The gradients $\partial_\lambda E(\lambda, t)$ can be calculated exactly, are $L(t)$-Lipschitz with respect to $\lambda$ and $L(t) \leq \mathcal{O}$ (poly($N$)) for all $0 \leq t \leq 1$.

- **(A5)** Local convexity, i.e., close to convergence when $\varepsilon_{res}(\lambda, t) < \varepsilon g(t)$, the energy landscape of $F(\lambda, t)$ is convex with respect to $\lambda$, for all $0 < t \leq 1$.

Note that this assumption is $\varepsilon$-dependent.

- **(A6)** The parameters vector $\lambda$ is bounded by a polynomial in $N$. i.e., $\|\lambda\| < \mathcal{O}$ (poly($N$)), where "$\|.\|$" is defined as the euclidean $L_2$ norm.
- **(A7)** The variational wave function $|\Psi_\lambda\rangle$ is expressive enough, i.e.,

$$\min_{\lambda} \epsilon_{res}(\lambda, t) < \frac{\epsilon g(t)}{4}, \quad \forall t \in [0,1].$$

Note that this assumption is also $\varepsilon$-dependent.
- **(A8)** At $t = 0$, the energy landscape of $F(\lambda, t = 0)$ is globally convex with respect to $\lambda$.

**Theorem:** Given the assumptions **(A1)** to **(A8)**, a sufficient (but not necessary) number of gradient descent steps $N_{steps}$ to satisfy the condition in Equation (A.28) during the VQA protocol, is bounded as:

$$\mathcal{O}\left(\frac{\text{poly}(N)}{\epsilon \min_{\{t_n\}}(g(t_n))}\right) \leq N_{\text{steps}} \leq \mathcal{O}\left(\frac{\text{poly}(N)}{\epsilon^2 \min_{\{t_n\}}(g(t_n))^2}\right),$$

where $(t_1, t_2, t_3, ...)$ is an increasing finite sequence of time steps, satisfying $t_1 = 0$ and $t_{n+1} = t_n + \delta t_n$, where

$$\delta t_n = \mathcal{O}\left(\frac{\epsilon g(t_n)}{\text{poly}(N)}\right).$$

**Proof:** In order to satisfy the condition Equation (A.28) during the VQA protocol, following steps were followed:

- Step 1 (warm-up step): a prepare the variational wave function at the ground state at $t = 0$ is prepared such that Equation (A.28) is verified at time $t = 0$.
- Step 2 (annealing step): the time $t$ is changed by an infinitesimal amount $\delta t$, so that the condition (27) is verified at time $t + \delta t$.
- Step 3 (training step): the parameters of the variational wave function are tuned using gradient descent, so that the Equation (A.28) is satisfied at time $t + \delta t$.
- Step 4: steps 2 and 3 are loop over until arriving at $t = 1$, where it is expected to obtain the ground state energy of the target Hamiltonian.

Starting first with step 2 assuming that step 1 is verified. In order to satisfy the requirement of this step at time $t$, then $\delta t$ has to be chosen small enough so that

$$\epsilon_{res}(\lambda_t, t + \delta t) < \epsilon g(t + \delta t) \text{ (A.29)}$$

is verified given that the condition (A.28) is satisfied at time $t$. Here, $\lambda_t$ are the parameters of the variational wave function that satisfies the condition (A.28) at time $t$. To get a sense of how small $\delta t$ should be, a Taylor expansion is performed, while fixing the parameters $\lambda_t$, to get:

$$\epsilon_{res}(\lambda_t, t + \delta t)$$
$$= \epsilon_{res}(\lambda_t, t) + \partial_t \epsilon_{res}(\lambda_t, t)\delta t + \mathcal{O}((\delta t)^2),$$
$$< \frac{\epsilon g(t)}{2} + \partial_t \epsilon_{res}(\lambda_t, t)\delta t + \mathcal{O}((\delta t)^2),$$

where Equation (A.28) is used to go from the second line to the third line. Here, $\partial_t \epsilon_{res}(\lambda_t, t) = \partial_t f(t)\langle \hat{H}_D \rangle - \partial_t E_G(t)$. To satisfy the condition (27) at time $t + \delta t$, it is enough to have the right hand side of the previous inequality to be much smaller than the gap at $t + \delta t$, i.e.,

$$\frac{\epsilon g(t)}{2} + \partial_t \epsilon_{res}(\lambda_t, t)\delta t + \mathcal{O}((\delta t)^2) < \epsilon g(t + \delta t).$$

By Taylor expanding the gap, the following is obtain:

$$\partial_t \epsilon_{res}(\lambda_t, t)\delta t + \mathcal{O}((\delta t)^2) < \frac{\epsilon g(t)}{2} + \epsilon \partial_t g(t)\delta t + \mathcal{O}((\delta t)^2),$$

hence, it is enough to satisfy the following condition:

$$\left(\partial_t \epsilon_{res}(\lambda_t, t) - \epsilon \partial_t g(t)\right)\delta t + \mathcal{O}((\delta t)^2) < \frac{\epsilon g(t)}{2}. \text{(A.30)}$$

Using the Taylor-Laplace formula, one can express the Taylor remainder term $\mathcal{O}((\delta t)^2)$ as follows:

$$\mathcal{O}((\delta t)^2) = \int_t^{t+\delta t} (\tau - t) A(\tau)d\tau,$$

where $A(\tau) = \partial_\tau^2 \epsilon_{res}(\lambda_t, \tau) - \epsilon \partial_\tau^2 g(\tau) = \partial_\tau^2 f(\tau)\langle \hat{H}_D \rangle - \partial_\tau^2 E_G(\tau) - \epsilon \partial_\tau^2 g(\tau)$ and $\tau$ is between $t$ and $t + \delta t$. The last expression can be bounded as follows:

$$\mathcal{O}((\delta t)^2) \le \int_t^{t+\delta t} (\tau - t) |A(\tau)|d\tau \le \frac{(\delta t)^2}{2} sup(|A|).$$

where "$sup(|A|)$" is the supremum of $|A|$ over the interval [0,1]. Given assumptions **(A1)** and **(A2)**, then $sup(|A|)$ is bounded from above by a polynomial in $N$, hence:

$$\mathcal{O}((\delta t)^2) \le \mathcal{O}\left(\text{poly}(N)\right)(\delta t)^2 \le \mathcal{O}\left(\text{poly}(N)\right)\delta t,$$

where the last inequality holds since $\delta t \le 1$ as $t \in [0,1]$, while it is noted that it is not necessarily tight. Furthermore, since $(\partial_t \epsilon_{res}(\lambda_t, t) - \varepsilon \partial_t g(t))$ is also bounded from above by a polynomial in $N$ (according to assumptions **(A1)** and **(A2)**), then in order to satisfy Equation (A.30), it is sufficient to require the following condition:

$$\mathcal{O}\left(\text{poly}(N)\right)\delta t < \frac{\epsilon g(t)}{2}.$$

Thus, it is sufficient to take:

$$\delta t = \mathcal{O}\left(\frac{\epsilon g(t)}{\text{poly}(N)}\right). \text{(A.31)}$$

By taking account of assumption **(A3)**, $\delta t$ can be taken non-zero for all time steps $t$. As a consequence, assuming the condition (31) is verified for a non-zero $\delta t$ and a suitable $\mathcal{O}$ (1) prefactor, then the condition (29) is also verified.

Now processing can now move to step 3. Here, a number of gradient descent steps $N_{train}(t)$ are applied to find a new set of parameters $\lambda_{t+\delta t}$ such that:

$$\epsilon_{res}(\lambda_{t+\delta t}, t + \delta t) = E(\lambda_{t+\delta t}, t + \delta t) - E_G(t + \delta t) < \frac{\epsilon g(t+\delta t)}{2}, \text{(A.32)}$$

To estimate the scaling of the number of gradient descent steps $N_{train}(t)$ needed to satisfy (32), the assumptions **(A4)** and **(A5)** are used. The assumption **(A5)** is reasonable providing that the variational energy $E(\lambda_t, t + \delta t)$ is very close to the ground state energy $E_G(t + \delta t)$, as given by Equation (A.29). Using the above assumptions and assuming that the learning rate $\eta(t) = 1/L(t)$, a well-known result in convex optimization can be used (as described in (Nesterov Y. (2018) Smooth Convex Optimization. In: Lectures on Convex Optimization. Springer Optimization and Its Applications, vol 137. Springer, Cham. https://doi.org/10.1007/978-3-319-91578-4_2), which states the following inequality:

$$E(\tilde{\lambda}_t, t + \delta t) - \min_{\lambda} E(\lambda, t + \delta t) \le \frac{2L(t)\|\lambda_t - \lambda^*_{t+\delta t}\|^2}{N_{train}(t) + 4}.$$

Here, $\tilde{\lambda}_t$ are the new variational parameters obtained after applying $N_{train}(t + \delta t)$ gradient descent steps starting from $\lambda_t$. Furthermore, $\lambda^*_{t+\delta t}$ are the optimal parameters such that:

$$E(\lambda^*_{t+\delta t}, t + \delta t) = \min_{\lambda} E(\lambda, t + \delta t).$$

Since the Lipschitz constant $L(t) \le \mathcal{O}$ (poly($N$)) (assumption **(A4)**) and $\|\lambda_t - \lambda^*_{t+\delta t}\|^2 \le \mathcal{O}(\text{poly}(N))$ (assumption **(A6)**), one can take

$$N_{train}(t + \delta t) = \mathcal{O}\left(\frac{\text{poly}(N)}{\epsilon g(t+\delta t)}\right), \text{(A.33)}$$

with a suitable $\mathcal{O}$ (1) prefactor, so that:

$$E(\tilde{\lambda}_t, t + \delta t) - \min_{\lambda} E(\lambda, t + \delta t) < \frac{\epsilon g(t + \delta t)}{4}.$$

Moreover, by assuming that the variational wave function is expressive enough (assumption **(A7)**), i.e.,

$$\min_{\lambda} E(\lambda, t + \delta t) - E_G(t + \delta t) < \frac{\epsilon g(t + \delta t)}{4},$$

it can then be deduced, by taking $\lambda_{t+\delta t} \equiv \tilde{\lambda}_t$ and summing the two previous inequalities, that:

$$E(\lambda_{t+\delta t}, t + \delta t) - E_G(t + \delta t) < \frac{\epsilon g(t + \delta t)}{2}.$$

It is recalled that in step 1, the variational ansatz is initially prepared to satisfy Equation (A.28) at $t = 0$. This can take advantage of the assumption **(A4)**, where the gradients are $L(0)$-Lipschitz with $L(0) \le \mathcal{O}$ (poly($N$)). The convexity assumption **(A8)** can also be used, and it can be shown that a sufficient number of gradient descent steps to satisfy condition (30) at $t = 0$ is estimated as:

$$N_{warmup} \equiv N_{train}(0) = \mathcal{O}\left(\frac{\text{poly}(N)}{\epsilon g(0)}\right).$$

The latter can be obtained in a similar way as in Equation (A.33).

In conclusion, the total number of gradient steps $N_{\text{steps}}$ to evolve the Hamiltonian $\hat{H}(0)$ to the target Hamiltonian $\hat{H}(1)$, while verifying the Equation (A.28) is given by:

$$N_{steps} = \sum_{n=1}^{N_{annealing}+1} N_{train}(t_n),$$

where each $N_{train}(t_n)$ satisfies the requirement (33). The annealing times $\{t_n\}_{n=1}^{N_{annealing}+1}$ are defined such that $t_1 \equiv 0$ and $t_{n+1} \equiv t_n + \delta t_n$. Here, $\delta t_n$ satisfies

$$\delta t_n = \mathcal{O}\left(\frac{\epsilon g(t_n)}{\text{poly}(N)}\right).$$

$N_{annealing}$ is considered the smallest integer such that $t_{Nannealing} + \delta t_{Nannealing} \geq 1$, in this case, defining $t_{Nannealing+1} = 1$, indicating the end of annealing. Thus, $N_{annealing}$ is the total number of annealing steps. Taking this definition into account, then one can show that

$$N_{annealing} \leq \frac{1}{\min_{\{t_n\}}(\delta t_n)} + 1.$$

Using Equations (A.31) and (A.33) and the previous inequality, $N_{steps}$ can be bounded from above as:

$$
\begin{aligned}
N_{\text{steps}} &\leq \left(N_{annealing} + 1\right) \max_{\{t_n\}}\left(N_{train}(t_n)\right) \\
&\leq \left(\frac{1}{\min_{\{t_n\}}(\delta t_n)} + 2\right) \max_{\{t_n\}}\left(N_{train}(t_n)\right) \\
&\leq \mathcal{O}\left(\frac{\text{poly}(N)}{\epsilon^2 \min_{\{t_n\}}\left(g(t_n)\right)^2}\right),
\end{aligned}
$$

where the transition from line 2 to line 3 is valid for a sufficiently small $\epsilon$ and $\min_{\{tn\}}(g(t_n))$. Furthermore, $N_{\text{steps}}$ can also be bounded from below as:

$$N_{\text{steps}} \geq \max_{\{t_n\}}\left(N_{train}(t_n)\right) = \mathcal{O}\left(\frac{\text{poly}(N)}{\epsilon \min_{\{t_n\}}\left(g(t_n)\right)}\right).$$

Note that the minimum in the previous two bounds are taken over all the annealing times $t_n$ where $1 \leq n \leq N_{annealing} + 1$.

In this derivation of the bound on $N_{steps}$, it has been assumed that the ground state of $\hat{H}_{target}$ is non-degenerate, so that the gap does not vanish at the end of annealing (i.e., $t = 1$). In the case of degeneracy of the target ground state, the gap $g(t)$ can be defined by considering the lowest energy level that does not lead to the degenerate ground state.

It is also worth noting that the assumptions of this derivation can be further expanded and improved. In particular, the gradients of $E(\lambda, t)$ are computed stochastically (see the Methods section), as opposed to the assumption (**A4**) where the gradients are assumed to be known exactly. To account for noisy gradients, it is possible to use convergence bounds of stochastic gradient descent to estimate a bound on the number of gradient descent steps. Secondorder optimization methods such as stochastic reconfiguration/natural gradient can potentially show a significant advantage over first-order optimization methods, in terms of scaling with the minimum gap of the time-dependent Hamiltonian $\hat{H}(t)$.

**Additional Results**

In this section of the present application, additional results connected with the EA and fully connected models previously described are provided.

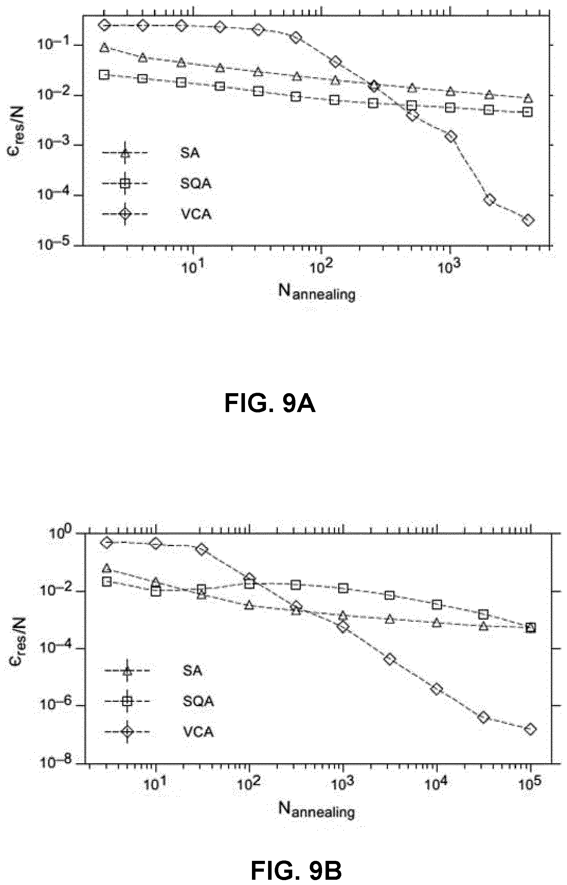

FIG. 9A shows a comparison between SA, SQA and VCA on a single instance of the EA model with system size (60 × 60). 1000 independent runs are performed for SA and, 50 annealing runs for SQA to estimate error bars. For VCA, error bars are estimated using $10^6$ configurations obtained from the RNN at the end of annealing.

In FIG. 9A, additional evidence that VCA is superior to SA and SQA is provided on a larger system size compared to FIG. 4C for the EA model. Here, the comparison is performed for a system size 60 × 60. A single disorder realization is used to avoid extra computational resources. In this case, the residual energy $\varepsilon_{res}$ is defined as follows:

$$\epsilon_{\mathrm{res}} = \left\langle \widehat{H} \right\rangle - E_G, \, (34), (A.34)$$

where $\langle ... \rangle$ is the arithmetic mean over the different runs for SA and SQA and over the samples obtained at the end of annealing from the RNN in the VCA protocol. The results in FIG. 9A illustrates that VCA is still superior, in terms of the average residual energy, to SA and SQA for the range of $N_{annealing}$ shown in the plot.

FIG. 9B shows a similar comparison as in FIG. 9A on a single realization of the SK model with N = 100 spins.

In FIG. 9B, a comparison between SA, SQA and VCA is shown on the SK model with $N$ = 100 spins. Similar to FIG. 6A, the same comparison is done but for an order of magnitude larger $N_{annealing}$. Here, a single instance is used to avoid using excessive compute resources. The same definition of $\varepsilon_{res}$ in Equation (A.34) is used. Similar to the conclusion of FIG. 6A, it can still be seen that VCA provides more accurate solutions on average compared to SA and SQA.

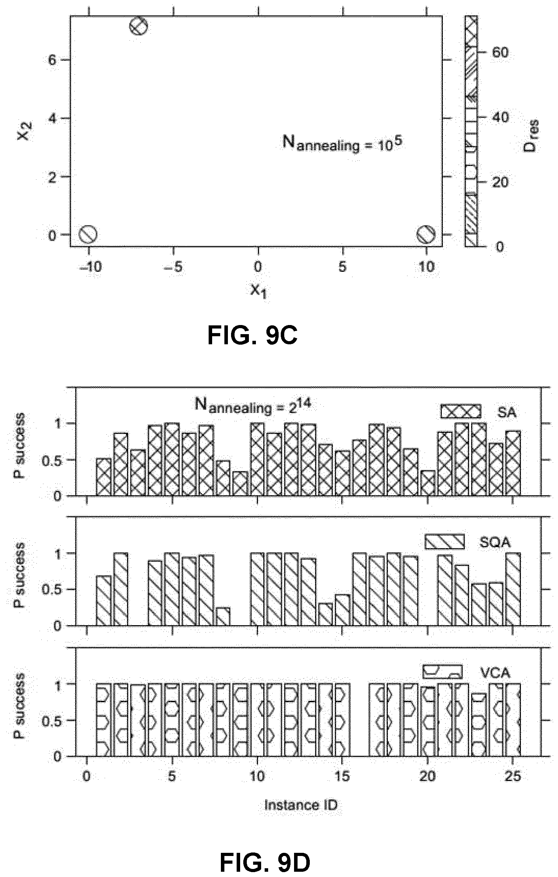

FIG. 9C shows a plot of the two principal components after performing principal component analysis (PCA) on 50000 configurations obtained from the RNN, at the end of VCA protocol when applied to the SK model with $N$ = 100 spins as in FIG. 9B for $N_{annealing}$ = $10^5$. The vertical bar represents the distance $D_{res}$, defined in Equation (A.35), from the two ground state configurations.

To show the advantage of autoregressive sampling of RNNs, PCA is performed on the samples obtained from the RNN at the end of annealing after $N_{annealing}$ = $10^5$ steps. The results in FIG. 9C are obtained. Interestingly, it is observed that the RNN recovers the two ground state configurations $\pm\sigma^*$ as demonstrated by the two clusters at $X_2 = 0$. Here, the distance of a configuration $\sigma$ from the two ground states $\pm\sigma^*$ is defined as

$$D_{res} = \sqrt{\|\sigma - \sigma^*\|_1 \|\sigma + \sigma^*\|_1}, \, (A.35)$$

where $\|.\|_1$ is the $L_1$ norm. The vertical bar of FIG. 9C represents the distance $D_{res}$. These observations show that RNNs are indeed capable of capturing and sampling multiple modes, as opposed to Markov-chain Monte Carlo methods where sampling multiple modes at very low temperatures is often a challenging task when studying spin-glass models.

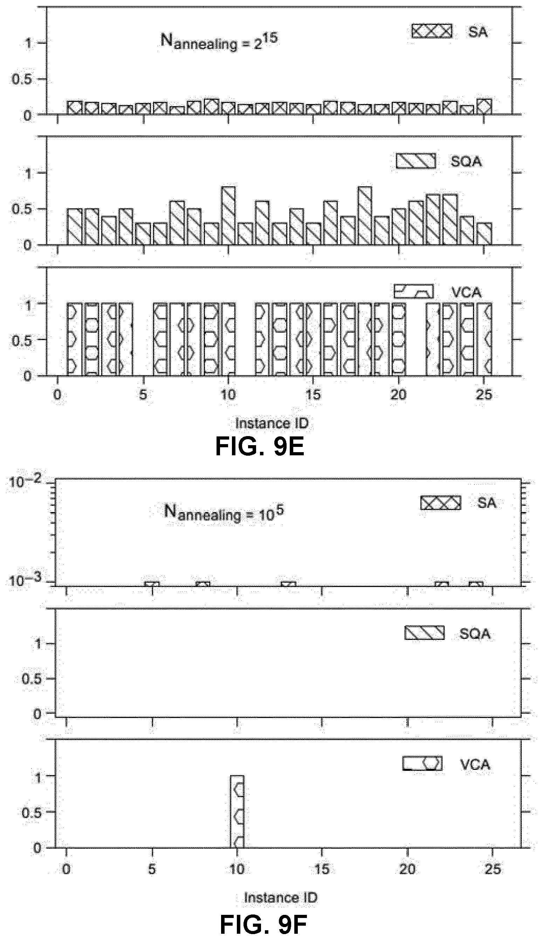

A detailed analysis of the results of FIGs. 9D, 9E and 9F is finally demonstrated. FIGs. 9D, 9E and 9F display the probability of success on the 25 instances of the SK and WPE models used respectively in Figs. 6D, 6E and 6F. Each probability of success $P_{success}$ is computed using 1000 data points. Here, the probabilities of success for each instance configuration that the research attempts to solve using SA, SQA and VCA are provided. It is noted that the probability of success is computed as the ratio of the obtained ground states over the total number of configurations that are obtained for each method.

The results for SK ($N$ = 100 spins) are shown in FIG. 9D, where it is clear that the RNN provides a very high probability of success compared to SA and SQA on the majority of instances. The same behavior for WPE ($\alpha$ = 0.5 and $N$ = 32 spins) is observed in FIG. 9E. It is worth noting that VCA is not successful at solving a few instances, which could be related to the need to increase $N_{annealing}$ or to the need to improve the training scheme or representational power of dilated RNNs. Finally, in FIG. 9F, it can be seen that WPE ($\alpha$ = 0.5 and $N$ = 32 spins) is indeed a challenging system for all the methods considered in this research. Interestingly, the it can been seen that VCA manages to get a very high probability of success on one instance, while failing at solving the other instances. Furthermore, it is noted that SQA was not successful for all the instances, while SA succeeds at finding the ground state for 5 instances with a low probability of success ~ $10^{-3}$.

**Running time**

In this section, a summary of the running time estimations for VCA, SA and SQA is presented, which are shown in Table I below.

**Table I: A summary of the running times of SA, SQA and VCA performed in the EA and Fully Connected Spin Glass sections above. The iteration time for VCA is estimated as the time it takes to estimate the free energy and to compute and apply its gradients to the RNN parameters. For SA and SQA, it is estimated as the time it takes to complete one Monte Carlo step multiplied by the number of annealing runs. The values reported in this table are highly dependent on numerical implementations, hyperparameters and the devices used in the simulations.**

| Model | Method | Number of iterations per second |
|---|---|---|
| Edwards-Anderson ($N = 40 \times 40$) (cf. FIG. 4C) | SA (25 annealing runs) | $\sim 120$ |
| | SQA (25 annealing runs) | $\sim 2.4$ |
| | VCA (25 samples) | $\sim 1.1$ |
| SK ($N = 100$) (cf. FIG. 6A) | SA (50 annealing runs) | $\sim 290$ |
| | SQA (50 annealing runs) | $\sim 1.4$ |
| | VCA (50 samples) | $\sim 5$ |
| Wishart ($N = 32$, $\alpha = 0.5$) (cf. FIG. 6B) | SA (50 annealing runs) | $\sim 1160$ |
| | SQA (50 annealing runs) | $\sim 4.6$ |
| | VCA (50 samples) | $\sim 18.5$ |

**Hyperparameters**

In this section of the present application, the architectures and the hyperparameters of the simulations performed in the research are summarized, as shown in Table II below. The latter has shown to yield good performance, while it is believed that a more advanced study of the hyperparameters can result in optimal results. It is also noted that in the research, VQA and VCA were run using a single GPU workstation for each simulation, while SQA and SA were performed in serial on a multi-core CPU.

**Table II: Hyperparameters used to obtain the results of the research. Note that the number of samples stands for the batch size used to train the RNN.**

| Figures | Parameter | Value |
|---|---|---|
| Figs. 3 and 8 | Architecture | Tensorized RNN wave function with no-weight sharing |
| | Number of memory units | $d_h = 40$ |
| | Number of samples | $N_s = 50$ |
| | Initial magnetic field for VQA | $\Gamma_0 = 2$ |
| | Initial temperature for VCA | $T_0 = 1$ |
| | Learning rate | $\eta = 5 \times 10^{-4}$ |
| | Warmup steps | $N_{warmup} = 1000$ |
| | Number of random instances | $N_{instances} = 25$ |
| FIG. 4, FIG. 9A | Architecture | 2D tensorized RNN wave function with no weight-sharing |
| | Number of memory units | $d_h = 40$ |
| | Number of samples | $N_s = 25$ |
| | Initial magnetic field | $\Gamma_0 = 1$ (for SQA, VQA and RVQA) |
| | Initial temperature | $T_0 = 1$ (for SA, VCA and RVQA) |

(continued)

| Figures | Parameter | Value |
|---|---|---|
| | Learning rate | $\eta = 10^{-4}$ |
| | Number of warmup steps | $N_{warmup} = 1000$ for $10 \times 10$ |
| | | $N_{warmup} = 2000$ for $40 \times 40$ |
| | | $N_{warmup} = 5000$ for $60 \times 60$ |
| | Number of random instances | $N_{instances} = 25$ for FIG. 4, $N_{instances} = 1$ for FIG. 9A |
| FIG.s 6A, 6D and FIG. 9B | Architecture | Dilated RNN wave function with no weight-sharing |
| | Number of memory units | $d_h = 40$ |
| | Number of samples | $N_s = 50$ |
| | Initial temperature | $T_0 = 2$ (for SA and VCA) |
| | Initial magnetic field | $\Gamma_0 = 2$ (for SQA) |
| | Learning rate | $\eta = 10^{-4}$ |
| | Number of warmup steps | $N_{warmup} = 2000$ |
| | Number of random instances | $N_{instances} = 25$ for Figs. 6A, 6D, $N_{instances} = 1$ for FIG. 9B |
| FIG.s 6B, 6C, 6E, 6F | Architecture | Dilated RNN wave function with no weight-sharing |
| | Number of memory units | $d_h = 20$ |
| | Number of samples | $N_s = 50$ |
| | Initial temperature | $T_0 = 1$ (for SA and VCA) |
| | Initial magnetic field | $\Gamma_0 = 1$ (for SQA) |
| | Learning rate | $\eta = 10^{-4}$ |
| | Number of warmup steps | $N_{warmup} = 1000$ |
| | Number of random instances | $N_{instances} = 25$ |
| FIG. 7 | Architecture | Tensorized RNN wave function with weight sharing |
| | Number of memory units | $d_h = 20$ |
| | Number of samples | $N_s = 50$ |
| | Initial temperature | $T_0 = 2$ |
| | Initial magnetic field | $\Gamma_0 = 2$ |
| | Learning rate | $\eta = 10^{-3}$ |
| | Number of warmup steps | $N_{warmup} = 1000$ |
| Figs. 10A, 10B | Architecture | RNN wave function |
| | Number of memory units | $d_h = 50$ |
| | Number of samples | $N_s = 50$ |
| | Learning rate | $\eta = 10^{-3}$ for FIG. 10A and $\eta = 5 \times 10^{-4}$ for FIG. 10B |
| FIG. 10C | Architecture | RNN wave function with no-weight sharing |
| | Number of memory units of dilated RNN | $d_h = 20$ |
| | Number of memory units of tensorized RNN | $d_h = 40$ |
| | Number of samples | $N_s = 100$ |
| | Learning rate | $\eta = 10^{-4}$ |

**Benchmarking Recurrent Neural Network Cells**

**To show the advantage of tensorized RNNs over vanilla RNNs, these** architectures were benchmarked on the task of finding the ground state of the uniform ferromagnetic Ising chain (i.e., $J_{i,i+1} = 1$) with $N = 100$ spins at the critical point (i.e., no annealing is employed). Since the couplings in this model are site-independent, the parameters of the model were chosen to be also site-independent. FIG.s 10A-C shows energy (or Free energy) variance per spin $\sigma^2$ vs the number of training steps.

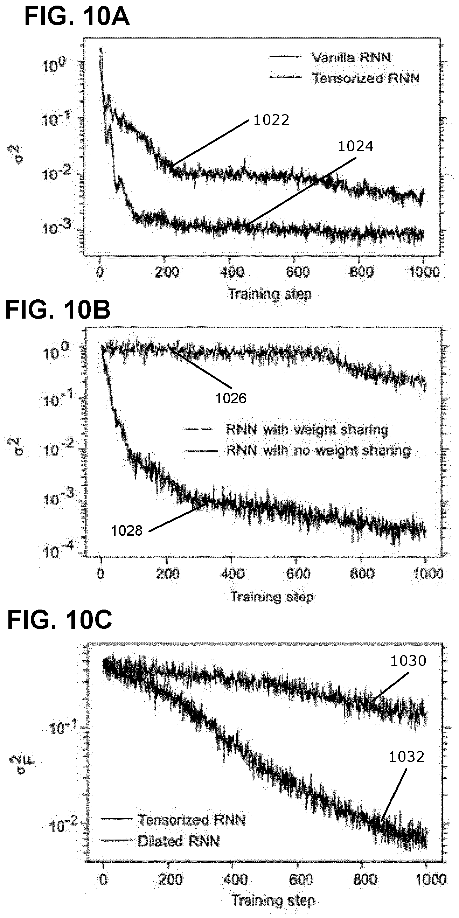

In FIG. 10A, the energy variance per site $\sigma^2$ (see Equation (A.24)) is plotted against the number of gradient descent steps, showing curves for a vanilla RNN 1022 and a tensorized RNN 1024. Here $\sigma^2$ is a good indicator of the quality of the optimized wave function. The results show that the tensorized RNN wave function can achieve both a lower estimate of the energy variance and a faster convergence.

FIG. 10A compares tensorized and vanilla RNN ansatzes both with weight sharing across sites on the uniform ferromagnetic Ising chain at the critical point with $N = 100$ spins.

For the disordered systems studied in the research, the weights $T_n$, $U_n$ and the biases $b_n$, $c_n$ (in Eqs. (16) and (17)) are set to be site-dependent. To demonstrate the benefit of using site-dependent over site-independent parameters when dealing with disordered systems, both architectures are benchmarked on the task of finding the ground state of the disordered Ising chain with random discrete couplings $J_{i,i+1} = \pm 1$ at the critical point, i.e., with a transverse field $\Gamma = 1$. The results are shown in FIG. 10B and find that site-dependent parameters lead to a better performance in terms of the energy variance per spin.

FIG. 10B compares a tensorized RNN with and without weight sharing, trained to find the ground state of the random Ising chain with discrete disorder ($J_{i,i+1} = \pm 1$) at criticality with $N = 20$ spins, showing curves for a RNN with weight sharing 1026 and a RNN with no weight sharing 1028.

Furthermore, the advantage of a dilated RNN ansatz compared to a tensorized RNN ansatz are equally shown. The research trains both of them for the task of finding the minimum of the free energy of the Sherrington-Kirkpatrick model with $N = 20$ spins and at temperature $T = 1$, as explained in the Methods section. Both RNNs have a comparable number of parameters (66400 parameters for the tensorized RNN and 59240 parameters for the dilated RNN). Interestingly, in FIG. 10C, it is found that the dilated RNN supersedes the tensorized RNN with almost an order of magnitude difference in term of the free energy variance per spin defined in Equation (A.21). Indeed, this result suggests that the mechanism of skip connections allows dilated RNNs to capture long-term dependencies more efficiently compared to tensorized RNNs.

FIG. 10C compares a tensorized RNN and dilated RNN ansatzes, both with no weight sharing, trained to find the Sherrington-Kirkpatrick model's equilibrium distribution with $N = 20$ spins at temperature $T = 1$, showing curves for a tensorized RNN 1030 and a dilated RNN 1032.

**General Description of Example Method, Device, and Computer-Readable Medium Embodiments**

The following section of the specification provides general, high-level descriptions of example embodiments of methods, devices, or computer-readable media implementing one or more of the variational annealing techniques described above.

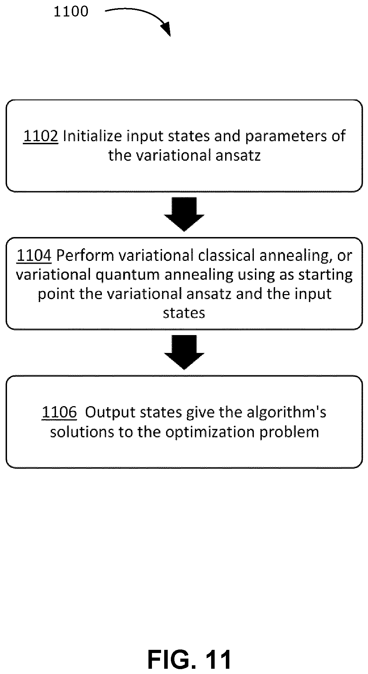

FIG. 11 is a flowchart of a variational annealing method 1100 for solving an optimization problem in silico. In different embodiments, method 1100 can be performed via a variational emulation of either simulated annealing (SA) or quantum annealing (QA). Both methods build upon variational principles of classical or quantum physics, as described above. More details on the theory can be found in *"Solving Statistical Mechanics Using Variational Autoregressive Networks "* by Dian Wu, Lei Wang, and Pan Zhang,

https://doi.org/10.1103/PhysRevLett.122.080602 and, *"Quantum Monte Carlo Approaches for Correlated Systems"* by Federico Becca and Sandro Sorella
https://doi.org/10.1017/9781316417041, both of which are incorporated herein by reference in their entirety.

Step 1102 generally corresponds to steps 302 and 304 of method 300, although some portions of steps 302 and/or 304 may be performed in step 1104 in some embodiments. At step 1102, input states are initialized, which is traditionally done randomly. However, some embodiments may encode a solution of the optimization problem, as described above. Additionally, at step 1102, the parameters of a user defined variational ansatz are initialized. Method 1100 may accommodate a variety of ansatzes such as mean field models, tensor networks states, or neural networks states.

Some ansatzes from the latter category, namely autoregressive models, may provide certain advantages as described above, given their properties of being normalized and sampled from efficiently, in addition to being universal function approximators. Given that the autoregressive sampling generates uncorrelated samples, the sampling process can be performed in parallel. Ansatzes reflecting some properties of the optimization problem such as locality, connectivity or nonuniformity may achieve more accurate results in some embodiments, as described above.

For the classical case, the variational ansatz models the Boltzmann probability distribution of the classical system. For the quantum case, both positive and complex variational ansatzes, which represent the amplitude of a quantum wave function, can be supported. Note that complex ansatzes, which are used for encoding non-stoquastic drivers, can be used for variational quantum annealing (VQA) because the bedrock for this formulation is the Variational Monte Carlo method, the only Quantum Monte Carlo method which is naturally devoid of the infamous sign-problem. Using method 1100, certain optimization tasks whose dimension far exceeds what can be simulated using exact diagonalization techniques may be solved. The following reference depicts in detail the implementation of recurrent neural network ansatzes in a Variational Monte Carlo simulation *"Recurrent neural network wavefunctions"* by Mohamed Hibat-Allah, Martin Ganahl, Lauren E. Hayward, Roger G. Melko, and Juan Carrasquilla, https://doi.org/10.1103/PhysRevRe search.2.023358, which is incorporated herein by reference in its entirety.

In addition, the implementation of cutting-edge autoregressive models is readily available on various machine learning frameworks hence, enabling rapid testing with many advantages such as GPU or TPU acceleration. The example methods presented in this section of the present application have been implemented during the research using the TensorFlow framework.

Step 1104 corresponds generally to one or more iterations of steps 306 and 308 of method 300. Step 1104 makes use of the previously described initialization procedure to perform either variational classical annealing or variational quantum annealing. In the former, the cost function found suitable is the variational free energy of the classical system. For this case, the normalized nature of autoregressive ansatzes was proved useful for the efficient estimation of the Von Neumann classical entropy. The variational energy was found to be suitable for the quantum case. However, some implementations of the quantum case use a fictitious variational free energy as a cost function. For this case, the annealing paradigm encodes both quantum fluctuations and fictitious thermal fluctuations that are varied according to a user defined schedule. The duration of the annealing process can be used as a metric to end the simulations.

The output states obtained at the end of the annealing process (e.g., end step 2008 of FIG. 2A or 2058 or FIG. 2B) are output at step 1106 of method 1100 and give the solution to the optimization task generated by method 1100. Autoregressive ansatzes provide an added advantage at this step 1106 given that they can efficiently sample an arbitrary number of new solutions without suffering from strong autocorrelation effects that hamper ansatzes that do not have this property. Furthermore, their internal state can be stored of a later use to generate solutions on-demand, a possibility not available on traditional heuristics such as classical and quantum annealing.

In addition, an estimate of the number of solutions the optimization problem has can be obtained via an evaluation of the entropy at the end of annealing, a possibility not available on traditional heuristics such as classical and quantum annealing.

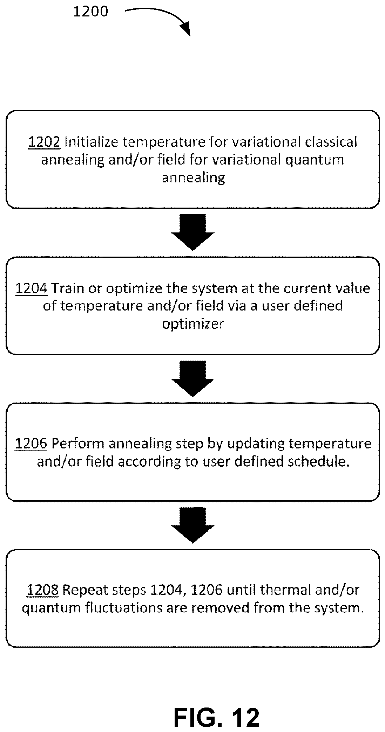

FIG. 12 is a flowchart of a method 1200 that illustrates in greater detail the variational implementations of classical and quantum annealing. Step 1202 corresponds generally to step 1104 of method 1100. At step 1102, the temperature and/or transverse field is initialized in various embodiments, depending on the variational annealing procedure used.

At step 1204, the system is trained or optimized at the current value of temperature and/or transverse field. Step 1204 corresponds generally to training step 308 of method 300; however, a first iteration of training step 1204 may be considered to correspond instead to warm-up step 304 of method 300. Training is performed by minimizing the cost function using a user defined optimizer. Note that trainability of the cost function is an important factor that may determine the viability of example embodiments.

Once the system has converged to the set value of temperature and/or transverse field, annealing step 1206 is performed by updating the temperature and/or the field according to a user defined annealing schedule. Step 1206 generally corresponds to annealing step 306 of method 300. Transfer learning of the ansatz parameters may be implemented in some embodiments to encode smoother annealing dynamics. In principle, the annealing dynamics could still be encoded with the ansatz's parameters (randomly) reinitialized between subsequent annealing steps 1206, albeit at a higher computational cost for the training step 1204.

At step 1208, steps 1204 and 1206 are applied iteratively until thermal and/or quantum fluctuations are removed from the system, or until some other convergence condition is satisfied, marking the end of the variational annealing process (e.g., annealing process end step 2008 or 2058). It will be appreciated that various convergence or other ending conditions can be used to determine when to stop the iteration of training steps 1204 and annealing steps 1206 in various embodiments.

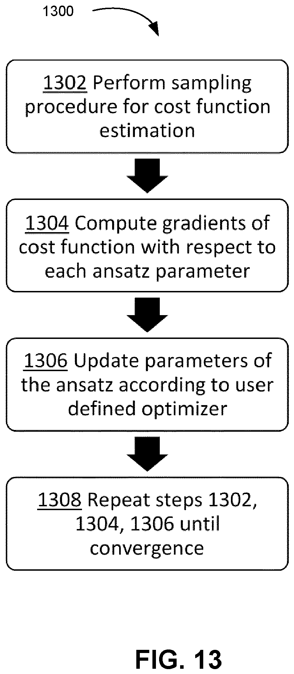

FIG. 13 is a flowchart showing steps of a method 1300 providing a detailed example of the training step 1204 of FIG. 12. Step 1302 is a sampling step that consists of generating uncorrelated samples from the variational ansatz. These samples are in turn used to estimate the cost function at hand.

At step 1304, partial derivatives of the cost function with respect to the ansatz parameters are computed. In the case of autoregressive ansatzes, properties of the computational graph are exploited so that gradients are computed efficiently using the automatic differentiation technique.

At step 1306, the parameters of the variational ansatz are updated using a user defined optimizer. Note that the choice of the optimizer and its hyperparameters such as the learning rate and batch size affects the efficiency of the training process. For the methods used in this embodiment, the Adam optimizer has been used.

At step 1308, steps 1304 and 1306 are iteratively repeated until training reaches a desired level of convergence, or until some other training end condition is satisfied.

## Financial Optimization Using Variational Annealing

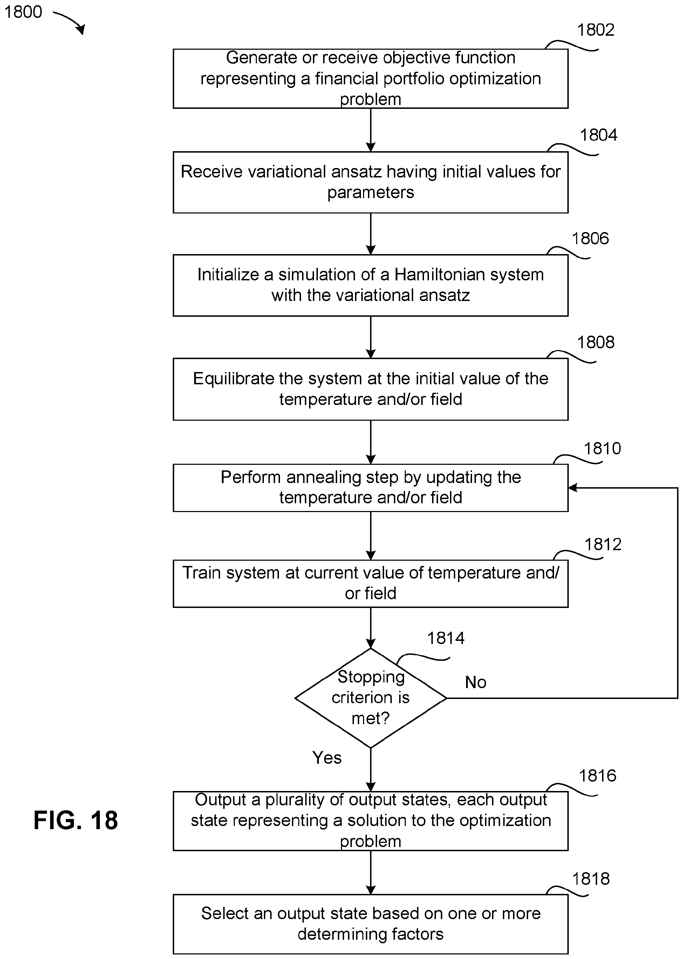

Referring to FIG. 18, a method 1800 for solving a financial optimization problem using variational annealing in accordance with one embodiment of the present application will be described. The method 1800 is performed at least in part by one or more processors 1402 of a computing device 1400 as described above in connection with FIG. 14.

At step 1802, a financial optimization problem is received by the computing device 1400. An objective function corresponding to the financial optimization problem may be subsequently generated by the computing device 1400. In such cases, the objective function may be pre-generated or pre-determined in advance of the performing the variational annealing method 1800. The objective function is defined as a classical Hamiltonian defines a Hamiltonian system that represents an energy function. In particular, the Hamiltonian system is defined by an optimization Hamiltonian equation, which may be a classical optimization Hamiltonian or quantum optimization Hamiltonian, depending on the variational annealing procedure used, i.e. variational classical annealing or variational quantum annealing.

The objective function is part of a cost function, described below. The objective function encodes the financial optimization problem in a classical Hamiltonian. The cost function form depends on whether variational classical annealing (VCA) or variational quantum annealing (VQA). In VCA, the cost function is a time-dependent variational free energy (it is made up of the objective function + the entropy term that is annealed). In VQA, the cost function is a time-dependent quantum optimization Hamiltonian with an annealed driving term.

The generating in step 1802 may comprise encoding the objective function as optimization Hamiltonian equation, and/or encoding the cost function which comprises the objective function. Alternatively, rather than generating the objective function and/or cost function, the objective function for the financial portfolio optimization problem and/or the cost function may be received by the computing device 1400.

The objective function may be generated from application-specific data and a user defined objective (or task). The objective function may be a continuous objective function or a discrete objective function depending on a specific domain application of the objective problem. A plurality of application-specific parameters for the objective function are also received in step 1802, each of the application-specific parameters having application-specific constraints. A plurality of initial input states of the objective function within the application-specific constraints are also received in step 1802. The application-specific constraints may be user defined. As described below in examples, the financial optimization problem may be a financial portfolio optimization problem.

A number of financial portfolio optimization problems can be solved using the method 1800. In an illustrative example, the financial portfolio optimization problem is a selection of a subset of $k$ assets in a large basket of $M$ assets so that the expected returns are maximized while minimizing the portfolio volatility. The corresponding objective function of this problem can be formulated as a Hamiltonian $H$ in accordance with Equation (1):

$$H = -\mu^{\mathsf{T}} x + \frac{1}{2} x^{\mathsf{T}} \Sigma x$$

$$s.t. \sum_{i=1}^{M} x_i = k.$$

$$\text{Equation (1)}$$

where $\mu$ is a vector of expected returns based on real-world data from historical closing prices of the $M$ assets for a given trading period (e.g., day, week or month), and $\Sigma$ is their corresponding covariance matrix built on a given lookback window that can be used to model the portfolio risk exposure. $x$ is a binary vector of 1s and 0s indicating whether an asset should or should not be selected. The cardinality constraint on the number of selected assets can be imposed as a soft constraint by adding it to Equation (1) with a Lagrange multiplier or as a hard constraint directly encoded in an autoregressive neural network as shown described more fully below.

In another illustrative example, the financial portfolio optimization problem may impose a leverage constraint on a long-short portfolio optimization problem. The corresponding objective function of this problem can be formulated as a Hamiltonian $H$ in accordance with Equation (2):

$$H = -\mu^{\mathsf{T}} x + \frac{1}{2} x^{\mathsf{T}} \Sigma x$$

$$s.t. \sum_{i=1}^{M} |x_i| = k.$$

Equation (2)

where $x$ is a trinary vector of 1s, -1s, and 0s, indicating whether an asset should be long, short, or not selected. Each financial position, i.e., long, short, or not selected, can be represented as a spin variable with three allowed energy levels. For example, the objective function can be seen as a $Z_3$ spin model.

In another illustrative example, the financial portfolio optimization problem is how to allocate a nominal capital of \$1 amongst a basket of $M$ assets so that the expected returns are maximized while minimizing the portfolio volatility. In this example, a normalized value of \$1 in normal capital is used so that allocations may be determined in percentages of investment instead of dollar values of investment. Other capital values can be used in other examples. Inequality constraints on each individual asset can also be imposed in terms of minimum and maximum investment. A target volatility $\sigma_{tar}^2$ on the portfolio can also be imposed. The corresponding objective function of this problem can be formulated as a Hamiltonian $H$ in accordance with Equation (3):

$$H = -\mu^{\mathsf{T}} w + \frac{1}{2} w^{\mathsf{T}} \Sigma w + \lambda \left(\sqrt{w^{\mathsf{T}} \Sigma w} - \sigma_{tar}^2\right)^2$$

$$s.t. \sum_{i=1}^{M} w_i = 1$$

$$w_i^{min} \leq w_i \leq w_i^{max}, \forall i \in 1, ..., M$$

$$\text{and } w_i \in [0, 1].$$

Equation (3)

where w is a real vector indicating the fraction of the budget that should be allocated to each asset. $\lambda$ is a Lagrange multiplier that needs to be appropriately tuned to impose the volatility constraint.

In some examples, the optimization problem is a financial portfolio optimization problem, the plurality of states define a plurality of asset allocations of the financial portfolio, the and application-specific parameters are financial data used to generate the objective function, and the application-specific constraints are one or more constraints defined on the objective function.

In some examples, the objective function defines a maximum of expected returns with a minimum amount of risk for a selection of assets; or the objective function defines a maximum of expected returns with a minimum amount of risk for a selection of assets according to a benchmark. In some examples, the benchmark may be set by a user or user defined. In some examples, the benchmark is based on a single asset, a bundle of assets or an index.

In some examples, the one or more application-specific constraints comprise any one or more of the following: a volatility constraint for a selection of assets; a risk constraint for a selection of assets; a returns constraint for a selection of assets; a cardinality constraint on a number of allowable assets; a leverage constraint on a selection of assets; a transaction cost on a selection of assets; a turnover constraint on a selection of assets; a tax constraint on a selection of assets; or investment bands for a selection of assets.

In some examples, the objective function is based on any one or more of the following: a single factor model such as the Capital Asset Pricing Model; multiple factor models; a kurtosis of a distribution of assets; a skewness of a distribution of assets; or other higher moments of a distribution of assets.

In some examples, the objective function is based on factor models. The factor models may be built on different sources of risk. A specific risk in the selection of assets and common risk factors such as market conditions.

In some examples, the financial optimization problem is based on one or more of fraud detection, risk and cashflow.

At step 1804, a variational ansatz is randomly initialized with a plurality of parameters defined with the plurality of initial input states (e.g., initial input values) received in step 1802. Generally, the method 1800 may accommodate a variety of ansatzes such as mean field models, Gaussian models, tensor network states, or artificial neural network states. In this embodiment, a specific subcategory of the latter is chosen, namely, autoregressive neural networks. Autoregressive neural networks such as the recurrent neural networks (RNNs) provide certain advantages such as being normalized by construction and the ability to generate exact samples, an advantageous property when navigating glassy landscapes in comparison with Markov-Chain Monte Carlo sampling. At step 1804, any symmetries and/or constraints relevant to the objective function that is minimized are also implemented. An example of symmetry in the context of Equation (1) is the bit-flip symmetry, as the Hamiltonian should be invariant of whether an asset selected is represented by 1 or 0. An example of constraint is the diversification constraint which can be incorporated in the one-hot encoding of each individual asset (e.g., in Equation (3)) as it will be described more in detail subsequently.

As will be appreciated by persons skilled in the art of quantum many-body physics, the term "ansatz" refers to a wave function that is used as an approximation of the ground state wave function of a quantum many-body Hamiltonian. The term "ansatz" can also be used a parameterized function to represent the equilibrium probability distribution in the context of classical many-body physics. The variational ansatz comprises a plurality of initial values for the plurality of application-specific parameters within the application-specific constraints.

In this embodiment, a RNN is used to model a joint probability distribution of portfolios. For example, for the case of the capital allocation described in Equation (3), using the chain rule of probabilities, the joint distribution $p(w) = p(w_1, w_2, \cdots, w_M)$ can be modelled in accordance with Equation (4):

$$p_\theta(w) = p_\theta(w_1)p_\theta(w_2|w_1) \cdots p_\theta(w_M|w_{M-1}, \cdots, w_2, w_1)$$

$$\text{Equation (4)}$$

where $\theta$ represents all the weights and biases of the autoregressive neural network (such as the RNN 1700 described below) which are initialized in step 1804. In this embodiment, a single or deep RNN (or one of its variants) or a Transformer neural network (or one of its variants) is used to sample a discretized version of the allocation vector $w$. Other autoregressive neural networks such as Normalizing Flows can also be used to sample the continuous weight allocations provided that their output weights are adequately bounded. However, they are not preferred to account for the fact that investments in the financial world are generally made in values of discretized packets.

The sampling of $w$ is made by progressively enrolling the autoregressive neural network (such as the RNN 1700 described below) over the total number of assets. For a given asset $i$, the corresponding allocation value $w_i$ is sampled by a SoftMax layer in the autoregressive neural network (such as the RNN 1700 described below). In practice, the sampling of $w_i$ it performed upon a one-hot encoding thereof $\tilde{w}_i$, which is a vector corresponding to the space of allowed values of the corresponding asset. For example, if asset $i$ has as a constraint for its allocation $0.02 \leq w_i \leq 0.05$, and if investment for this asset it allowed only in units of one percent (i.e., $\Delta w_i = 0.01$), then the scope of investments corresponding to this asset is represented by the categorical vector [0.02, 0.03, 0.04, 0.05]. Hence, a sample from the SoftMax layer the value $\tilde{w}_i = [0, 0, 1, 0]$ corresponds to an allocation value of $w_i = 0.04$, while another one sample from the SoftMax with the value $\tilde{w}_i = [1, 0, 0, 0]$ corresponds to an allocation value of $w_i = 0.02$. The latter value can be used in computing the objective function in Equation (3).

The granularity of the investment of each asset is a hyperparameter that can be user defined. A peculiarity of this approach compared to other optimizers is that each asset can have a different granularity. That is, asset $i$ can be updated in discrete units of $x$%, while asset $j$ is updated in units of $y$% with the $x$ value not necessarily equal to the $y$ value. This can be done by simply using different and corresponding shapes in the input layers and output layers of the autoregressive neural network (such as the RNN 1700 described below) to allow for a varied length of the vector $\tilde{w}_i$. To leverage fast matrix multiplication and hardware acceleration, appropriate padding or masking techniques can be used. This is a way to directly encode the inequality constraints of asset classes or sectors of asset classes directly in the neural network. Thus, by construction, portfolios generated by the neural network will automatically satisfy those inequality constraints, hence leading to a faster convergence in the training process.

The ability to modify the granularity of each asset in the portfolio also implies that objective functions that include both real and discrete variables, such as those in Mixed Integer Programming (MIP), can readily be implemented by the algorithms described in this embodiment. A peculiarity of this embodiment compared to standard optimizers is that it can natively handle linear, quadratic and higher-order MIP problems, as will be described later.

For the case that the financial portfolio optimization problem corresponds to asset allocation as depicted in Equations (1) and (2), a similar sampling approach can be implemented. The granularity of the investment of each asset can be represented in a local Hilbert space using physics terminology. Thus, the asset allocation vector $x$ in Equation (1) can assume the meaning of a spin configuration in classical physics terms. For this case, one can leverage the fact that with respect to the spin configuration, the objective function is invariant over a global $Z_2$ symmetry and encode that property directly in the RNN 1700. This will speed up the training process as demonstrated in neural network literature.

The cardinality constraint in Equation (1) can be implemented in the sampling procedure of the portfolios by keeping track of the cumulative number of invested assets during the sampling and stopping the procedure once $k$ number of assets have been selected, allocating zero probabilities to the rest of the assets. A soft constraint can also be added to the objective function as a Lagrange multiplier to further impose the cardinality constraint.

In Equation (2), with respect to a configuration in the quantum perspective, the vector $x$ can be promoted to a tensor product of operators as follows:

$$\hat{S}_z = \begin{pmatrix} 1 & 0 & 0 \\ 0 & 0 & 0 \\ 0 & 0 & -1 \end{pmatrix}.$$

A configuration for $k$ assets in the portfolio will be a tensor product of $k$ qutrit states. The discrete asset allocation classical Hamiltonian will be represented with tensor product of operators $\hat{S}_z$ instead of Pauli-z matrices.

Quantum effects can be engineered by using a time-dependent driving term with an appropriate combination of non-commuting terms such as a 3-level system of raising $S^+$ and lowering $S^-$ operators, wherein:

$$S^+ = \begin{pmatrix} 0 & 1 & 0 \\ 0 & 0 & 1 \\ 1 & 0 & 0 \end{pmatrix},$$

and

$$S^- = \begin{pmatrix} 0 & 0 & 1 \\ 1 & 0 & 0 \\ 0 & 1 & 0 \end{pmatrix}.$$

The raising $S^+$ and lowering $S^-$ operators transform the objective function into a quantum Hamiltonian for a qutrits system. Each qutrit state can be represented as a long, short or not selected position of an asset as follows:

$$\text{long} \equiv \begin{pmatrix} 1 \\ 0 \\ 0 \end{pmatrix},$$

$$\text{short} \equiv \begin{pmatrix} 0 \\ 0 \\ 1 \end{pmatrix},$$

or

$$\text{not selected} \equiv \begin{pmatrix} 0 \\ 1 \\ 0 \end{pmatrix}.$$

In this way, example embodiments of the present application implement higher-order quantum simulations with a qutrit system. In this embodiment, the wavefunction is parametrized using $\sqrt{p_\theta(x)}$, provided that the resulting Hamiltonian is stoquastic. If it is not the case, i.e., the Hamiltonian is non-stoquastic, then a complex wavefunction parametrization can be employed. Equation (1) follows a similar reasoning with the above operators replaced by Pauli matrices. Generalization to qudit systems can also be made using corresponding qudit operators.

As noted above, in some examples the variational ansatz is an autoregressive neural network, may be one of the following: a single recurrent neural network architecture or one of its variants; a deep recurrent neural network architecture or one of its variants; or a Transformer neural network or one of its variants.

In some examples wherein the optimization problem is a financial portfolio optimization problem, the plurality of parameters define a plurality of assets of the financial portfolio, the variational ansatz defines any one or more of the following: an inequality constraint on the investment of the assets (an example of an inequality constraint is to invest in a predetermined number or less than a predetermined number assets (e.g., 10 or less than 10 stocks) from a group of assets (e.g., 100 stocks), where the group of assets may be a predetermined or pre-screened list, the listed assets (e.g., stocks) on one or a number of exchanges, or other defined group of assets); a granularity of the investment of asset in the plurality of assets; a cardinality constraint on a number of allowable assets; or a symmetrization of the variational ansatz based on an underlying symmetry of the objective function.

At step 1806, a simulation of the Hamiltonian system with a temperature or quantum driving field is initialized with the variational ansatz from step 1804 depending on the variational annealing procedure used, i.e. variational classical annealing or variational quantum annealing. The Hamiltonian system is defined by the objective function from step 1802 which represents the optimization problem in terms of an energy function, in particular the Hamiltonian system is defined by an optimization Hamiltonian equation, which may be a classical optimization Hamiltonian or quantum optimization Hamiltonian, depending on the variational annealing procedure used, i.e. variational classical annealing or variational quantum annealing. As noted above, the objective function has a plurality of application-specific parameters, each of the parameters having one or more application-specific constraints. A cost function for the Hamiltonian system is defined as a variational free energy for variational classical annealing simulations or as a variational energy for variational quantum annealing simulations.

At step 1808, the Hamiltonian system is brought to equilibrium (i.e., equilibrated) at an initial value of the cost function by modulating the values of the plurality of parameters of the variational ansatz with new states generated by the variational ansatz. In examples in which the objective function is a classical optimization Hamiltonian defined in terms of a temperature of the Hamiltonian system, the Hamiltonian system is equilibrated at the plurality of initial values of the temperature of the Hamiltonian system. In examples in which the objective function is a quantum optimization Hamiltonian defined in terms of a quantum driving field of the Hamiltonian system, the Hamiltonian system is equilibrated at the plurality of initial values of the quantum driving field of the Hamiltonian system. The equilibration step is performed via a training process that uses variational minimization techniques, such as those described in detail in the subsections "Minimizing Variational Free Energy" and "Variational Monte Carlo" of the "Methods" section above.

The training process seeks to minimize a cost based on the cost function as described below. Within the field of mathematics and probability, the term "moment" refers to significant information about the shape, center, spread, and other features of a probability distribution. In the context of finance, for example, skewness and kurtosis are used to assess the risk of extreme outcomes and the asymmetry of return distributions. Higher moments of the distribution of current assets, such as skewness and kurtosis, can be included in the objective function since, by leveraging automatic differentiation, their derivatives can be readably accessed. This may provide an advantage in the financial modelling of the financial portfolio optimization problem compared to standard solvers which struggle to solve terms beyond quadratics.

At step 1810, variational annealing is performed on the cost function while maintaining the values of the plurality of parameters of the variational ansatz. The variational annealing is performed by updating the temperature or the quantum driving field, depending on the variational annealing procedure used, i.e. variational classical annealing or variational quantum annealing, according to an annealing schedule, which may be user defined. The annealing step 1810 may comprise reducing a temperature parameter of the cost function or reducing a quantum driving field of the of the cost function, and increasing the objective function.

In variational classical annealing examples, the cost function is a variational free energy comprising the Hamiltonian system representing the financial optimization problem, an entropy term defined in terms of the variational ansatz, and a temperature of the Hamiltonian system. In particular, the cost function is a variational free energy made up of the expected value of a classical optimization Hamiltonian over a distribution of plurality of assets of the corresponding financial portfolio generated by a variational ansatz, and a time-dependent temperature multiplied by a Von-Neumann entropy term modelled by the variational ansatz. The variational ansatz models the equilibrium probability distribution of the Hamiltonian system at the corresponding value of temperature. The equilibrating step comprises equilibrating the Hamiltonian system at the plurality of initial values of the temperature of the Hamiltonian system, and the annealing step is performed by updating the temperature of the Hamiltonian system. The annealing step may be performed using any one or more of: a variational emulation of classical annealing; a variational ansatz model of a probability distribution of the Hamiltonian system or a variational free energy function of the cost function.

In variational quantum annealing examples, the cost function is a variational energy comprising the quantum optimization Hamiltonian defined in terms of a quantum driving field of the Hamiltonian system and the variational ansatz. In particular, the cost function is the expected value of a time-dependent quantum optimization Hamiltonian over a distribution of plurality of assets of the corresponding financial portfolio generated by the variational ansatz. The variational ansatz models the ground state wavefunction of the Hamiltonian system at the corresponding value of the time-dependent driving term. The equilibrating step comprises equilibrating the Hamiltonian system at the plurality of initial values of the quantum driving field of the Hamiltonian system, and the annealing step is performed by updating the quantum driving field of the Hamiltonian system. The annealing step may be performed using any one or more of: a variational emulation of quantum annealing; a variational ansatz model of a wavefunction of the Hamiltonian system; or a variational energy function of the cost function.

In some examples, annealing comprises setting the temperature or the driving parameter of the cost function to zero or a threshold that approximates zero. Transfer learning of the ansatz parameters is implemented to encode smoother annealing dynamics. Transfer learning between subsequent annealing steps corresponds to using the last trained values of the plurality of parameters of the variational ansatz as initial values after the annealing step has been performed.

At step 1812, training is performed to modulate the values of the plurality of parameters of the variational ansatz using the cost function to generate a plurality of trained states of the respective plurality of parameters, the plurality of trained states having a lower cost according to the cost function than a cost of the trained states prior to modulation of the values of the plurality of parameters. The training is initiated at a current temperature or quantum driving field, depending on the variational annealing procedure used, i.e. variational classical annealing or variational quantum annealing. Generally, the training comprises determining a cost based on a current temperature or quantum driving field, depending on the variational annealing procedure used, and updating one or more parameters (e.g., weights) of the variational ansatz (e.g., neural network) based on the cost.

In some examples, the training comprises: sampling the variational ansatz to obtain sampled states of an asset distribution; implementing a relevant symmetry of the objective function to the sampled states; computing a cost based on the cost function value using the sampled states; and minimizing the cost based on the plurality of parameters. In some examples, the equilibration step comprises: training the Hamiltonian system using initial states of the cost function.

At step 1814, it is determined whether a predetermined stopping condition has been met. The predetermined stopping condition may be user defined.

The predetermined stopping criteria/condition can be, for example, when the driving term in the quantum optimization Hamiltonian reaches zero or a very small value. In some examples, the predetermined condition is one of any of the following: an application-specific constraint is less than or equal to a threshold; elimination of thermal and/or quantum fluctuations; thermal and/or quantum fluctuations reaching a threshold in the variance of the cost function; or the driving parameter is equal to zero or is less than a threshold that approximates zero.

In some examples, depending on the variational annealing procedure used, i.e. variational classical annealing or variational quantum annealing, the predetermined stopping condition may be one or more of the following: a temperature parameter of the cost function reaches zero or a threshold value; a driving parameter of the cost function reaches zero or a threshold value; or a variance of the cost function reaches a threshold value.

Steps 1810 and 1812 are iteratively repeated until a predetermined stopping condition is met (decision block 1814). At step 1816, responsive to the predetermined condition being met, the annealing ends. At the end of annealing, the learned neural network encodes the probability distribution of optimal or near-optimal solutions. At step 1816, a plurality of output states is output, each output state representing a solution to the optimization problem of the application-specific parameters within the application-specific constraints, i.e. a plurality of financial portfolios. Step 1816 may comprise generating the plurality of financial portfolios via autoregressive sampling. A considerable number of portfolios can be generated relatively fast using autoregressive sampling. The learned neural network weights and biases can also be stored for later use.

At step 1818, one of the plurality of output states is selected based on one or more determining factors as the "best solution" to the financial optimization problem. The one or more determining factors are based on the one or more constraints of one or more of the plurality of parameters of the objective function. In some examples, when more than one determining factor is used, the determining factors may include risk, return (e.g., rate of return or absolute return), volatility, tracking error or Sharpe ratio. In other examples, when only one determining factor is used, the determining factor may be lowest risk, highest return, lowest volatility, lowest tracking error or highest Sharpe ratio. Other financial metrics may be used for the determining factors in other examples. The determining factors may be user defined.

In some examples, selecting an output state from the plurality of output states according to one or more determining factors comprises: generating a plurality of sample financial portfolios using autoregressive sampling; selecting a subset of the financial portfolios that obey all application-specific constraints; and selecting a financial portfolio from the subset of the financial portfolios based on one of the following a return, a volatility, a Sharpe ratio, and/or a tracking error.

At step 1820, the selected output state is optionally applied to a real-world system associated with the optimization problem, such as a physical system associated with a real-world optimization problem. The real-world system depends on the application domain of the optimization problem, which may relate to the allocation of resources such as financial assets, network bandwidth or traffic, communication frequencies, computer processing resources (e.g., in cloud computing), computer memory (storage) resources (e.g., in cloud computing), utilities such as water, electricity, chemicals, raw materials, electricity in an electrical grid, transportation assets (freight trucks, boats, planes and the like in logistics and dispatching), airplanes, drones, and unnamed aerial vehicles (UAVs), amongst other possibilities. In such examples, this may comprise applying the selected output state to an external computing system associated with the optimization problem and in communication with the classical computing device. The selected output state may be encoded by post-processing software and sent to an external server (i.e., one of the resource server(s) 1540) via an application programming interface (API) or a dedicated application via the communication network 1510. The external server may be part of, or connected to, a control system such as a process control system which is, or comprises, the real-world system. Control instructions for use in allocating the relevant resources may also be generated and sent to the external server and/or control system. Alternatively, the control system may generate its own control instructions upon receiving the output. The control system, in response to receiving the selected output state and/or control instructions, processes the selected output state and/or control instructions to allocate the relevant resources in accordance with the selected output state. The relevant resources depend on the real-world system with which the system and method of the present application are used. In generating its own control instructions, the control system may compare a current state with the selected output state and determine one or more changes to real-world system, and the corresponding control instructions, so that the relevant resources are allocated in according with the selected output state. In some examples, the control system may be a financial processing server.

In some examples in which the real-world optimization problem is a financial portfolio optimization problem, a financial portfolio represented by the selected output state may be encoded by post-processing software and sent to a financial processing server (i.e., one of the resource server(s) 1540) via an API or a dedicated application via the communication network 1510. The financial processing server may be operated by a commercial bank, stock brokerage or the like. Alternatively, the computing device 1400 (i.e., variational annealer 1520) which performs the method 1800 may be the financial processing server 1540. The financial processing server may then compare a current financial portfolio of a user with the selected financial portfolio and determine one or more changes to the financial portfolio that are required so that the financial portfolio of the user matches the selected financial portfolio. The financial processing server may then generate electronic order instructions to buy and/or sell one or more financial instruments, stocks, securities or the like for effecting the required changes to the financial portfolio of the user, and send the electronic order instructions to one or more processing servers (i.e., one of the resource server(s) 1540) of a financial clearing house, stock exchange or the like via the communication network 1510 for effecting the orders indicated in the electronic order instructions. The electronic order instructions are encoded to be processed by the processing server(s) of the respective financial clearing house, stock exchange or the like on receipt, the processing causing the respect order(s) to be placed with the respective financial clearing house, stock exchange or the like.

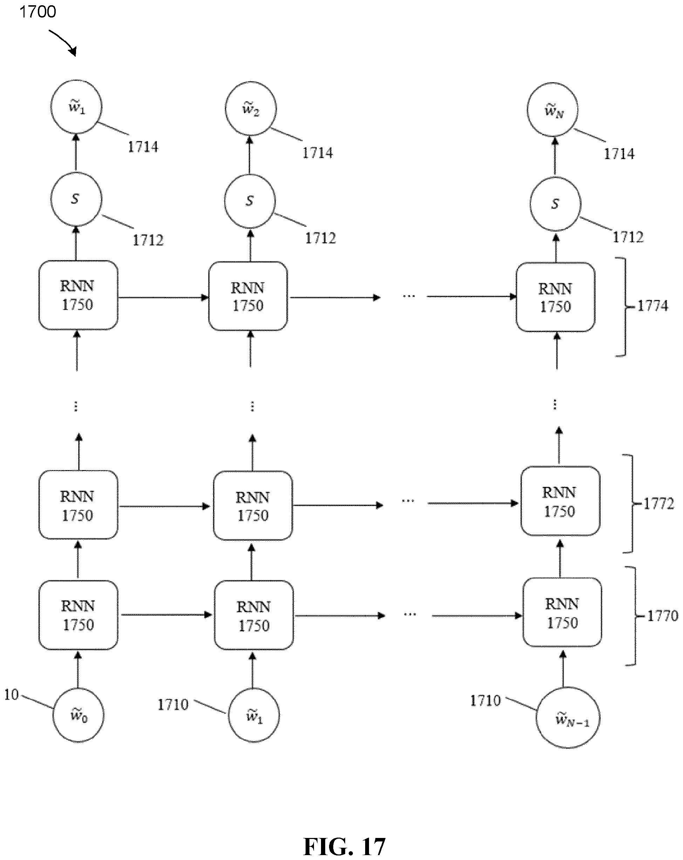

Referring now to FIG. 17, a deep RNN 1700 that may be used to implement example embodiments of the present application will now be described. The RNN 1700 may be an autoregressive RNN in at least some embodiments. The RNN 1700 comprises a plurality of RNN cells 1750. The RNN cells 1750 may have the same or different parameters. Each RNN cell 1750 may be separate trainable with respect to the parameters. The use of RNN cells 1750 with independent, trainable parameters is preferred for solving complex optimization problems defined by an objective function. Each RNN cell 1750 may be a conventional RNN cell, a gated recurrent unit (GRU) cell or a long short-term memory (LSTM) cell.

The deep RNN 1700 comprises a plurality of layers, each layer comprising a number RNN cells 1750. The first layer, second layer and final layer are noted by references 1770, 1772 and 1774, respectively. Recurrent neural networks such as the RNN 1750 are a type of neural network in which outputs from previous time steps are taken as inputs for the current time step. The RNN 1700 has cyclic connections and is unrolled by forward passes when the state of the neural network is copied for each input time step. Although the training of the RNN 1700 will not be described in detail herein, the RNN 1700 is unrolled by backward passes for updating network weights during training.

The RNN 1700 is unrolled over a plurality of steps (also known as iterations). Each step represents a resource or asset (such as a financial asset) $i$. At each step, the RNN structure is extended over multiple deep layers depicted by references 1770, 1772 and 1774. The RNN cells 1750 in the first layer 1770 receive two inputs with the exception of the first step/iteration. The first input is a hidden state from the previous step/iteration which is depicted by a straight solid arrow. The zero-input state is not shown in FIG. 17. The second input is $\bar{w}_i$, a one-hot encoding of a real vector $w_i$. It will be understood to persons skilled in the art of machine learning that one-hot encoding uses a group of bits among which the only valid combinations of values are those with a single high (1) bit and all the others low (0). One-hot encoding has several advantages including favorable costs (determining the state has a low and constant cost of accessing one flip-flop, and changing the state has the constant cost of accessing two flip-flops), it is relative to detect invalid states, and it typically allows a state machine to run at a faster clock rate than any other encoding of that state machine, among other advantages. The second input is $\bar{w}_i$, a one-hot encoding of a real vector $w_i$. $w$ is a real vector indicating a fractional allocated to each asset. The input $\bar{w}_0$ serves as a zero-input state to the RNN 1700. The real vector $w_i$ may represent a number of different things, such as a fractional allocation to a resource (or asset).

The real vector $w_i$ may represent a number of different things, such as a fractional allocation to a resource (or asset). Examples of the allocation of resources include, but are not limited to, the allocation of network bandwidth to user equipment in communication network, the allocation of processing resources such those of a data processing farm (e.g., cloud computing server farm), the allocation of water or electricity to homes, and the allocation of a fixed sum of money to financial assets (such as stocks). For the purpose of illustration only, the allocation of a fixed sum of money to financial assets is used as an example application wherein.

The RNN cells 1750 in the other layers by 1772 and 1774 also receive two inputs. The first input from the hidden state received from the previous layer and the second input received from the hidden state of the previous step/iteration which is located at the same layer depth as the current RNN cell.

The RNN 1700, in particular when implemented as an autoregressive recurrent neural network, may be used to model the joint probability distribution of portfolios. For example, for a case of capital allocation described in Equation (3), using the chain rule of probabilities, the j oint distribution can be modelled using Equation (4).

The RNN cells at the last layer 1774 are connected to a SoftMax layer 1712 from which a conditional probability $p_\theta$ ($w_{i+1}|w_{<i}$) of generating the next allocation vector is obtained. Then, $\tilde{w}_{i+1}$ sampled from that probability, as shown in step 1714. By unrolling the RNN 1700, which corresponds to performing an autoregressive sampling, the joint probability distribution $p_\theta(w)$ can be obtained together with the samples w according to Equation (3).

**Experimental Results**

Portfolio optimization with long-short positions and leverage constraint

In finance, portfolio optimization is critical for investors seeking to maximize returns while managing risk. Traditional methods have long been used to construct diversified portfolios. However, as financial markets evolve, the complexity of optimization problems grows.

Quantum computing and quantum intelligent algorithms present an opportunity to greatly improve portfolio optimization by providing solutions that were previously considered computationally infeasible, especially when dealing natively with constraints (e.g., leverage constraints). In this section, experimental results are presented illustrating how quantum intelligent algorithms can solve portfolio optimization problems while adhering to leverage constraints, providing a solution for determining more optimal solutions to using existing computing hardware, and providing more robust and efficient investment strategies.

Portfolio optimization involves selecting a combination of assets to reach specific financial goals under certain constraints. This optimization typically considers various factors, including asset returns, volatilities, correlations, and investment constraints. Among these constraints, leverage constraints play a crucial role in ensuring responsible financial management by limiting the amount of borrowed capital used in the portfolio.

Traditional optimization methods often struggle when faced with complex portfolios and leverage constraints. As the number of assets increases, the computational complexity grows exponentially, making it challenging to find optimal solutions within reasonable timeframes without the use of approximations and/or the imposition of otherwise undesired assumptions and/or limitations to solve such problems with existing non-quantum computing solutions. Moreover, the implications of leveraging constraints add an extra layer of complexity that requires sophisticated mathematical techniques to address effectively, which makes it even more challenging to find optimal solutions within reasonable timeframes with existing non-quantum computing solutions.

Quantum intelligent algorithms, such as variational annealing, provide a mechanism to solve complex optimization problems efficiently. A particular advantage of using variational annealing using a classical computing device over a quantum computing device is the ability to address the nonlinear nature of leverage constraints without approximation. To the best of the inventor's knowledge, no quantum computing device can solve such optimization problem, albeit for some algorithms operating in a hybrid computing environment. Thus, the method of VCA of the present application provides a way of harnessing the power of quantum physics to solve complex real-world optimization problems using classical computing devices.

The experimental results in this section based on a case study inspired by an article by L. Bongini, M. Degli Esposti, C. Giardina and A. Schianchi, entitled Portfolio Optimization with Short-Selling and Spin-Glass, Eur. Phys. J. B 27, 263-272, https://doi.org/10,1140/epjb/e20020143, 10 pages, May 2002, the content of which is incorporated herein by reference. The authors map the portfolio optimization objective into the Hamiltonian of disordered Ising glasses and, thus, leverage spin glass techniques and exact results to construct the efficient frontier. However, this comes with a caveat, since their techniques require an exhaustive search from full enumeration of all the possible combinations of long and short positions, a method which scales exponentially with the number of assets in the portfolio.

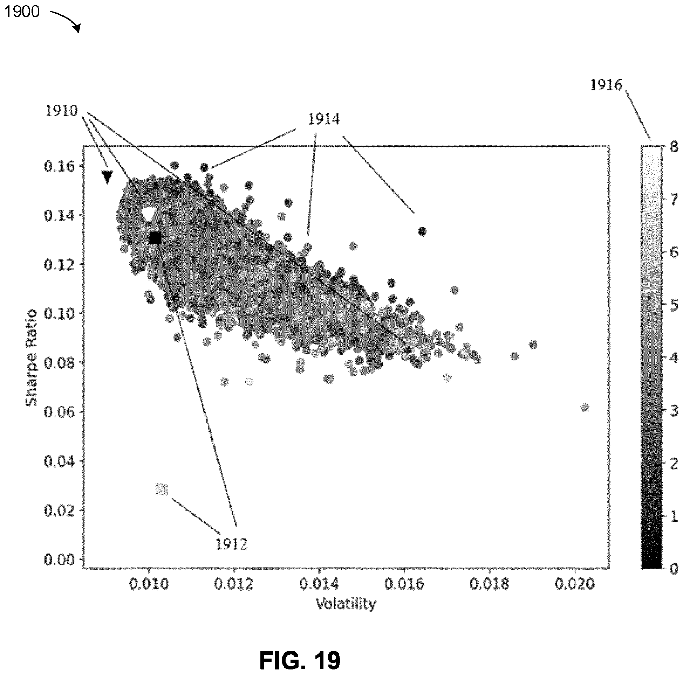

FIG. 19 illustrates a comparison of the results of applying variational classical annealing in accordance with embodiments of the present application and the results obtained using the method described in *Portfolio Optimization with Short-Selling and Spin-Glass* to solve a portfolio optimization problem modeled using financial data of 16 stocks traded on NASDAQ for a period going from October 1, 1998 to November 13, 2000. For comparison purposes, the results obtained by using the minimize function in scipy-optimize using the Sequential Least Squares Programming (SLSQP) algorithm by SciPy™ are also illustrated. SciPy™ is a publicly available computing resource that provides fundamental algorithms for scientific computing in the Python computer language (https://scipy.org/).

The objective function of the financial portfolio optimization problem consists of minimizing risks under the constraint of having a return that is similar to the NASDAQ index (which was 0.001362 for that trading period) in which long and short stocks are allowed provided that the absolute value of their respective allocation equals one.

FIG. 19 illustrates a graph 1900 showing a Sharpe ratio versus the volatility of a long-short portfolio obtained. The downward pointing triangles, indicated by reference 1910, illustrate the results obtained using the method described in *Portfolio Optimization with Short-Selling and Spin-Glass.* The square data points, indicated by reference 1912, illustrate the results obtained by using the minimize function in scipy-optimize using the SLSQP algorithm by SciPy™. The full circle data points, indicated by reference 1914, illustrate the results obtained by applying the VCA method in accordance with embodiments of the present application. The results of applying VCA in accordance with the present application and results of applying scipy-optimize are compared with the results of applying the approach on the paper entitled *Portfolio Optimization with Short-Selling and Spin-Glass.* The intensity bar, indicated by reference 1916, indicates the Hamming distance between the sign (i.e., positive or negative) of the best investment in *Portfolio Optimization with Short-Selling and Spin-Glass* and one of the other solutions, VCA in accordance with the present application and scipy-optimize. The sign, i.e., positive or negative, in the results indicates whether an investment is less than 0 (short-selling) or greater than 0 (long-selling). Different data points with the same intensity have different weight allocations.

For the experiment shown in FIG. 19, training for the VCA was performed with 20,000 samples using a 2-layer deep RNN architecture with GRU cells similar to the RNN 1700 of FIG. 17 as the neural network architecture. Once the neural network was trained, i.e., annealing was completed, new samples were generated. The graph 1900 comprises about 400,000 data points. A remarkable observation from the results obtained by applying the VCA method in accordance with embodiments of the present application, shown by data points 1914 in the graph 1900, is that the results are obtained with a single pass of the VCA method, i.e., a single run of the VAA algorithm, and the results allow for direct mapping of the landscape of near-optimal solutions. The results also provide competitive and sometimes better solutions even compared to the exacting method described in *Portfolio Optimization with Short-Selling and Spin-Glass,* shown by data points 1910 in the graph 1900. Thus, the results obtained by applying the VCA method in accordance with embodiments of the present application show a distinct improvement over existing solutions, especially since the VCA method in accordance with embodiments of the present application is much more scalable and can be accelerated on dedicated computing hardware.

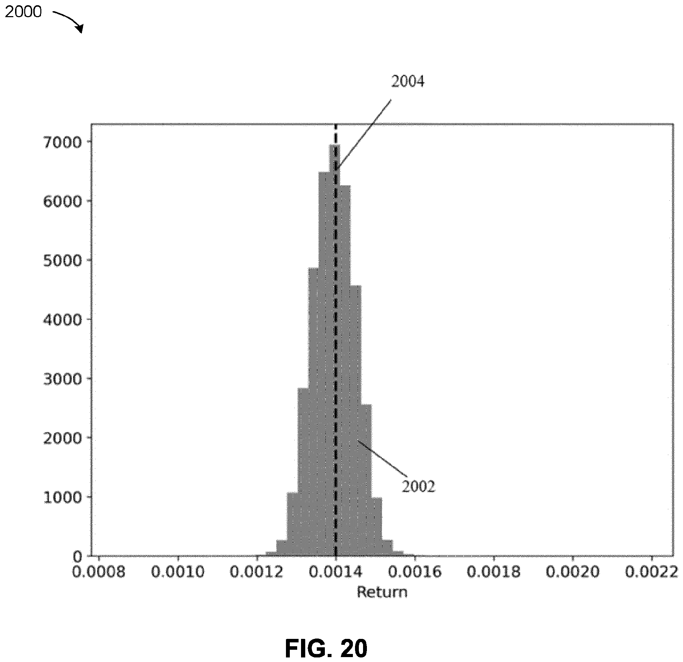

FIG. 20 illustrates a graph 2000 showing a histogram 2002 returns represented by the data points 1914 results obtained by applying the VCA method in accordance with embodiments of the present application. All the data points represent long-short portfolios which fully meet the capital allocation constraint with 99.99% accuracy. The line 2004 shows restrictions imposed on the return of the portfolios to track the NASDAQ index returns have been satisfied in the vast majority of returns obtained by applying the VCA method in accordance with embodiments of the present application. This is a powerful example illustration of how the VCA in accordance with embodiments of the present application can easily handle multiple constraints in a single pass/run.

Table 1 below illustrates some financial metrics of the respective financial portfolios of the best performing portfolios obtained from the different methodologies applied in the experiment. It will be understood to persons skilled in the art of finance that negative Sharpe ratios below 0 indicate the investment is "suboptimal" and should be avoided because it has very high risk and very low reward. Positive Sharpe ratio ranges are commonly categories as follows: 0.0 and 0.99 is considered low risk/low reward; 1.00 and 1.99 is considered good; 2.0 and 2.99 is considered very good; 3.0 and 3.99 is considered outstanding. Most financial investments fall into the 1.00-1.99 range while readings above 2.0 can suggest the use of leverage to boost returns and risk.

Table 1: Overall financial metrics of the best performing portfolios obtained from the different methodologies applied in the experiment.

| Metrics | Method 1: Portfolio Optimization with Short-Selling and Spin-Glass | Method 2: Minimize function in scipy-optimize using the SLSQP algorithm | Method 3: VCA method in accordance with embodiments of the present application |
|---|---|---|---|
| Sharpe Ratio | 0.15528 | 0.13077 | 0.14839 |
| Expected Returns | 0.0014 | 0.00133 | 0.00141 |
| Volatility | 0.00902 | 0.016005 | 0.00953 |
| Capital Allocation (real number between 0 and 1, where 1.0 is fully allocated) | 1.0 | 1.00009 | 1.0 |

The Expected Returns in Table 1 are based on the first term in Equation (1) but without the minus term.

Table 2 below illustrates the best performing portfolios obtained from the different methodologies applied in the experiment.

Table 2: Best performing portfolios obtained from the different methodologies applied in the experiment.

| Stocks | Method 1: Portfolio Optimization with Short-Selling and Spin-Glass | Method 2: minimize function in scipy-optimize using the SLSQP algorithm | Method 3: VCA method in accordance with embodiments of the present application |
|---|---|---|---|
| Adobe | 0.063 | 0.078 | 0.055 |
| Amazon | -0.046 | -0.032 | -0.03 |
| Ameritrade | 0.015 | 0.022 | 0.035 |
| Aol | 0.082 | 0.103 | 0.08 |
| Appmc | 0.032 | 0.014 | 0.07 |
| Broadvis | 0.039 | 0.031 | 0.05 |
| Cisco | 0.123 | 0.15 | -0.105 |
| Cmgi | -0.045 | -0.054 | -0.055 |
| Dell | -0.138 | -0.237 | 0.085 |
| Doubleclick | 0.022 | 0.007 | 0.0 |
| Ebay | 0.041 | 0.001 | 0.04 |
| Inktomy | -0.03 | 0.001 | -0.045 |
| Intel | 0.089 | 0.111 | -0.115 |
| Jdsuni | -0.044 | -0.064 | 0.055 |
| Microsoft | -0.149 | 0.056 | -0.13 |
| Oracle | 0.042 | 0.038 | 0.05 |

The values in Table 2 represent a fraction of investment in each indicated stock that should be in a long position (positive) or short position (negative) in accordance with each of the three methodologies: Method 1: Portfolio Optimization with Short-Selling and Spin-Glass; Method 2: minimize function in scipy-optimize using the SLSQP algorithm; and Method 3: VCA method in accordance with embodiments of the present application.

The results above demonstrate that the VCA method in accordance with embodiments of the present application overall are not only able to identify financial portfolios that comprise a number of investments that are far away in signs but also identify diversified buy-and-sell financial portfolios with the same signs. The sign of $w_i$ corresponds to the proportion of the budget allocated to asset $i$, and is computed in accordance with Equation (5) as follows:

$$sign\ w_i = w_i / |w_i| \qquad \text{Equation (5).}$$

It will be appreciated that even though examples presented above are directed to financial portfolio optimization problems, the VCA method in accordance with the present application is able to tackle more general financial optimization problems involving continuous and/or discrete variables. These include financial optimization problems beyond portfolio optimization such as cash flow management and fraud detection.

Moreover, although the present specification is directed to financial optimization problems, the system and method of the present application can be applied to other non-financial optimization problems such as those relating to the allocation of resources such as network bandwidth or traffic, communication frequencies, computer processing resources (e.g., in cloud computing), computer memory (storage) resources (e.g., in cloud computing), utilities such as water, electricity, chemicals, raw materials, electricity in an electrical grid, transportation assets (freight trucks, boats, planes and the like in logistics and dispatching), airplanes, drones, and UAVs, amongst other possibilities.

General

Although example embodiments may describe methods with steps in a certain order, one or more steps of the methods may be omitted or altered as appropriate. The example methods described herein may be modified by substituting, reordering, or adding steps to the disclosed methods, as appropriate. The coding of software for carrying out the above-described methods described is within the scope of a person of ordinary skill in the art having regard to the present application.

Although the present application is described at least in part in terms of methods, a person of ordinary skill in the art will understand that the present application is also directed to the various elements for performing at least some of the aspects and features of the described methods, be it by way of hardware, software or a combination thereof. Accordingly, the technical solution of the present application may be embodied in a non-volatile or non-transitory machinereadable medium (e.g., optical disk, flash memory, etc.) having stored thereon executable instructions tangibly stored thereon that enable a computing device to execute examples of the methods disclosed herein.

All values and sub-ranges within disclosed ranges are also disclosed. Also, although the systems, devices and processes disclosed and shown herein may comprise a specific number of elements/components, the systems, devices and assemblies can be modified to include additional or fewer of such elements/components. For example, although any of the elements/components disclosed may be referenced as being singular, the embodiments disclosed herein can be modified to include a plurality of such elements/components.

Numerous specific details are set forth to provide a thorough understanding of the example embodiments described herein. However, it will be understood by those of ordinary skill in the art that the example embodiments described herein may be practiced without some of these specific details. Furthermore, well-known methods, procedures, and elements have not been described in detail so as not to obscure the example embodiments described herein.

The present application may be embodied in other specific forms without departing from the subject matter of the claims. The described example embodiments are to be considered in all respects as being only illustrative and not restrictive. Modifications, substitutions, additions, and other implementations of the example embodiments are possible The scope of the present application is, therefore, described by the appended claims rather than by the foregoing description. The scope of the claims should not be limited by the embodiments set forth in the examples but should be given the broadest interpretation consistent with the description as a whole. The present application intends to cover and embrace all suitable changes in technology.

Selected features from one or more of the above-described embodiments may be combined to create alternative embodiments not explicitly described, features suitable for such combinations being understood within the scope of example embodiments. Features from one or more of the above-described embodiments may be selected to create alternate embodiments comprised of a subcombination of features which may not be explicitly described above. In addition, features from one or more of the above-described embodiments may be selected and combined to create alternate embodiments comprised of a combination of features which may not be explicitly described above. Features suitable for such combinations and subcombinations would be readily apparent to persons skilled in the art upon review of the present application as a whole.

The foregoing description refers to documents, datasets, programs/applications and/or code, the content of which is incorporated herein by reference in their entirety.

## Claims

1. A computer-implemented method for solving a financial optimization problem using variational annealing, wherein the computer-implemented method is performed using a classical computing device, wherein the financial optimization problem is defined by an objective function, the objective function defined in terms of a Hamiltonian system that represents an energy function, the method comprising:

   (a) receiving the objective function representing the financial optimization problem, a plurality of application-specific parameters of the objective function with application-specific constraints, and a plurality of initial input states of the objective function within the application-specific constraints;
   (b) performing variational annealing by:

      (i) initializing a variational ansatz with a plurality of parameters defined with a plurality of initial input states;
      (ii) initializing simulations of the Hamiltonian system with the variational ansatz, wherein a cost function for the Hamiltonian system is defined as a variational free energy for variational classical annealing simulations or as a variational energy for variational quantum annealing simulations;
      (iii) equilibrating the Hamiltonian system at an initial value of the cost function by modulating the values of the plurality of parameters of the variational ansatz with new states generated by the variational ansatz;
      (iv) performing an annealing step on the cost function while maintaining the initial values of the plurality of parameters of the variational ansatz;
      (v) performing training to modulate the values of the plurality of parameters of the variational ansatz using the cost function to generate a plurality of trained states of the respective plurality of parameters, the plurality of trained states having a lower cost according to the cost function than a cost of the trained states prior to modulation of the values of the plurality of parameters;

(vi) iteratively repeating steps (iv) and (v) until a predetermined stopping condition is met; and
(vii) outputting a plurality of output states responsive to the predetermined condition being met, each output state representing a solution to the financial optimization problem.

2. The computer-implemented method of claim 1, further comprising the step of:
(c) selecting an output state from the plurality of output states according to one or more determining factors, wherein the one or more determining factors are based on the one or more application-specific constraints of one or more of the plurality of parameters of the objective function.

3. The computer-implemented method of claim 2, further comprising the step of:
(d) applying the selected output state to an external computing system associated with the financial optimization problem and in communication with the classical computing device.

4. The computer-implemented method of any preceding claim, wherein:

the cost function is a variational free energy comprising the Hamiltonian system representing the financial optimization problem, an entropy term defined in terms of the variational ansatz, and a temperature of the Hamiltonian system;
wherein step (iii) comprises equilibrating the Hamiltonian system at the plurality of initial values of the temperature of the Hamiltonian system; and
wherein step (iv) comprises performing the annealing step by updating the temperature of the Hamiltonian system.

5. The computer-implemented method of any one of claims 1 to 3, wherein:

the cost function is a variational energy comprising the quantum optimization Hamiltonian defined in terms of a quantum driving field of the Hamiltonian system and the variational ansatz;
wherein step (iii) comprises equilibrating the Hamiltonian system at the plurality of initial values of the quantum driving field of the Hamiltonian system; and
wherein step (iv) comprises performing the annealing step by updating the quantum driving field of the Hamiltonian system.

6. The method of any preceding claim, wherein the financial optimization problem is a portfolio optimization problem, the plurality of states define a plurality of asset allocations of the financial portfolio, the application-specific parameters are financial data used to generate the objective function, and the application-specific constraints are one or more constraints defined on the objective function.

7. The method of claim 6, wherein:

the objective function defines a maximum of expected returns with a minimum amount of risk for a selection of assets; or
the objective function defines a maximum of expected returns with a minimum amount of risk for a selection of assets according to a benchmark;
and/or

wherein the application-specific constraints comprise any one or more of the following:

a volatility constraint for a selection of assets;
a risk constraint for a selection of assets;
a returns constraint for a selection of assets;
a cardinality constraint on a number of allowable assets;
a leverage constraint on a selection of assets;
a transaction cost on a selection of assets;
a turnover constraint on a selection of assets;
a tax constraint on a selection of assets; or
investment bands for a selection of assets;
and/or

wherein the objective function is based on any one or more of the following:

> a single factor model such as the Capital Asset Pricing Model;
> multiple factor models;
> a kurtosis of a distribution of assets; or
> a skewness of a distribution of assets.

8. The method of any preceding claim, wherein the variational ansatz is an autoregressive neural network, wherein the autoregressive neural network is preferably one of the following:

> a single recurrent neural network architecture or a variant thereof;
> a deep recurrent neural network architecture or a variant thereof; or
> a Transformer neural network or a variants thereof.

9. The method of claim 8, wherein the variational ansatz defines any one or more of the following:

> an inequality constraint on the investment of the assets;
> a granularity of the investment of asset in the plurality of assets;
> a cardinality constraint on a number of allowable assets; or
> a symmetrization of the variational ansatz based on an underlying symmetry of the objective function.

10. The method of claim 4, wherein the annealing step is performed using any one or more of:

> a variational emulation of classical annealing;
> a variational ansatz model of a probability distribution of the Hamiltonian system; or
> a variational free energy function of the cost function.

11. The method of claim 5, wherein the annealing step is performed using any one or more of:

> a variational emulation of quantum annealing;
> a variational ansatz model of a wavefunction of the Hamiltonian system; or
> a variational energy function of the cost function.

12. The method of claim 6, wherein performing the training comprises:

> sampling the variational ansatz to obtain sampled states of an asset distribution;
> implementing a relevant symmetry of the objective function to the sampled states;
> computing a cost based on the cost function value using the sampled states; and
> minimizing the cost based on the plurality of parameters.

13. The method of any preceding claim, wherein the annealing step comprises:

> reducing a temperature parameter of the cost function or reducing a quantum driving field of the of the cost function; and
> increasing the objective function.

14. The method of any preceding claim, wherein the predetermined stopping condition is any one or more of the following:

> a temperature parameter of the cost function reaches zero or a threshold value;
> a driving parameter of the cost function reaches zero or a threshold value; or
> a variance of the cost function reaches a threshold value.

15. The method of any preceding claim, wherein step (c) comprises:

> generating a plurality of sample financial portfolios using autoregressive sampling;
> selecting a subset of the financial portfolios that obey all application-specific constraints; and
> selecting a financial portfolio from the subset of the financial portfolios based on one of the following a return, a volatility, a Sharpe ratio, and/or a tracking error.

FIG. 1

FIG. 2A

Warm-Up Step
2052

2062

2064

M

0                                    1        t

Annealing Step
2054

2070

2064

⟨------⟩        t
δt

Training Step
2056

2070

2072

t

End of Annealing
2058

2062        2070

2064        2072              2074

t

## FIG. 2B

300

| 302 Preparation step |
| :---: |

| 304 Warm-up step |
| :---: |

| 306 Annealing step |
| :---: |

| 308 Training step |
| :---: |

Temp. or coupling to driving term = 0?

No

Yes

End of Annealing

# FIG. 3A

FIG. 3B

**FIG. 3C**

400

FIG. 4A

420

**FIG. 4B**

440

**FIG. 4C**

FIG. 5

**FIG. 6A**

**FIG. 6B**

**FIG. 6C**

**FIG. 6D**

FIG. 6E

FIG. 6F

## FIG. 7A

## FIG. 7B

## FIG. 7C

FIG. 8

FIG. 9A

FIG. 9B

FIG. 9C

FIG. 9D

FIG. 9E

FIG. 9F

## FIG. 10A

## FIG. 10B

## FIG. 10C

1100

**1102** Initialize input states and parameters of the variational ansatz

**1104** Perform variational classical annealing, or variational quantum annealing using as starting point the variational ansatz and the input states

**1106** Output states give the algorithm's solutions to the optimization problem

# FIG. 11

1200

> **1202** Initialize temperature for variational classical annealing and/or field for variational quantum annealing

> **1204** Train or optimize the system at the current value of temperature and/or field via a user defined optimizer

> **1206** Perform annealing step by updating temperature and/or field according to user defined schedule.

> **1208** Repeat steps 1204, 1206 until thermal and/or quantum fluctuations are removed from the system.

# FIG. 12

1300

1302 Perform sampling procedure for cost function estimation

1304 Compute gradients of cost function with respect to each ansatz parameter

1306 Update parameters of the ansatz according to user defined optimizer

1308 Repeat steps 1302, 1304, 1306 until convergence

**FIG. 13**

Computing Device <u>1400</u>

Processor(s) <u>1402</u>

Input device <u>1414</u>

Output device <u>1416</u>

I/O interface <u>1404</u>

Network interface <u>1406</u>

1410

Memory(ies) <u>1408</u>

Data <u>1409</u>

Database <u>1411</u>

Instructions <u>1413</u>

Variational annealing software application <u>1415</u>

**FIG. 14**

**FIG. 15**

EP 4 625 249 A1

**FIG. 16**

**FIG. 17**

1800

1802
Generate or receive objective function representing a financial portfolio optimization problem

1804
Receive variational ansatz having initial values for parameters

1806
Initialize a simulation of a Hamiltonian system with the variational ansatz

1808
Equilibrate the system at the initial value of the temperature and/or field

1810
Perform annealing step by updating the temperature and/or field

1812
Train system at current value of temperature and/or field

1814
Stopping criterion is met?

No

Yes

1816
Output a plurality of output states, each output state representing a solution to the optimization problem

1818
Select an output state based on one or more determining factors

**FIG. 18**

**FIG. 19**

2000

**FIG. 20**

Europäisches
Patentamt

European
Patent Office

Office européen
des brevets

# EUROPEAN SEARCH REPORT

**Application Number**

EP 24 18 6894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/198246 A1 (HIBAT ALLAH MOHAMED [CA] ET AL) 23 June 2022 (2022-06-23) * paragraphs [0004], [0080] - [0089], [0107], [0132], [0240] - [0258]; figures 11-13 * ----- | 1-15 | INV. G06N3/0442 G06N3/0464 G06N3/047 G06N3/0475 G06N3/084 G06N5/01 G06N7/00 G06N10/60 G06Q40/06 |
| | | | TECHNICAL FIELDS SEARCHED (IPC) |
| | | | G06N G06Q |

The present search report has been drawn up for all claims

| Place of search | Date of completion of the search | Examiner |
|---|---|---|
| The Hague | 16 December 2024 | Keane, Shane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 6894

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | Publication date | Patent family member(s) | Publication date |
|---|---|---|---|
| US 2022198246 A1 | 23-06-2022 | NONE | |

For more details about this annex : see Official Journal of the European Patent Office, No. 12/82

## REFERENCES CITED IN THE DESCRIPTION

### Patent documents cited in the description

- US 63570662
- US 54769021
- US 63123917

### Non-patent literature cited in the description

- **HIBAT-ALLAH, M.** ; **INACK, E.** ; **WIERSEMA, R.** ; **MELKO, R.** ; **CARRASQUILLA, J.** Variational Neural Annealing. *arXiv:2101.10154*, 2021, https://arxiv.org/abs/2101.10154
- **TOMMASO ZANCA** ; **GIUSEPPE E. SANTORO**. Quantum annealing speedup over simulated annealing on random Ising chains. *Phys. Rev. B*, 2016, vol. 93, 224431
- **FIRAS HAMZE** ; **JACK RAYMOND** ; **CHRISTOPHER A. PATTISON** ; **KATJA BISWAS** ; **HELMUT G. KATZGRABER**. Wishart planted ensemble: A tunably rugged pairwise Ising model with a first-order phase transition. *Physical Review E*, 2020, vol. 101
- Smooth Convex Optimization. **NESTEROV Y.** Lectures on Convex Optimization. Springer Optimization and Its Applications. Springer, 2018, vol. 137
- **L. BONGINI** ; **M. DEGLI ESPOSTI** ; **C. GIARDINA** ; **A. SCHIANCHI**. Portfolio Optimization with Short-Selling and Spin-Glass. *Eur. Phys. J. B*, May 2002, vol. 27 (10), 263-272, https://doi.org/10,1140/epjb/e20020143